(19) **Europäisches Patentamt European Patent Office Office européen des brevets**

(11) **EP 4 560 934 A1**

(12) **EUROPEAN PATENT APPLICATION**
published in accordance with Art. 153(4) EPC

(43) Date of publication:
**28.05.2025 Bulletin 2025/22**

(21) Application number: **23873228.3**

(22) Date of filing: **27.09.2023**

(51) International Patent Classification (IPC):
*H04B 7/185* (2006.01)    *H04W 48/08* (2009.01)
*H04W 56/00* (2009.01)    *H04W 84/06* (2009.01)

(52) Cooperative Patent Classification (CPC):
**H04B 7/185; H04W 48/08; H04W 56/00;
H04W 84/06**

(86) International application number:
**PCT/KR2023/015067**

(87) International publication number:
**WO 2024/072119 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 KR 20220124430**

(71) Applicant: **Samsung Electronics Co., Ltd.
Suwon-si, Gyeonggi-do 16677 (KR)**

(72) Inventors:
- **PARK, Sungjin**
  **Suwon-si, Gyeonggi-do 16677 (KR)**
- **KIM, Youngbum**
  **Suwon-si, Gyeonggi-do 16677 (KR)**
- **KIM, Younsun**
  **Suwon-si, Gyeonggi-do 16677 (KR)**
- **RYU, Hyunsuk**
  **Suwon-si, Gyeonggi-do 16677 (KR)**
- **YI, Junyung**
  **Suwon-si, Gyeonggi-do 16677 (KR)**

(74) Representative: **Nederlandsch Octrooibureau
P.O. Box 29720
2502 LS The Hague (NL)**

(54) **METHOD AND DEVICE FOR TRANSMITTING OR RECEIVING UPLINK INFORMATION IN SATELLITE COMMUNICATION SYSTEM**

(57)    The disclosure relates to a 5G communication technique for supporting a higher data transmission rate beyond a 4G system, and a system therefor. A method performed by a terminal according to an embodiment of the present disclosure may comprise the steps of: receiving configuration information related to a physical uplink shared channel (PUSCH) repetitive transmission through higher layer signaling; and transmitting multiple PUSCHs corresponding to the PUSCH repetitive transmission in multiple slots on the basis of pre-compensation.

FIG. 39

```
┌─────────────────────────────────────┐
│ receive configuration information    │
│ related to uplink channel repetitive │ ~ 3910
│ transmission                         │
└─────────────────────────────────────┘
                  │
                  ▼
┌─────────────────────────────────────┐
│ perform uplink channel repetitive    │ ~ 3920
│ transmission                         │
└─────────────────────────────────────┘
```

EP 4 560 934 A1

**Description**

**[Technical Field]**

The disclosure relates to a communication system, and more particularly, to a method for transmitting and receiving uplink information in a satellite communication system.

**[Background Art]**

5th generation (5G) mobile communication technologies define broad frequency bands such that high transmission rates and new services are possible, and can be implemented not only in "Sub 6 GHz" bands such as 3.50 GHz, but also in "Above 6 GHz" bands referred to as mmWave including 28 GHz and 39 GHz. In addition, it has been considered to implement 6G mobile communication technologies (referred to as Beyond 5G systems) in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra-Reliable Low-Latency Communications (URLLC), and massive Machine-Type Communications (m MTC), there has been ongoing standardization regarding beamforming and massive MIMO for mitigating radio-wave path loss and increasing radio-wave transmission distances in mmWave, supporting numerologies (for example, operating a plurality of subcarrier spacings) for efficiently utilizing minWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding locations and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization **in** system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz hands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

As discussed above, various services may be provided with the advance of the mobile communication system, a solution for effectively providing such services is demanded, and particularly, a solution for optimizing a non-public network is demanded.

Meanwhile, as satellite launch costs have been drastically reduced in the late 2010s and 2020s, the number of operators seeking to provide communication services via satellites is increasing. Accordingly, satellite networks are emerging as a next-generation network system that complements existing terrestrial networks. Satellite networks do not yet provide the same level of user experience as terrestrial networks, but their advantage is that they can provide communication services in areas where terrestrial network construction is difficult or in disaster situations. As explained above, they are also becoming more economical due to the recent rapid decrease in satellite launch costs. In addition, several companies and 3GPP standards organizations are also promoting direct communication between smartphones and satellites.

**[Disclosure of Invention]**

**[Technical Problem]**

The disclosed embodiment is to provide a device and method capable of effectively providing a service in a wireless communication system such as a satellite communication system.

**[Solution to Problem]**

According to an embodiment of the disclosure, a method for a terminal to perform satellite communication may include receiving time offset information from a base station; calculating a timing advance (TA) value on the basis of the received time offset information; applying the calculated TA value; transmitting information on the applied TA value to the base station; and receiving information for correcting the TA value from the base station.

According to an embodiment of the disclosure, a method performed by a terminal in a communication system may be provided.

According to an embodiment of the disclosure, the method may include receiving configuration information related to physical uplink shared channel (PUSCH) repetitive transmission through higher layer signaling.

According to an embodiment of the disclosure, the method may include transmitting a plurality of PUSCHs corresponding to the PUSCH repetitive transmission in a plurality of slots on the basis of pre-compensation.

According to an embodiment of the disclosure, the pre-compensation may be performed to satisfy that a phase difference between a phase related to a PUSCH mapped to a first slot among the plurality of slots and a phase related to a PUSCH mapped to a second slot among the plurality of slots is within a predefined range for demodulation reference signal (DM-RS) bundling.

According to an embodiment of the disclosure, the DM-RS bundling may be for the PUSCH repetitive transmission.

According to an embodiment of the disclosure, the first slot and the second slot may be any two consecutive slots included in the plurality of slots.

According to an embodiment of the disclosure, the first slot may be a slot to which a PUSCH related to a minimum phase among the plurality of PUSCHs is mapped, and the second slot may be a slot to which a PUSCH related to a maximum phase among the plurality of PUSCHs is mapped.

According to an embodiment of the disclosure, the pre-compensation may be for the PUSCH repetitive transmission in a non-terrestrial network (NTN).

According to an embodiment of the disclosure, the method may further include transmitting a plurality of DM-RSs to which the DM-RS bundling is applied.

According to an embodiment of the disclosure, configuration information for the DM-RS bundling may be received through the higher layer signaling.

According to an embodiment of the disclosure, the method may further include transmitting, by the terminal, capability information related to supporting the pre-compensation.

According to an embodiment of the disclosure, a terminal in a communication system may be provided.

According to an embodiment of the disclosure, the terminal may include a transceiver; and a processor connected to the transceiver.

According to an embodiment of the disclosure, the processor may be configured to receive configuration information related to physical uplink shared channel (PUSCH) repetitive transmission through higher layer signaling.

According to an embodiment of the disclosure, the processor may be configured to transmit a plurality of PUSCHs corresponding to the PUSCH repetitive transmission in a plurality of slots, on the basis of pre-compensation.

According to an embodiment of the disclosure, the pre-compensation may be performed to satisfy that a phase difference between a phase related to a PUSCH mapped to a first slot among the plurality of slots and a phase related to a PUSCH mapped to a second slot among the plurality of slots is within a predefined range for demodulation reference signal (DM-RS) bundling.

According to an embodiment of the disclosure, the DM-RS bundling may be for the PUSCH repetitive transmission.

According to an embodiment of the disclosure, the first slot and the second slot may be any two consecutive slots included in the plurality of slots.

According to an embodiment of the disclosure, the first slot may be a slot to which a PUSCH related to a minimum phase among the plurality of PUSCHs is mapped, and the second slot may be a slot to which a PUSCH related to a maximum phase among the plurality of PUSCHs is mapped.

According to an embodiment of the disclosure, the pre-compensation may be for the PUSCH repetitive transmission in a non-terrestrial network (NTN).

According to an embodiment of the disclosure, the processor may be configured to transmit a plurality of DM-RSs to which the DM-RS bundling is applied.

According to an embodiment of the disclosure, the configuration information for the DM-RS bundling may be received via the higher layer signaling.

According to an embodiment of the disclosure, the processor may be configured to allow the terminal to transmit capability information related to supporting the pre-compensation.

According to an embodiment of the disclosure, a method performed by a base station in a communication system may be provided.

According to an embodiment of the disclosure, the method may include transmitting, to a terminal, configuration information related to physical uplink shared channel (PUSCH) repetitive transmission through upper layer signaling.

According to an embodiment of the disclosure, the method may include receiving, from the terminal, a plurality of PUSCHs corresponding to the PUSCH repetitive transmission in a plurality of slots.

According to an embodiment of the disclosure, a phase difference between a phase related to a PUSCH mapped to a first slot among the plurality of slots and a phase related to a PUSCH mapped to a second slot among the plurality of slots may be included in a predefined range for demodulation reference signal (DM-RS) bundling.

According to an embodiment of the disclosure, the DM-RS bundling may be for the PUSCH repetitive transmission.

According to an embodiment of the disclosure, the first slot and the second slot may be any two consecutive slots included in the plurality of slots.

According to an embodiment of the disclosure, the first slot may be a slot to which a PUSCH related to a minimum phase among the plurality of PUSCHs is mapped, and the second slot may be a slot to which a PUSCH related to a maximum phase among the plurality of PUSCHs is mapped.

According to an embodiment of the disclosure, the method may further include receiving, by the terminal, capability information related to supporting pre-compensation.

According to an embodiment of the disclosure, the pre-compensation may be related to the phase difference being included within the predefined range.

According to an embodiment of the disclosure, a base station in a communication system may be provided.

According to an embodiment of the disclosure, the base station may include a transceiver; and a processor connected to the transceiver.

According to an embodiment of the disclosure, the processor may be configured to transmit, to a terminal, configuration information related to physical uplink shared channel (PUSCH) repetitive transmission through higher layer signaling.

According to an embodiment of the disclosure, the processor may be configured to receive, from the terminal, a plurality of PUSCHs corresponding to the PUSCH repetitive transmission in a plurality of slots.

According to an embodiment of the disclosure, a phase difference between a phase related to a PUSCH mapped to a first slot among the plurality of slots and a phase related to a PUSCH mapped to a second slot among the plurality of slots may be included in a predefined range for demodulation reference signal (DM-RS) bundling.

According to an embodiment of the disclosure, the DM-RS bundling may be for the PUSCH repetitive transmission.

According to an embodiment of the disclosure, the processor may be configured to allow the terminal to receive capability information related to supporting pre-compensation.

According to an embodiment of the disclosure, the pre-compensation may be related to the phase difference being included in the predefined range.

[Advantageous Effects of Invention]

The disclosure provides a device and method capable of effectively providing a service in a wireless communication system such as a satellite communication system.

[Brief Description of Drawings]

FIG. 1 is a diagram illustrating a basic structure of a time-frequency domain which is a radio resource area where data or a control channel is transmitted in a downlink or an uplink of an NR system, according to an embodiment of the disclosure.

FIG. 2 is a diagram illustrating a synchronization signal (SS) of an NR system and a physical broadcast channel (PBCH), which are mapped in frequency and time domains.

FIG. 3 is a diagram illustrating symbols in which an SS/PBCH block is capable of being transmitted based on a subcarrier spacing.

FIG. 4 is a drawing illustrating an example of a control resource set (CORESET) in which a downlink control channel is transmitted in a 5G wireless communication system according to an embodiment of the disclosure.

FIG. 5 is a diagram schematically illustrating an example of a message delivered from a MAC layer to a physical layer in a downlink in a communication system, according to an embodiment of the disclosure.

FIG. 6 is a diagram schematically illustrating an example of a message delivered from a MAC layer to a physical layer in an uplink in a communication system, according to an embodiment of the disclosure.

FIG. 7 is a diagram illustrating an example of a process of dividing one transport block (TB) into a plurality of code blocks (CBs) and adding a CRC, according to an embodiment of the disclosure.

FIG. 8 is a diagram illustrating a processing time of a UE according to timing advance when the UE receives a first signal and transmits a second signal in response thereto in a 5G or NR system, according to an embodiment of the disclosure.

FIG. 9 is a diagram illustrating an example in which data (for example, TBs) are scheduled and transmitted according to a slot, an HARQ-ACK feedback for the corresponding data is received, and retransmission is performed according to the feedback.

FIG. 10 is a diagram illustrating an example of a communication system using a satellite, according to an embodiment of the disclosure.

FIG. 11 is a diagram illustrating the revolution period of a communication satellite around the earth according to an altitude or height of the satellite, according to an embodiment of the disclosure.

FIG. 12 is a diagram illustrating the concept of direct communication between a satellite and a UE, according to an embodiment of the disclosure.

FIG. 13 is a diagram illustrating a scenario using direct communication between a satellite and a UE.

FIG. 14 is a diagram illustrating an example of calculation of expected data throughput in an uplink when the LEO satellite having an altitude of 1200 km and the UE perform direct communication, according to an embodiment of the disclosure.

FIG. 15 is a diagram illustrating an example of calculation of expected data throughput in an uplink when the GEO satellite having an altitude of 35,786 km and the ground UE perform direct communication, according to an embodiment of the disclosure.

FIG. 16 is a diagram illustrating a path loss value according to a path loss model between a UE and a satellite and a path loss according to a path loss model between the UE and a ground network communication base station.

FIG. 17 is a diagram illustrating an equation of calculating an amount of the Doppler shift which a signal experiences and the result thereof when the signal transmitted from the satellite is received by a user on the ground according to altitude and a location of the satellite, and a location of the user of the UE on the ground, according to an embodiment of the disclosure.

FIG. 18 is a diagram illustrating a velocity of a satellite calculated at an altitude of the satellite.

FIG. 19 is a diagram illustrating Doppler shift which different UEs in one beam which a satellite transmits to the ground experience, according to an embodiment of the disclosure.

FIG. 20 is a diagram illustrating difference between Doppler shifts generated within one beam according to a location of a satellite determined by an elevation angle, according to an embodiment of the disclosure.

FIG. 21 is a diagram illustrating a delay time from a UE to a satellite according to a location of the satellite determined by an elevation angle and a round-trip delay time between the UE, the satellite, and a base station, according to an embodiment of the disclosure.

FIG. 22 is a diagram illustrating a maximum difference value of a round-trip delay time varying depending on a location of a user within one beam, according to an embodiment of the disclosure.

FIG. 23 is a diagram illustrating an example of an information structure an RAR, according to an embodiment of the disclosure.

FIG. 24 is a diagram illustrating an example relationship between a PRACH preamble configuration resource and an RAR reception time point in an LTE system, according to an embodiment of the disclosure.

FIG. 25 is a diagram illustrating an example relationship between a PRACH preamble configuration resource and an RAR reception time point in a 5G NR system, according to an embodiment of the disclosure.

FIG. 26 is a diagram illustrating an example of downlink frame timing and uplink frame timing in a UE, according to an embodiment of the disclosure.

FIG. 27 is a diagram illustrating an example of continuous movement of a satellite with respect to a UE located on the ground or on the earth as the satellite revolves around the earth along a satellite orbit, according to an embodiment of the disclosure.

FIG. 28 is a diagram illustrating an example structure of an artificial satellite, according to an embodiment of the disclosure.

FIG. 29 is a diagram illustrating an example process in which a UE determines $N_{TA}$ from an initial access, according to an embodiment of the disclosure.

FIG. 30 is a diagram illustrating an example process in which a UE determines $N_{TA}$, $N_{TA,UE\text{-}specific}$, and $N_{TA,common}$ from an initial access, according to an embodiment of the disclosure.

FIG. 31 is a diagram schematically illustrating another example of operation process of a UE in a communication system according to an embodiment of the disclosure.

FIG. 32 is a diagram schematically illustrating another example of operation process of a UE in a communication system according to an embodiment of the disclosure.

FIG. 33 is a diagram illustrating an example operation of a base station for TA value report of the UE, according to an embodiment of the disclosure.

FIG. 34 is a diagram illustrating an example operation of a UE for TA value report of the UE, according to an embodiment of the disclosure.

FIG. 35 is a diagram illustrating an example of a difference of propagation delay between a terrestrial network and a satellite network, according to an embodiment of the disclosure.

FIG. 36 is a flowchart for performing satellite network connection of a UE according to an embodiment.

FIG. 37 is a diagram illustrating a method for configuring configured-TDW and actual-TDW for simultaneous channel estimation.

FIG. 38 is a flowchart showing the operation of a UE for simultaneous channel estimation of a base station according to an embodiment.

FIG. 39 is a flowchart illustrating the operation of a UE according to an embodiment.

FIG. 40 is a flowchart illustrating the operation of a base station according to an embodiment.

FIG. 41 is a block diagram illustrating an internal structure of a UE according to an embodiment of the disclosure.

FIG. 42 is a block diagram illustrating an internal structure of a satellite according to an embodiment of the disclosure.

FIG. 43 is a block diagram illustrating an internal structure of a base station according to an embodiment of the disclosure.

## [Mode for the Invention]

New radio (NR) access technology, which is new 5G communication, has been designed to allow various services to be freely multiplexed in time and frequency resources, and thus waveform/numerology, a reference signal, etc., may be dynamically or freely assigned according to the need of a service. In order to provide an optimal service to a UE in wireless communication, data transmission optimized through measurement of the quality and interference amount of a channel is important, and thus accurate channel state measurement is mandatory. However, unlike 4G communication in which channel and interference characteristics do not largely change depending on frequency resources, the channel and interference characteristics of a 5G channel may significantly largely change depending on a service, and thus a subset of a frequency resource group (FRG) needs to be supported to divide and measure the channel and interference characteristics. Meanwhile, in an NR system, types of supported services may be divided into enhanced mobile broadband (eMBB), massive machine type communications (mMTC), ultra-reliable and low-latency communications (URLLC), etc. It may be understood that eMBB is a service aiming at high-speed transmission of a large amount of data, mMTC is a service aiming at terminal power minimization and multiple terminal connections, and URLLC is a service aiming at high reliability and low latency. Different requirements may be applied depending on types of services applied to a terminal.

In this way, a plurality of services can be provided to a user in a communication system, and in order to provide such multiple services to a user, a method capable of providing each service within the same time interval according to its characteristics and a device using the same are required.

Hereinafter, an embodiment of the disclosure will be described in detail with reference to the attached drawings.

In describing embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block(s). These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block(s).

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the corresponding function.

As used herein, the '~unit' refers to a software element or a hardware element, such as FPGA or ASIC, which performs a predetermined function. However, the '~unit' does not always have a meaning limited to software or hardware. The '~unit' may be constructed either to be stored in an addressable storage medium or to execute one or more processors. Therefore, the '~unit' includes, for example, elements such as software elements, object-oriented software elements, class elements and task elements, processes, functions, properties, procedures, sub-routines, segments of a program code, drivers, firmware, micro-codes, circuits, data, database, data structures, tables, arrays, and parameters. The elements and functions provided by the '~unit' may be either combined into a smaller number of elements, and a '~unit', or divided into a larger number of elements, and a '~unit'. Moreover, the elements and '~unit' or may be implemented to reproduce one or more CPUs within a device or a security multimedia card. Also, in an embodiment, a '~unit' may include one or more processors.

A wireless communication system deviates from the provision of the initial voice-oriented service and evolves into a wideband wireless communication system providing a packet data service of high speed and high quality, for example, communication standards, such as high speed packet access (HSPA) of 3GPP, long term evolution (LTE or evolved universal terrestrial radio access (E-UTRA)), LTE-Advanced (LTE-A), high rate packet data (HRPD) of 3GPP2, a ultra mobile broadband (UMB) and 802.16e of IEEE. Furthermore, a communication standard of 5G or new radio (NR) is produced as a 5G wireless communication system.

An NR system as a representative example of a broadband wireless communication system adopts an orthogonal frequency division multiplexing (OFDM) scheme in a downlink (DL) and an uplink. In more detail, a cyclic-prefix OFDM (CP-OFDM) scheme is adopted in a DL, and a discrete Fourier transform spreading OFDM (DFT-S-OFDM) scheme is adopted in an uplink together with the CP-OFDM scheme. An uplink is a radio link through which a terminal (a user equipment (UE) or a mobile station (MS)) transmits data or a control signal to a base station (BS) (or a gNodeB), and a DL is a radio link through which a base station transmits data or a control signal to a UE. In such a multiple access scheme, in general, data or control information of each user may be distinguished by assigning and operating time-frequency resources, at which the data or control information of each user is transmitted, so as not to overlap each other, i.e., to establish orthogonality.

The NR system adopts a hybrid automatic repeat request (HARQ) scheme that, in case that a failure of decoding occurs in initial transmission, retransmits corresponding data in a physical layer. In the HARQ scheme, in case that a receiver fails to correctly decode data, the receiver transmits, to a transmitter, a negative acknowledgement (NACK), which is information for informing the transmitter of the failure of decoding, so as to allow the transmitter to retransmit corresponding data in a physical layer. The receiver may improve data reception performance by combining the data retransmitted by the transmitter with the decoding-failed data. In addition, in case that the receiver correctly decodes the data, the receiver transmits, to the transmitter, an acknowledgement (ACK) for informing the transmitter of the success of decoding, so as to allow the transmitter to transmit new data.

According to an embodiment of the disclosure, in case that a UE intends to connect to a base station through a satellite, a large latency occurs until radio waves arrive due to long distances of several hundreds or several thousands or more of kilometers between the UE and the satellite and between the satellite and the base station on the ground. Such a large latency is much greater than that in a situation where the UE and base station perform the direct communication in the terrestrial network. Further, due to a continuous movement of the satellite, the latency among the UE, satellite, and base station is changed as time goes on.

Accordingly, the disclosure provides a method and device in which a base station indicates time offsets, and based on this, a UE performs correction in order to correct the time-varying latency occurring depending on the long distance to the satellite and the movement of the satellite in case that the UE transmits and receives signals to and from the base station through the satellite. Additionally, the disclosure provides a method and device in which the UE may calculate and apply a portion of the time offset based on satellite and its own location and time information, and report the same to the base station.

That is, according to an embodiment of the disclosure, in case that the UE transmits and receives a signal to and from a base station via a satellite, correction for a time offset may be required due to the long distance between the UE and the satellite. Accordingly, the disclosure provides a method and device in which a base station indicates a UE about time offset information, the UE calculates and applies a portion of a timing advance, the UE reports the timing advance information to the base station, and the UE corrects a time offset using the information indicated by the base station.

As described above, by using the disclosure, a UE can connect to a base station via a satellite, the base station indicates a time offset to the UE, and the UE calculates and corrects the time offset, so that it is possible to effectively exchange signals between the base station and the UE.

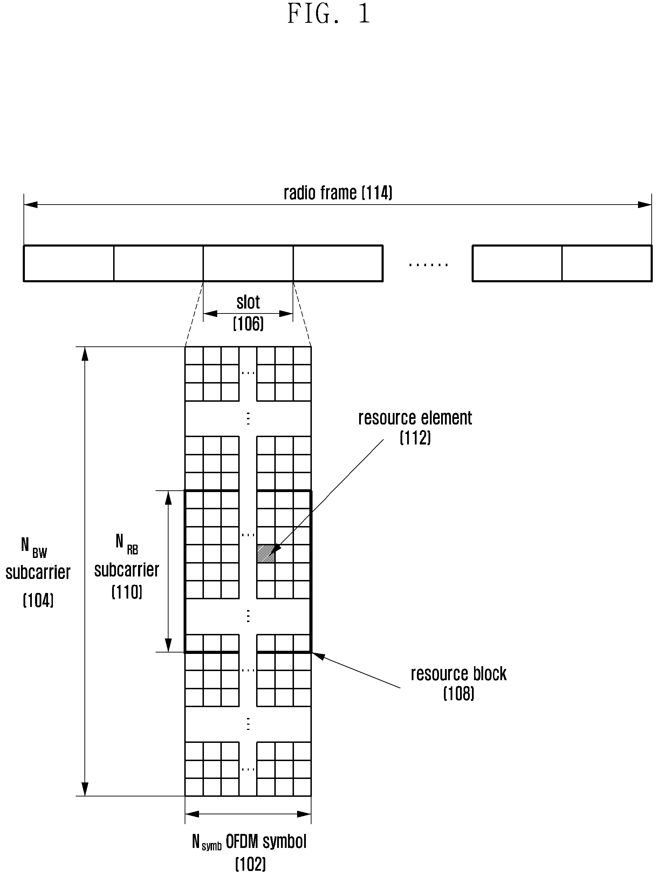

FIG. 1 is a diagram illustrating a basic structure of a time-frequency domain which is a radio resource area where data or a control channel is transmitted in a downlink or an uplink of an NR system, according to an embodiment of the disclosure.

FIG. 1, the horizontal axis denotes a time domain, and the vertical axis denotes a frequency domain. The minimum transport unit in the time domain is an OFDM symbol, and $N_{symb}$ OFDM symbols 102 may be constituted as a single slot 106. The length of a subframe may be defined to be 1.0 ms, and the length of a radio frame 114 may be defined to be 10 ms. The minimum transport unit in the frequency domain is a subcarrier, and the entire system transmission bandwidth may be constituted with a total of $N_{BW}$ subcarriers 104. One frame may be defined to be 10 ms. One subframe may be defined to be 1 ms and thus, one frame may include a total of 10 subframes. One slot may be defined to be 14 OFDM symbols (i.e., the number of symbols per slot $N_{symb}^{slot} = 14$). One subframe may be constituted with one or a plurality of slots, and the number of slots per one subframe may be different based on a set value $\mu$ configured for a subcarrier spacing. In the example of FIG. 1, cases where a subcarrier spacing set value is $\mu=0$ and $\mu=1$ are illustrated. In case of M=0, one subframe may be constituted with one slot. In case of $\mu=1$, one subframe may be constituted with two slots. That is, depending on a set value $\mu$ for a subcarrier spacing, the number of slots per subframe ( $N_{slot}^{subframe,\mu}$ ) may differ. Accordingly, the number of slots per frame ( $N_{slot}^{frame,\mu}$ ) may also differ. $N_{slot}^{subframe,\mu}$ and $N_{slot}^{frame,\mu}$ based on a subcarrier spacing set value $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |

(continued)

| μ | $N_{symb}^{slot}$ | $N_{slot}^{frame\mu}$ | $N_{slot}^{subframe\mu}$ |
|---|---|---|---|
| 3 | 14 | 80 | 8 |
| 4 | 14 | 160 | 16 |

A UE before being radio resource control (RRC) connected may be configured to an initial bandwidth part (initial BWP) for initial access by a base station via a master information block (MIB). To be more specific, at the initial access stage, the UE may receive configuration information associated with a search space and a control resource set (CORESET) in which a physical downlink control channel (PDCCH) is transmitted, in order to receive, via the MIB, system information (corresponding to remaining system information (RMSI) or system information block 1 (SIB1)) needed for initial access. Each of the control resource set and the search space configured via the MIB may be regarded as an identity (ID) of 0. The base station may inform the UE of configuration information such as frequency allocation information, time allocation information, numerology, or the like in association with CORESET #0, via the MIB. In addition, the base station may inform the UE of configuration information related to a monitoring cycle and occasion associated with CORESET #0, that is, configuration information associated with search space #0, via the MIB. The UE may consider, as an initial bandwidth part for initial access, a frequency range configured as CORESET #0 obtained from the MIB. In this instance, the identity (ID) of the initial bandwidth part may be considered as 0.

The MIB may include information shown as shown in Table 2 below., but the MIB is of course not limited to the below examples.

[Table 2]

```
-- ASN1START

-- TAG-MIB-START


MIB ::=                             SEQUENCE {
    systemFrameNumber                   BIT STRING (SIZE (6)),
    subCarrierSpacingCommon                 ENUMERATED {scs15or60,
scs30or120},
    ssb-SubcarrierOffset                INTEGER (0..15),
    dmrs-TypeA-Position                 ENUMERATED {pos2, pos3},
    pdcch-ConfigSIB1                    PDCCH-ConfigSIB1,
    cellBarred                          ENUMERATED {barred, notBarred},
    intraFreqReselection                    ENUMERATED {allowed,
notAllowed},
    spare                               BIT STRING (SIZE (1))
}

-- TAG-MIB-STOP

-- ASN1STOP
```

The description of the MIB fields is as follows.

-  cellBarred

Value barred means that the cell is barred, as defined in TS 38.304 [20].

-  dmrs-TypeA-Location

Position of (first) DM-RS for downlink (see TS 38.211 [16], clause 7.4.1.1.2) and uplink (see TS 38.211 [16], clause 6.4.1.1.3).

-  intraFreqReselection

Controls cell selection/reselection to intra-frequency cells when the highest ranked cell is barred, or treated as barred by the UE, as specified in TS 38.304 [20].

-  pdcch-ConfigSIB1

Determines a common ControlResourceSet (CORESET), a common search space and necessary PDCCH parameters. If the field ssb-SubcarrierOffset indicates that SIB1 is absent, the field pdcch-ConfigSIB1 indicates the frequency positions where the UE may find SS/PBCH block with SIB1 or the frequency range where the network does not provide SS/PBCH block with SIB1 (see TS 38.213 [13], clause 13).

- ssb-SubcarrierOffset

Corresponds to kSSB (see TS 38.213 [13]), which is the frequency domain offset between SSB and the overall resource block grid in number of subcarriers. (See TS 38.211 [16], clause 7.4.3.1).

The value range of this field may be extended by an additional most significant bit encoded within PBCH as specified in TS 38.213 [13].

This field may indicate that this cell does not provide SIB1 and that there is hence no CORESET#0 configured in MIB (see TS 38.213 [13], clause 13). In this case, the field pdcch-ConfigSIB1 may indicate the frequency positions where the UE may (not) find a SS/PBCH with a control resource set and search space for SIB1 (see TS 38.213 [13], clause 13).

- subCarrierSpacingCommon

Subcarrier spacing for SIB1, Msg.2/4 for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz.

- systemFrameNumber

The 6 most significant bits (MSB) of the 10-bit System Frame Number (SFN). The 4 LSB of the SFN are conveyed in the PBCH transport block as part of channel coding (i.e. outside the MIB encoding), as defined in clause 7.1 in TS 38.212 [17].

In a method of configuring a bandwidth part, UEs before being RRC-connected may receive configuration information associated with an initial bandwidth part via an MIB in the initial access stage. In more particularly, a UE may receive, from an MIB of a physical broadcast channel (PBCH), a configuration of a control resource set for a downlink control channel in which a downlink control information (DCI) that schedules an SIB may be transmitted. In this instance, the bandwidth of the control resource set configured via the MIB may be regarded as an initial bandwidth part, and the UE may receive, via the configured initial bandwidth part, a physical downlink shared channel (PDSCH) that transmits an SIB. In addition to the purpose of receiving the SIB, the initial bandwidth part may be utilized for the purpose of other system information (OSI), paging, or random access.

In case that one or more bandwidth parts are configured for a UE, a base station may indicate changing of a bandwidth part by using a bandwidth part indicator field in DCI.

A basic resource unit in the time-frequency domain is a resource element (RE) 112, and an RE is expressed by an OFDM symbol index and a subcarrier index. A resource block (RB) 108 (or a physical resource block (PRB)) may be defined to be $N_{RB}$ consecutive subcarriers 110 in the frequency domain. Generally, the minimum transport unit of data is an RB. In the NR system, generally, $N_{symb}$=14 and $N_{RB}$=12. $N_{BW}$ is proportional to a system transmission bandwidth. The data rate may be increased in proportion to the number of RBs scheduled for a UE.

In the NR system, a downlink transmission bandwidth and an uplink transmission bandwidth may be different from each other in the case of an FDD system that distinguishes and operates a downlink and an uplink based on a frequency. A channel bandwidth may represent an RF bandwidth corresponding to a system transmission bandwidth. Table 3 and Table 4 show a part of the correspondence relationship of a system transmission bandwidth, a subcarrier spacing, and a channel bandwidth defined in the NR system, respectively in a frequency band lower than 6 GHz (frequency range 1 (FR 1)) and a frequency band higher than 6 GHz (FR 2). For example, in case of the NR system that has a channel bandwidth of 100 MHz with a subcarrier spacing of 30 kHz, the transmission bandwidth may include 273 RBs. N/A in the following table may be a bandwidth-subcarrier combination that is not supported by the NR system.

[Table 3]

| SCS (kHz) | 5MHz | 10MHz | 15MHz | 20 MHz | 25 MHz | 30 MHz | 40 MHz | 50MHz | 60 MHz | 80 MHz | 90 MHz | 100 MHz |
|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

[Table 4]

| Channel bandwidth $BW_{Channel}$ [MHz] | subcarrier spacing | 50MHz | 100MHz | 200MHz | 400MHz |
|---|---|---|---|---|---|
| Transmission bandwidth configuration $N_{RB}$ | 60 kHz | 66 | 132 | 264 | N/A |
| | 120 kHz | 32 | 66 | 132 | 264 |

In the NR system, a frequency range may be separately defined as FR1 and FR2, as shown in Table 5 below.

[Table 5]

| Frequency range designation | Corresponding frequency range |
|---|---|
| FR1 | 450 MHz – 7125 MHz |
| FR2 | 24250 MHz – 52600 MHz |

Apparently, the above ranges of FR1 and FR2 may be changed to be different, and may be applied. For example, the frequency range of FR1 may be changed to the range of 450 MHz to 6000 MHz and may be applied.

Subsequently, a synchronization signal (SS)/PBCH block in 5G will be described.

An SS/PBCH block may be a physical layer channel block constituted with a primary synchronization signal (SS) (PSS), a secondary SS (SSS), and a PBCH. A detailed description thereof is provided as follow.

- PSS: It is a reference signal for downlink time/frequency synchronization, and provides part of cell ID information.
- SSS: It is a reference for downlink time/frequency synchronization, and may provide the remaining cell ID information that a PSS does not provide. In addition, an SSS may act as a reference signal for demodulation of a PBCH.
- PBCH: It provides essential system information needed for a UE to perform data channel and control channel transmission or reception. The essential system information may include search space-related control information representing radio resource mapping information of a control channel, scheduling control information associated with a separate data channel that transmits system information, and the like.
- SS/PBCH block: an SS/PBCH block may be constituted with a combination of a PSS, an SSS, and a PBCH. A single or multiple SS/PBCH blocks may be transmitted within 5 ms, and each transmitted SS/PBCH block may be identified based on an index.

At the initial access stage, a UE may detect a PSS and an SSS, and may decode a PBCH. The UE may obtain an MIB from the PBCH, whereby CORESET #0 (which may correspond to a control resource set having a control resource set index of 0) may be configured. The UE may assume that a selected SS/PBCH block and a demodulation reference signal (DMRS) transmitted in CORESET #0 are in a quasi co location (QCL), and may monitor CORESET#0. The UE may receive system information via downlink control information transmitted in CORESET#0. From the received system information, the UE may obtain random access channel (RACH)-related configuration information needed for initial access. The UE may transmit a physical RACH (PRACH) to a base station in consideration of the selected SS/PBCH index, and the base station that has received the PRACH may obtain information associated with the index of the SS/PBCH block that the UE has selected. Through the processes, the base station may be aware of a block that the UE has selected among SS/PBCH blocks and the fact that the UE monitors CORESET#0 associated with the selected block.

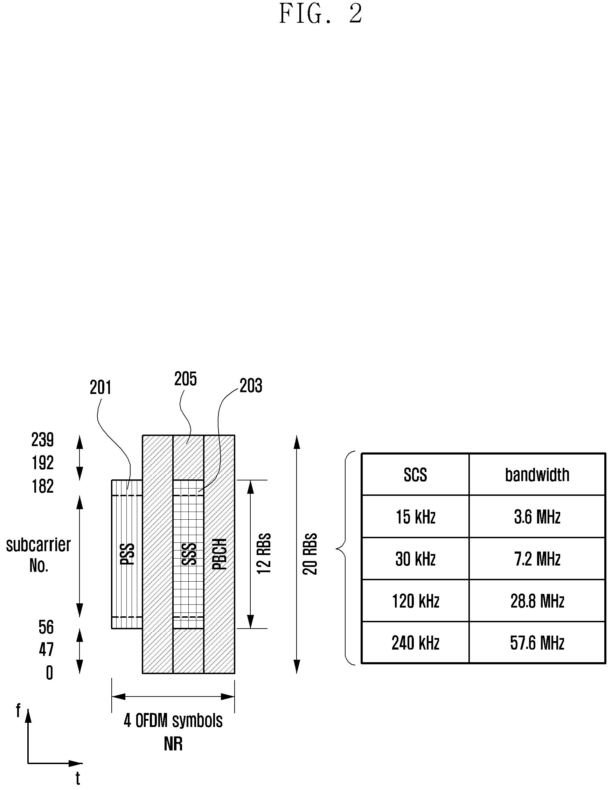

FIG. 2 is a diagram illustrating a synchronization signal (SS) of an NR system and a physical broadcast channel (PBCH), which are mapped in the frequency and time domains according to an embodiment of the disclosure.

A primary synchronization signal (PSS) 201, a secondary synchronization signal (SSS) 203, and PBCHs are mapped over 4 OFDM symbols. Each of the PSS and the SSS is mapped to 12 RBs and the PBCHs are mapped to 20 RBs. The table in FIG. 2 shows the frequency band of 20 RBs that varies depending on a subcarrier spacing (SCS). A resource area in which the PSS, SSS, and PBCHs are transmitted is referred to as an SS/PBCH block (SS/PBCH block). In addition, the SS/PBCH block may be referred to as a synchronization signal block (SSB) block.

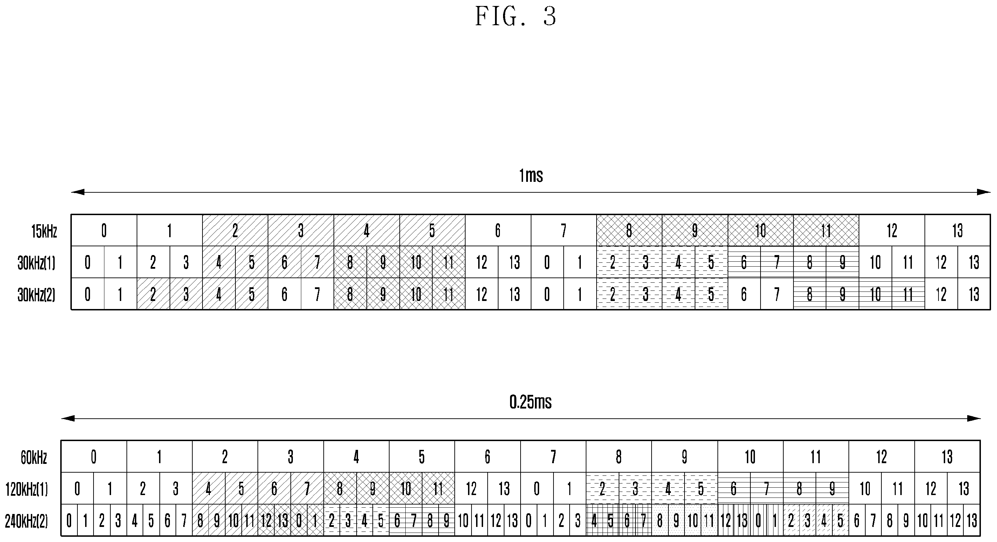

FIG. 3 is a diagram illustrating symbols in which an SS/PBCH block is capable of being transmitted based on a subcarrier spacing according to an embodiment of the disclosure.

With reference to FIG. 3, a subcarrier spacing may be configured to 15 kHz, 30 kHz, 120 kHz, 240 kHz, or the like, and the location of a symbol in which an SS/PBCH block (or an SSB block) is capable of being located may be determined based on each subcarrier spacing. FIG. 3 illustrates the location of a symbol in which an SSB is capable of being transmitted based on a subcarrier spacing in symbols within 1 ms, but it is not that an SSB is always transmitted in the area marked in FIG. 3. Therefore, the location in which an SSB block is transmitted may be configured for a UE via system information or dedicated signaling.

Hereinafter, the downlink control channel in a 5G communication system will be described in more detail with reference to drawings.

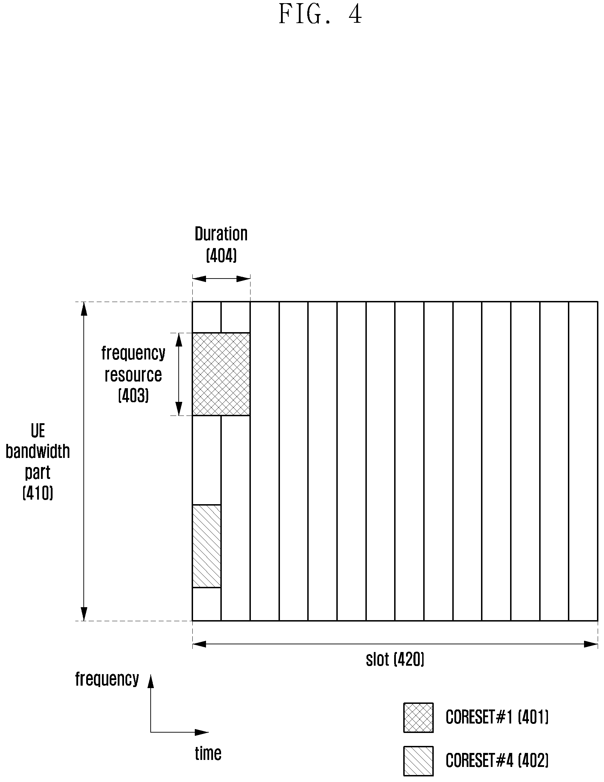

FIG. 4 is a drawing illustrating an example of a control resource set (CORESET) in which a downlink control channel is transmitted in a 5G wireless communication system according to an embodiment of the disclosure.

FIG. 4 illustrates an example in which a UE bandwidth part 210 is configured on the time axis and two control resource sets (CORESET#1 391 and CORESET#2 392) are configured within one slot 410 on the time axis. The CORESETs 391 and 402 may be configured in specific frequency resources 393 within a total UE bandwidth part 400 on the frequency axis. The CORESETs 391 and 402 may be configured as one or a plurality of OFDM symbols on the time axis, which may be defined as a control resource set duration 404. In the example of FIG. 4, CORESET#1 391 is configured as the control resource set duration of two symbols, and CORESET#2 392 is configured as the control resource set duration of one symbol.

The control resource set in the above-described 5G may be configured through higher layer signaling (for example, system information, MIB, or RRC signaling) in the UE by the base station. Configuring the control resource set in the UE may mean providing information such as the identity of the control resource set, the frequency position of the control resource set, and the symbol length of the control resource set. For example, the higher layer signaling may include following information of Table 6, but it is of course not limited to the examples below.

[Table 6]

```
ConControlResourceSet ::=                     SEQUENCE {
    -- Corresponds to L1 parameter 'CORESET-ID'

    controlResourceSetId                      ControlResourceSetId,
    (control resource set identity)
    frequencyDomainResources         BIT STRING (SIZE (45)),
    (frequency domain resource assignment information)
    duration                         INTEGER (1..maxCoReSetDuration),
    (time domain resource assignment information)
    cce-REG-MappingType                       CHOICE {
    (CCE-to-REG mapping type)
        interleaved                           SEQUENCE {

            reg-BundleSize                    ENUMERATED {n2, n3, n6},
            (REG bundle size)

            precoderGranularity                    ENUMERATED {sameAsR
    EG-bundle, allContiguousRBs},

            interleaverSize                   ENUMERATED {n2, n3, n6}
            (interleaver size)

            shiftIndex                        INTEGER(0..maxNrofPhysicalR
    esourceBlocks-1)                          OPTIONAL
            (interleaver shift)
        },
    nonInterleaved                   NULL
    },
    tci-StatesPDCCH                           SEQUENCE(SIZE (1..maxNrofTCI-
    StatesPDCCH)) OF TCI-StateId              OPTIONAL,
    (QCL configuration information)
    tci-PresentInDCI                 ENUMERATED {enabled}
                                              OPTIONAL,         -- Need
```

```
    S
}
```

In Table 6, tci-StatesPDCCH (simply, referred to as a transmission configuration indication (TCI) state) configuration information may include information on one or a plurality of SS/PBCH block indexes or channel state information reference signal (CSI-RS) indexes having the quasi co-location (QCL) relationship with DMRS transmitted **in** the corresponding control resource set.

Subsequently, downlink control information (DCI) **in** the 5G system will be described **in** detail.

In the 5G system, scheduling information for uplink data (or a physical uplink data channel (physical uplink shared channel (PUSCH)) or downlink data (or physical downlink data channel (physical downlink shared channel (PDSCH)) may be transmitted from the base station to the UE through DCI. Alternatively, the UE may monitor a fallback DCI format and a non-fallback DCI format for the PUSCH or the PDSCH. The fallback DCI format may be constituted with a fixed field predefined between the base station and the UE, and the non-fallback DCI format may include a configurable field. In addition to this, there are various formats for DCI, and each format may indicate whether it is DCI for power control, DCI for notifying slot format indicator (SFI), and the like.

The DCI may be transmitted through a physical downlink control channel (PDCCH) after passing through a channel coding and modulation process. A cyclic redundancy check (CRC) may be added to a DCI message payload and may be scrambled with a radio network temporary identifier (RNTI) corresponding to the identity of the UE. Depending on the purpose of the DCI message, for example, UE-specific data transmission, a power control command, or a random access response, different RNTIs may be used. That is, the RNTI is not explicitly transmitted, but is included in a CRC calculation process and thus transmitted. If the UE receives the DCI message transmitted through the PDCCH, the UE may identify the CRC through the allocated RNTI, and may recognize that the received DCI message has been transmitted to the UE if the CRC is determined to be correct on the basis of the CRC identification result. PDCCH may be mapped and transmitted in a control resource set (CORESET) for the UE.

For example, DCI for scheduling a PDSCH for system information (SI) may be scrambled with an SI-RNTI. DCI for scheduling a PDSCH for a random access response (RAR) message may be scrambled with an RA-RNTI. DCI for scheduling a PDSCH for a paging message may be scrambled with a P-RNTI. DCI for notifying a slot format indicator (SFI) may be scrambled with an SFI-RNTI. DCI for notifying transmit power control (TPC) may be scrambled with a TPC-RNTI. DCI for scheduling a UE-specific PDSCH or PUSCH may be scrambled with a Cell RNTI (C-RNTI). The types of RNTI are of course not limited to the above examples.

DCI format 0_0 may be used for fallback DCI for scheduling a PUSCH, in which case the CRC may be scrambled with a C-RNTI. DCI format 0_0, in which the CRC is scrambled with the C-RNTI, may include, for example, the following information, but are of course not limited to the above examples.

[Table 7]

- Identifier for DCI formats - [1] bit

- Frequency domain resource assignment- $[\lceil \log_2(N_{RB}^{UL,BWP}(N_{RB}^{UL,BWP}+1)/2) \rceil]$ bits

- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used for non-fallback DCI for scheduling a PUSCH, in which case the CRC may be scrambled with a C-RNTI. DCI format 0_1, in which the CRC is scrambled with the C-RNTI, may include, for example, the following information, but is of course not limited to the above examples.

[Table 8]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

* For resource allocation type 0, $\lceil N_{RB}^{UL,BWP}/P \rceil$ bits

* For resource allocation type 1, $\lceil \log_2(N_{RB}^{UL,BWP}(N_{RB}^{UL,BWP}+1)/2) \rceil$ bits

- Time domain resource assignment -1, 2, 3, or 4 bits
- Virtual resource block (VRB)-to-physical resource block (PRB) mapping - 0 or 1 bit, only for resource allocation type 1.
* 0 bit if only resource allocation type 0 is configured;
* 1 bit otherwise.

(continued)

- Frequency hopping flag - 0 or 1 bit, only for resource allocation type 1.

* 0 bit if only resource allocation type 0 is configured;

* 1 bit otherwise.

- Modulation and coding scheme - 5 bits

- New data indicator - 1 bit

- Redundancy version - 2 bits

- HARQ process number - 4 bits

- 1st downlink assignment index- 1 or 2 bits

* 1 bit for semi-static HARQ-ACK codebook;

* 2 bits for dynamic HARQ-ACK codebook with single HARQ-ACK codebook.

- 2nd downlink assignment index - 0 or 2 bits

* 2 bits for dynamic HARQ-ACK codebook with two HARQ-ACK sub-codebooks;

* 0 bit otherwise.

- TPC command for scheduled PUSCH - 2 bits

- SRS resource indicator - $\left\lceil \log_2 \left( \sum_{k=1}^{L_{max}} \binom{N_{SRS}}{k} \right) \right\rceil$ or $\left\lceil \log_2 \left( N_{SRS} \right) \right\rceil$ bits

* $\left\lceil \log_2 \left( \sum_{k=1}^{L_{max}} \binom{N_{SRS}}{k} \right) \right\rceil$ bits for non-codebook based PUSCH transmission;

* $\left\lceil \log_2 \left( N_{SRS} \right) \right\rceil$ bits for codebook based PUSCH transmission.

- Precoding information and number of layers - up to 6 bits

- Antenna ports - up to 5 bits

- SRS request - 2 bits

- Channel state information (CSI) request - 0, 1, 2, 3, 4, 5, or 6 bits

- Code block group (CBG) transmission information - 0, 2, 4, 6, or 8 bits

- Phase tracking reference signal (PTRS)-demodulation reference signal (DDMRS) association - 0 or 2 bits.

- beta_offset indicator - 0 or 2 bits

- DMRS sequence initialization - 0 or 1 bit

DCI format 1_0 may be used for fallback DCI for scheduling a PDSCH in which case the CRC may be scrambled with a C-RNTI. DCI format 1_0 in which the CRC is scrambled with the C-RNTI may include, for example, the following information, but is of course not limited to the above examples.

[Table 9]

- Identifier for DCI formats - [1] bit

- Frequency domain resource assignment- $\left[ \left\lceil \log_2 \left( N_{RB}^{DL,BWP} \left( N_{RB}^{DL,BWP} + 1 \right) / 2 \right) \right\rceil \right]$ bits

- Time domain resource assignment - X bits

- VRB-to-PRB mapping - 1 bit.

- Modulation and coding scheme - 5 bits

- New data indicator - 1 bit

- Redundancy version - 2 bits

- HARQ process number - 4 bits

- Downlink assignment index - 2 bits

- TPC command for scheduled PUCCH - [2] bits

- Pysical uplink control channel (PUCCH) resource indicator - 3 bits

- PDSCH-to-HARQ feedback timing indicator - [3] bits

DCI format 1_1 may be used for non-fallback DCI for scheduling a PUSCH, in which case the CRC may be scrambled with a C-RNTI. DCI format 1_1, in which the CRC is scrambled with the C-RNTI, may include, for example, the following information, but is of course not limited the above examples.

[Table 10]

- Carrier indicator - 0 or 3 bits
- Identifier for DCI formats - [1] bits
- Bandwidth part indicator - 0, 1 or 2 bits
- Frequency domain resource assignment

* For resource allocation type 0, $\left\lceil N_{RB}^{DL,BWP} / P \right\rceil$ bits

* For resource allocation type 1, $\left\lceil \log_2 (N_{RB}^{DL,BWP}(N_{RB}^{DL,BWP}+1)/2) \right\rceil$ bits
- Time domain resource assignment -1, 2, 3, or 4 bits
- VRB-to-PRB mapping - 0 or 1 bit, only for resource allocation type 1.
* 0 bit if only resource allocation type 0 is configured;
* 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

For example, each piece of control information included in DCI format 1_1 that is scheduling control information (DL grant) for DL data may include the following information, but is of course not limited the below examples.

- Carrier indicator : It indicates which carrier the data scheduled by DCI is transmitted on - 0 or 3 bits
- Identifier for DCI formats : It indicates DCI formats, and is particularly an indicator distinguishing whether the corresponding DCI is for DL or UL. - [1] bits
- Bandwidth part indicator : It indicates a change in bandwidth part, if any.-0, 1 or 2 bits
- Frequency domain resource assignment : It is resource allocation information indicating frequency domain resource allocation. The resource expressed varies depending on whether the resource allocation type is 0 or 1.
- Time domain resource assignment : It is resource allocation information indicating time domain resource allocation. This may indicate one configuration of a predefined PDSCH time domain resource allocation list or higher layer signaling. -1, 2, 3, or 4 bits
- VRB-to-PRB mapping : It indicates a mapping relationship between the virtual resource block (VRB) and the physical resource block (PRB) - 0 or 1 bit

- PRB bundling size indicator : It indicates the size of physical resource block bundling assuming that the same precoding is applied. - 0 or 1 bit
- Rate matching indicator : It indicates which rate match group is applied among the rate match groups configured via a higher layer applied to PDSCH - 0, 1, or 2 bits
- ZP CSI-RS trigger : It triggers a zero power channel state information reference signal - 0, 1, or 2 bits
- Transport block (TB) related configuration information: It indicates modulation and coding scheme (MCS), new data indicator (NDI) and redundancy version (RV) for one or two TBs
- Modulation and coding scheme (MCS): It indicates the coding rate and modulation scheme used for data transmission. In other words, this may indicate the coding rate value that may indicate TBS and channel coding information along with information for whether it is QPSK, 16QAM, 64QAM, or 256QAM
- New data indicator: It indicates whether it is HARQ initial transmission or re-transmission.
- Redundancy version: It indicates the redundancy version of HARQ.
- HARQ process number : It indicates HARQ process number applied to PDSCH - 4 bits
- Downlink assignment index : An index for generating a dynamic HARQ-ACK codebook when reporting HARQ-ACK for PDSCH - 0 or 2 or 4 bits
- TPC command for scheduled PUCCH : Power control information applied to PUCCH for HARQ-ACK report for PDSCH - 2 bits
- PUCCH resource indicator : Information indicating the resource of PUCCH for HARQ-ACK report for PDSCH - 3 bits
- PDSCH-to-HARQ_feedback timing indicator : Configuration information for a slot in which PUCCH for HARQ-ACK report for PDSCH is transmitted - 3 bits
- Antenna ports : Information indicating the antenna port of the PDSCH DMRS and the DMRS CDM group in which the PDSCH is not transmitted - 4, 5 or 6 bits
- Transmission configuration indication : Information indicating beam-related information for PDSCH - 0 or 3 bits
- SRS request : Information requesting SRS transmission - 2 bits
- CBG transmission information : Information indicating that which code block group (CBG) data is transmitted through PDSCH in case that code block group-based retransmission is configured - 0, 2, 4, 6, or 8 bits
- CBG flushing out information : Information indicating whether the code block group previously received by the UE may be used for HARQ combining - 0 or 1 bit
- DMRS sequence initialization : It indicates DMRS sequence initialization parameter - 1 bit

Hereinafter, a method for allocating time domain resources for a data channel **in** a 5G communication system will be described.

Downlink data may be transmitted on PDSCH, which is a physical channel for downlink data transmission. Uplink data may be transmitted on PUSCH, which is a physical channel for uplink data transmission. PDSCH may be transmitted after the control channel transmission period, and scheduling information such as specific mapping location and modulation method **in** the frequency domain are determined based on DCI transmitted through PDCCH.

The base station may configure the UE with a table for time domain resource allocation information for the downlink data channel (PDSCH) and the uplink data channel (PUSCH) using higher layer signaling (e.g., RRC signaling). For the PDSCH, a table constituted with maximum number of entries, maxNrofDL-Allocations=16, may be configured, and for the PUSCH, a table constituted with maximum number of entries, maxNrofUL-Allocations=16, may be configured. The time domain resource allocation information may include, e.g., PDCCH-to-PDSCH slot timing (which is designated K0 and corresponds to the time interval between the time point of reception of the PDCCH and the time point of transmission of the PDSCH scheduled by the received PDCCH) or PDCCH-to-PUSCH slot timing (which is designated K2 and corresponds to the time interval between the time point of reception of PDCCH and the time point of transmission of the PUSCH scheduled by the received PDCCH), information for the location and length of the start symbol where the PDSCH or PUSCH is scheduled **in** the slot, and the mapping type of PDSCH or PUSCH, or the like. For example, information as illustrated **in** Tables 11 and 12 below may be notified from the base station to the UE, but is of course not limited to the below examples.

[Table 11]

```
PDSCH-TimeDomainResourceAllocationList
PDSCH-TimeDomainResourceAllocationList ::=   SEQUENCE
(SIZE(1..maxNrofDL-Allocations)) OF PDSCH-
TimeDomainResourceAllocation

PDSCH-TimeDomainResourceAllocation ::=      SEQUENCE {
     k0                                          INTEGER(0..32)
OPTIONAL,     -- Need S
     mappingType                                 ENUMERATED {typeA,
typeB},
     startSymbolAndLength                        INTEGER (0..127)
}
```

[Table 12]

```
PUSCH-TimeDomainResourceAllocationList
PUSCH-TimeDomainResourceAllocation information element
-- ASN1START
-- TAG-PUSCH-TIMEDOMAINRESOURCEALLOCATIONLIST-START

PUSCH-TimeDomainResourceAllocationList ::=   SEQUENCE
(SIZE(1..maxNrofUL-Allocations)) OF PUSCH-
TimeDomainResourceAllocation

PUSCH-TimeDomainResourceAllocation ::=   SEQUENCE {
     k2                                      INTEGER(0..32)
OPTIONAL,     -- Need S
     mappingType                             ENUMERATED {typeA,
```

```
typeB},
     startSymbolAndLength                     INTEGER (0..127)
}
```

The base station may notify the UE of one of the entries in the table for the time domain resource allocation information via L1 signaling (e.g., DCI) (e.g., it may be indicated with a 'time domain resource allocation' field in the DCI). The UE may obtain time domain resource allocation information for the PDSCH or PUSCH based on the DCI received from the base station.

According to an embodiment of the disclosure, time domain resource assignment may be transmitted via information on a slot to which a PDSCH/PUSCH is transmitted, a start symbol location S in the corresponding slot, and the number L of symbols to which the PDSCH/PUSCH is mapped. Here, S may be a relative location from the start of a slot, L may be the number of consecutive symbols, and S and L may be determined based on a start and length indicator value (SLIV) defined as in Equation 1 below.

**[Equation 1]**

$$\text{if } (L-1) \leq 7 \text{ then}$$

$$SLIV = 14 \cdot (L-1)+S$$

$$\text{else}$$

$$SLIV = 14 \cdot (14-L+1)+(14-1-S)$$

$$\text{where } 0 < L \leq 14-S$$

In the NR system, the PDSCH mapping type is defined by type A and type B. In the PDSCH mapping type A, the first symbol among DMRS symbols may be located at the second or the third OFDM symbol in a slot. In the PDSCH mapping type B, the first symbol among DMRS symbols may be located at the first OFDM symbol in a time domain resource assigned via PUSCH transmission.

Through a modulation coding scheme (MCS) among control information constituted with the DCI, the base station may notify the UE of a modulation scheme applied to a PDSCH to be transmitted, and the size (transport block size (TBS)) of data to be transmitted. According to an embodiment of the disclosure, the MCS may be constituted with 5 bits or more or fewer bits. The TBS may correspond to the size of data (transport block (TB)) that the base station desires to transmit, before channel coding for error correction is applied to the data.

In the disclosure, a transport block (TB) may include a medium access control (MAC) header, a MAC control element (CE), one or more MAC service data units (SDUs), and padding bits. Alternatively, the TB may indicate the unit of data, which is delivered from a MAC layer to a physical layer, or a MAC protocol data unit (PDU).

The modulation schemes supported by the NR system are quadrature phase shift keying (QPSK), 16 quadrature amplitude modulation (16 QAM), 64 QAM, and 256 QAM, and modulation orders ($Q_m$) of the QPSK, 16 QAM, 64 QAM, and 256 QAM correspond to 2, 4, 6, and 8, respectively. That is, 2 bits per symbol in the case of QPSK modulation, 4 bits per symbol in the case of 16 QAM modulation, 6 bits per symbol in the case of 64 QAM modulation, and 8 bits per symbol in the case of 256 QAM modulation may be transmitted.

In order to explain a method and device proposed in an embodiment of the disclosure, the terms, physical channel and signal in the NR system may be used. However, details of the disclosure may be applied to a wireless communication system other than the NR system.

In the disclosure, downlink (DL) is a radio transmission path of a signal, which is transmitted by a base station to a UE, and uplink (UL) denotes a radio transmission path of a signal, which is transmitted by a UE to a base station.

In the disclosure, the terms of physical channel and signal may be used interchangeably with data or control signals. For example, a PDSCH is a physical channel through which data is transmitted, but in the disclosure, the PDSCH may be referred to as data.

Hereinafter, in the disclosure, higher signaling is a signal delivery method in which a signal is transmitted from a base station to a UE using a downlink data channel of a physical layer, or a signal delivery method in which a signal is transmitted from a UE to a base station using an uplink data channel of a physical layer, and the higher signaling may be referred to as RRC signaling or an MAC control element (CE).

According to an embodiment of the disclosure, the timing advance (TA) may be transmitted through MAC control element (CE), for example, timing advance command MAC CE, absolute timing advance command MAC CE, or the like.

On the other hand, a message from a MAC layer delivered to a physical layer, for example, a MAC PDU, may include one or more MAC subPDUs. The MAC subPDUs may each include one piece of the following information, but is of course not limited to the below examples.

- MAC subheader only (including padding)
- MAC subheader and MAC SDU
- MAC subheader and MAC CE
- MAC subheader and padding

MAC SDUs have a variable size, and each MAC subheader may correspond to MAC SDU, MAC CE, or padding.

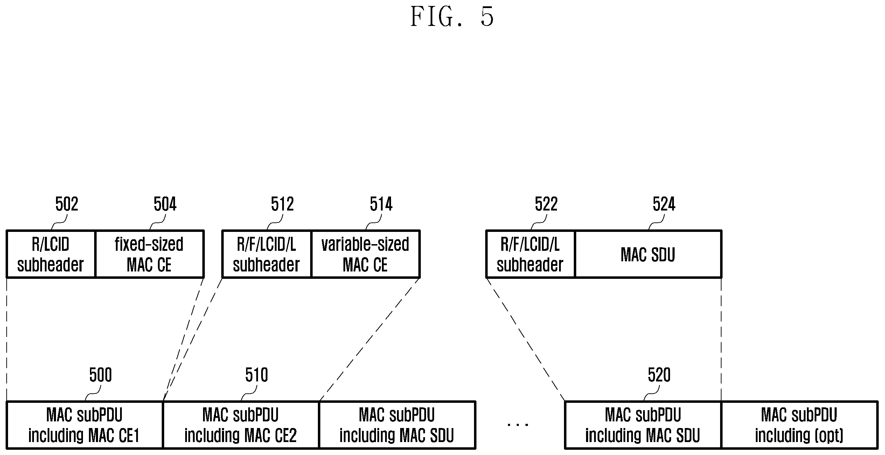

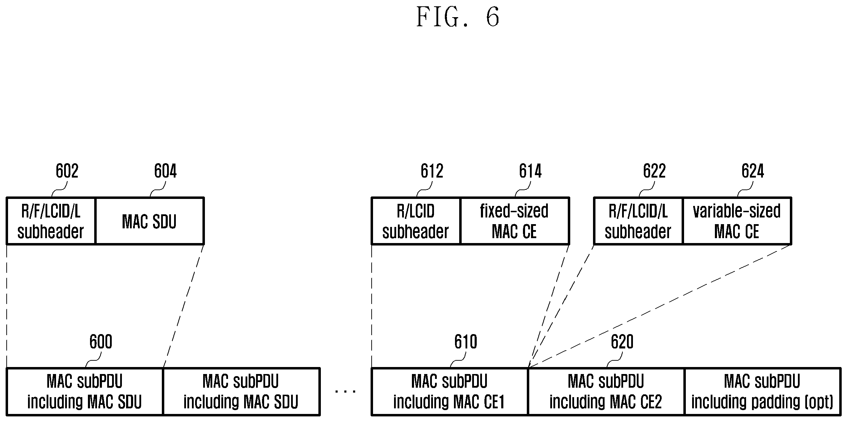

On the other hand, a message from a MAC layer delivered to a physical layer, for example, a MAC PDU, may be constituted as illustrated in FIGS. 5 and 6 in the case of downlink and uplink, respectively.

First, an example of a message delivered from a MAC layer to a physical layer in a downlink in a communication system, according to various embodiments of the disclosure, will be described with reference to FIG. 5.

FIG. 5 is a diagram schematically illustrating an example of a message delivered from a MAC layer to a physical layer in a downlink in a communication system, according to an embodiment of the disclosure.

With reference to FIG. 5, the example of the message delivered from the MAC layer to the physical layer in the downlink may be a downlink MAC PDU (DL MAC PDU). In FIG. 5, a MAC subPDU 500 including MAC CE 1 may include an R/LCID subheader 502 and a fixed-sized MAC CE 504, and a MAC subPDU 510 including MAC CE 2 may include an R/F/LCID/L subheader 512 and a variable-sized MAC CE 514. Also, a MAC subPDU 520 including a MAC SDU may include an R/F/LCID/L subheader 522 and a MAC SDU 524.

In FIG. 5, LCID represents a logical channel ID field. The LCID field indicates an instance of the corresponding MAC SDU, a type of the corresponding MAC CE, or padding. This will be described in detail in Tables 13 and 14 below. Here, Table 13 below shows LCID values for DL-SCH, and Table 14 shows LCID values for UL-SCH.

[Table 13]

| Codepoint/Index | LCID values |
|---|---|
| 0 | CCCH |
| 1–32 | Identity of the logical channel |
| 33 | Extended logical channel ID field (two-octet eLCID field) |
| 34 | Extended logical channel ID field (one-octet eLCID field) |
| 35–46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

[Table 14]

| Codepoint | Index | LCID values |
|---|---|---|
| 0 to 244 | 64 to 308 | Reserved |
| 245 | 309 | Serving Cell Set based SRS Spatial Relation Indication |
| 246 | 310 | PUSCH Pathloss Reference RS Update |
| 247 | 311 | SRS Pathloss Reference RS Update |
| 248 | 312 | Enhanced SP/AP SRS Spatial Relation Indication |
| 249 | 313 | Enhanced PUCCH Spatial Relation Activation/Deactivation |
| 250 | 314 | Enhanced TCI States Activation/Deactivation for UE-specific PDSCH |
| 251 | 315 | Duplication RLC Activation/Deactivation |
| 252 | 316 | Absolute Timing Advance Command |
| 253 | 317 | SP Positioning SRS Activation/Deactivation |
| 254 | 318 | Provided Guard Symbols |
| 255 | 319 | Timing Delta |

One LCID field is present for each MAC subheader, and the size of the LCID field is 6 bits. In case that the LCID field is configured to, for example, "34," one additional octet is present in a MAC subheader including an eLCID field and follows the octet including the LCID field. In case that the LCID field is configured to, for example, "33," two additional octets are present in a MAC subheader including an eLCID field and follow the octet including the LCID field.

Also, the eLCID represents an extended logical channel ID field and indicates the logical channel instance of the corresponding MAC SDU or the type of the corresponding MAC CE. The size of the eLCID field is 8 bits or 16 bits.

Also, L represents a length field, and the length field indicates the length of the corresponding MAC SDU or the variable-sized MAC CE. One length field is present for each MAC subheader except for subheaders corresponding to MAC SDUs including the fixed-sized MAC CEs, padding, or UL common control channel (CCCH). The size of the length field is indicated by an F field.

Also, F represents a format field and indicates the size of the length field. One F field is present for each MAC subheader except for MAC SDUs including the fixed-sized MAC CEs, padding, and UL CCCH. The size of the F field is 1 bit. For example, a value of 0 indicates 8 bits of the length field. As another example, a value of 1 indicates 16 bits of the length field.

Also, R is a reserved bit and is configured to, for example, "0."

As illustrated in FIG. 5, MAC CEs, for example, MAC CE 1 and MAC CE 2 are disposed together, and MAC subPDU(s) including MAC CE(s) are disposed before MAC subPDU including MAC SDU and MAC subPDU including padding. The size of the padding may be zero.

Next, an example of a message delivered from a MAC layer to a physical layer in an uplink in a communication system, according to various embodiments of the disclosure, will be described with reference to FIG. 6.

FIG. 6 is a diagram schematically illustrating an example of a message delivered from a MAC layer to a physical layer in an uplink in a communication system, according to an embodiment of the disclosure.

With reference to FIG. 6, the example of the message delivered from the MAC layer to the physical layer in the uplink may be an uplink MAC PDU (UL MAC PDU). In FIG. 6, a MAC subPDU 610 including MAC CE 1 includes an R/LCID subheader 612 and a fixed-sized MAC CE 614, and a MAC subPDU 620 including MAC CE 2 includes an R/F/LCID/L subheader 622 and a variable-sized MAC CE 624. Also, a MAC subPDU 600 including a MAC SDU includes an R/F/LCID/L subheader 602 and a MAC SDU 604.

As illustrated in FIG. 6, MAC CEs, for example, MAC CE 1 and MAC CE 2 are disposed together, and MAC subPDU(s) including MAC CE(s) are disposed after MAC subPDU including MAC SDU and are disposed before MAC subPDU including padding. Here, the size of the padding may be zero.

In FIGS. 5 and 6, the LCID, i.e., logical channel ID, or extended logical channel ID (eLCID) included in the subheader of the MAC layer may indicate the type of the MAC SDU or MAC CE to be transmitted. The mapping between the index of the LCID, the type of the MAC SDU or MAC CE, and the like may be shown in Table 13 below, and the mapping between the index of the eLCID, the type of the MAC SDU or MAC CE, and the like may be shown in Table 14 below. In various embodiments of the disclosure, the LCID may indicate an instance of a logical channel of MAC SDU, a type of MAC CE, or padding information of a downlink shared channel (DL-SCH) and an uplink shared channel (UL-SCH). One LCID may be mapped to each MAC subheader, and the LCID may be implemented with, for example, 6 bits.

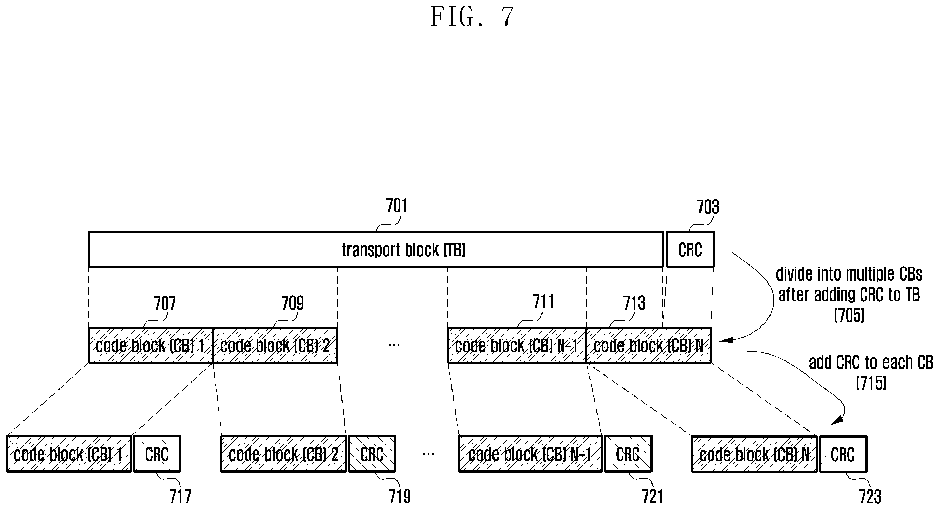

FIG. 7 is a diagram illustrating an example of a process of dividing one transport block (TB) into a plurality of code blocks (CBs) and adding a CRC, according to an embodiment of the disclosure.

With reference to FIG. 7, a CRC 703 may be added to the last or front portion of one transport block (TB) 701 to be transmitted in an uplink or a downlink. The CRC 703 may have 16 bits, 25 bits, a pre-fixed number of bits, or may have a variable number of bits according to channel conditions, and may be used to determine whether channel coding is successful. A block in which the CRC 703 is added to the TB 701 may be divided into a plurality of code blocks (CBs) 707, 709, 711, and 713 (705). According to an embodiment of the disclosure, the code block may be divided with a preset maximum size. In this case, the size of the last code block 713 may be less than the sizes of the other code blocks 707, 709, and 711. However, this is only an example. As 0, a random value, or 1 may be inserted into the last code block 713, the length of the last code block 713 may become equal to the lengths of the other code blocks 707, 709, and 711.

Also, CRCs 717, 719, 721, and 723 may be respectively added to the code blocks 707, 709, 711, and 713 (715). The CRC may have 16 bits, 24 bits, or a pre-fixed number of bits, and may be used to determine whether channel coding is successful.

The TB 701 and a cyclic generator polynomial may be used to generate the CRC 703, and the cyclic generator polynomial may be defined in various ways. For example, assuming that cyclic generator polynomial $gCRC24A(D) = D^{24} + D^{23} + D^{18} + D^{17} + D^{14} + D^{11} + D^{10} + D^7 + D^6 + D^5 + D^4 + D^3 + D + 1$ for 24-bit CRC, when L=24, CRC $p_0, p_1, p_2, p_3, \ldots, p_{L-1}$ for TB data $a_0, a_1, a_2, a_3, \ldots, a_{A-1}$ is a value of which the remainder becomes 0 when $a_0 D^{A+23} + a_1 D^{A+22} + \ldots + a_{A-1} D^{24} + p_0 D^{23} + p_1 D^{22} + \ldots + p_{22} D^1 + p_{23}$ is divided by $gCRC24A(D)$, and may determine $p_0, p_1, p_2, p_3, \ldots, p_{L-1}$. The above example has been described on the assumption that the CRC length L is 24, but the CRC length L may be variously determined to be, for example, 12, 16, 24, 32, 40, 48, 64, etc.

After the CRC is added to the TB through this process, the TB+CRC may be divided into N CBs 707, 709, 711, and 713. The CRCs 717, 719, 721, and 723 may be respectively added to the divided CBs 707, 709, 711, and 713 (715). The CRC added to the CB may have a different length than when generating the CRC added to the TB, or a different cyclic generator polynomial may be used to generate the CRC. Also, the CRC 703 added to the TB and the CRCs 717, 719, 721, and 723 added to the code block may be omitted according to the type of channel code to be applied to the code block. For example, in case that a low density parity check (LDPC) code, not a turbo code, is applied to the code block, the CRCs 717, 719, 721, and 723 to be inserted for each code block may be omitted.

However, even in case that the LDPC is applied, the CRCs 717, 719, 721, and 723 may be added to the code block as they are. Also, in case that a polar code is used, a CRC may be added or omitted.

As described above with reference to FIG. 7, in the TB to be transmitted, the maximum length of one code block may be determined according to the type of channel coding applied, and the division of the TB and the CRC added to the TB into code blocks may be performed according to the maximum length of the code block.

In a conventional LTE system, a CRC for a CB is added to a divided CB, the CRC and data bits of the CB are encoded with a channel code, and coded bits are determined. For each coded bit, the number of rate-matched bits is determined as prearranged.

The size of TB (TBS) in the NR system may be calculated through the following operations.

Operation 1: $N'_{RE}$, which is the number of REs allocated to PDSCH mapping in one PRB within the allocated resource, is calculated. $N'_{RE}$ may be calculated as $$N'_{RE} = N^{RB}_{sc} \cdot N^{sh}_{symb} - N^{PRB}_{DMRS} - N^{PRB}_{oh}$$ . Here, is 12, $N^{sh}_{symb}$ may indicate the number of OFDM symbols allocated to the PDSCH. $N^{PRB}_{DMRS}$ is the number of REs in one physical resource block (PRB) occupied by DMRSs of the same code division multiplexing (CDM) group. $N^{PRB}_{oh}$ is the number of REs occupied by overhead in one PRB configured by higher layer signaling, and may be configured to one of 0, 6, 12, or 18. Thereafter, the total number $N_{RE}$ of REs allocated to the PDSCH may be calculated. $N_{RE}$ is calculated as $N_{RE} = \min(156, N'_{RE}) \cdot n_{PRB}$, and $n_{PRB}$ indicates the number of PRBs allocated to the UE.

Operation 2: The number $N_{info}$ of temporary information bits may be calculated as $N_{RE} * R * Q_m * v$. R is a code rate, $Q_m$ is a modulation order, and information on this value may be transmitted by using an MCS bit field of DCI and a prearranged table. Also, v is the number of allocated layers. When $N_{info} < 3824$, TBS may be calculated through operation 3 below. Otherwise, TBS may be calculated through operation 4.

Operation 3: $N'_{info}$ may be calculated through the equation of

$$N'_{info} = \max\left(24, 2^n \cdot \left\lfloor \frac{N_{info}}{2^n} \right\rfloor\right)$$

and

$$n = \max(3, \left\lfloor log_2(N_{info}) \right\rfloor - 6)$$

.

TBS may be determined as a value closest to $N'_{info}$ among values not less than $N'_{info}$ in Table 15 below.

[Table 15]

| Index | TBS | Index | TBS | Index | TBS | Index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Operation 4: $N'_{into}$ a may be calculated through the equation of

$$N'_{info} = \max\left(3840, 2^n \times round\left(\frac{N_{info} - 24}{2^n}\right)\right)$$

and

$$n = \left\lfloor \log_2 (N_{info} - 24) \right\rfloor - 5$$

TBS may be determined through N'$_{info}$ and [pseudo-code 1] below. In the following, C corresponds to the number of code blocks included in one TB.

## [Start of Pseudo-code 1]

if $R \leq 1/4$

$$TBS = 8 * C * \left\lceil \frac{N'_{info} + 24}{8 * C} \right\rceil - 24, \text{ where } C = \left\lceil \frac{N'_{info} + 24}{3816} \right\rceil$$

else

if $N'_{info} > 8424$

$$TBS = 8 * C * \left\lceil \frac{N'_{info} + 24}{8 * C} \right\rceil - 24, \text{ where } C = \left\lceil \frac{N'_{info} + 24}{8424} \right\rceil$$

else

$$TBS = 8 * \left\lceil \frac{N'_{info} + 24}{8} \right\rceil - 24$$

end if

end if

## [End of Pseudo-code 1]

In the NR system, when one CB is input to an LDPC encoder, parity bits may be added and output. In this case, the amount of parity bits may change according to an LDPC base graph. A method for transmitting all parity bits generated by LDPC coding with respect to a specific input may be referred to as full buffer rate matching (FBRM), and a method for limiting the number of transmittable parity bits may be referred to as limited buffer rate matching (LBRM). When resources are allocated for data transmission, an LDPC encoder output is generated into a circular buffer, and the bits of the generated buffer are repeatedly transmitted as many as the allocated resources. In this case, the length of the circular buffer may be $N_{cb}$.

When the number of all parity bits generated by LDPC coding is N, $N_{cb}$=N in the FBRM. In the LBRM,

$$\left| \frac{TBS_{LBRM}}{C \cdot R_{LBRM}} \right|$$

$N_c d = \min(N, N_{ref})$, $N_{ref}$ is given by , $R_{LBRM}$ may be determined to be 2/3. In order to obtain $TBS_{LBRM}$, the method for obtaining the TBS is used. The maximum number of layers and the maximum modulation order supported by the UE in the corresponding cell are assumed. It is assumed that the maximum modulation order $Q_m$ is 8 in case that the corresponding cell is configured to use an MCS table that supports 256QAM for at least one BWP, and is 6 (64QAM) in case of not being configured. The code rate is assumed to be 948/1024 that is the maximum code rate. $N_{RE}$ is assumed to be $156 \cdot n_{PRB}$. $n_{PRB}$ is assumed to be $n_{PRB,LBRM}$ and calculated. $n_{PRB,LBRM}$ may be given as shown in Table 16 below.

[Table 16]

| Maximum number of PRBs across all configured BWPs of a carrier | $n_{PRB,LBRM}$ |
|---|---|
| Less than 33 | 32 |
| 33 to 66 | 66 |
| 67 to 107 | 107 |
| 108 to 135 | 135 |
| 136 to 162 | 162 |
| 163 to 217 | 217 |
| Larger than 217 | 273 |

In the NR system, the maximum data rate supported by the UE may be determined through Equation 2 below.

[Equation 2]

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)}) \right)$$

In Equation 2, J may be the number of carriers aggregated by frequency aggregation, $R_{max} = 948/1024$, $v_{Layers}^{(j)}$ may be the maximum number of layers, $Q_m^{(j)}$ may be the maximum modulation order, $f^{(j)}$ may be the scaling factor, and $\mu$ may be SCS. $f^{(j)}$ may allow the UE to report one of 1, 0.8, 0.75, and 0.4, and $\mu$ may be given as shown in Table 17 below.

[Table 17]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Also, $T_s^{\mu}$ is the average OFDM symbol duration, $T_s^{\mu}$ may be calculated as $\frac{10^{-3}}{14 \cdot 2^{\mu}}$, $N_{PRB}^{BW(j),\mu}$ is the maximum number of RBs in BW(j). $OH^{(j)}$ is an overhead value, and may be given as 0.14 in the downlink of FR1 (band below 6 GHz) and 0.18 in the uplink of FR1, and may be given as 0.08 in the downlink of FR2 (band over 6 GHz) and 0.10 in the uplink of FR2. A maximum data rate in a downlink in a cell having a frequency bandwidth of 100 MHz at an SCS of 30 kHz may be calculated through Equation 2 as shown in Table 18 below.

[Table 18]

| $f^{(l)}$ | $v^{(l)}_{Layers}$ | $Q^{(l)}_m$ | Rmax | $N^{BW(l),μ}_{PRB}$ | $T^μ_s$ | $OH^{(l)}$ | data rate |
|---|---|---|---|---|---|---|---|
| 1 | 4 | 8 | 0.92578125 | 273 | 3.57143E-05 | 0.14 | 2337.0 |
| 0.8 | 4 | 8 | 0.92578125 | 273 | 3.57143E-05 | 0.14 | 1869.6 |
| 0.75 | 4 | 8 | 0.92578125 | 273 | 3.57143E-05 | 0.14 | 1752.8 |
| 0.4 | 4 | 8 | 0.92578125 | 273 | 3.57143E-05 | 0.14 | 934.8 |

On the other hand, an actual data rate that may be measured in actual data transmission by the UE may be a value obtained by dividing an amount of data by a data transmission time. This may be a value obtained by dividing TBS in 1 TB transmission or the sum of TBS in 2 TB transmission by a TTI duration. For example, as in the assumption of obtaining Table 15, a maximum actual data rate in a downlink in a cell having a frequency bandwidth of 100 MHz at an SCS of 30 kHz may be determined as shown in Table 19 below according to the number of allocated PDSCH symbols.

[Table 19]

| $N^{sh}_{symb}$ | $N^{PRB}_{DMRS}$ | $N'_{RE}$ | $N_{RE}$ | $N_{info}$ | n | $N'_{info}$ | C | TBS | TTI length (ms) | data rate (Mbps) |
|---|---|---|---|---|---|---|---|---|---|---|
| 3 | 8 | 28 | 7644 | 226453.5 | 12 | 225,280 | 27 | 225,480 | 0.107143 | 2,104.48 |
| 4 | 8 | 40 | 10920 | 323505.0 | 13 | 319,488 | 38 | 319,784 | 0.142857 | 2,238.49 |
| 5 | 8 | 52 | 14196 | 420556.5 | 13 | 417,792 | 50 | 417,976 | 0.178571 | 2,340.67 |
| 6 | 8 | 64 | 17472 | 517608.0 | 13 | 516,096 | 62 | 516,312 | 0.214286 | 2,409.46 |
| 7 | 8 | 76 | 20748 | 614659.5 | 14 | 622,592 | 74 | 622,760 | 0.250000 | 2,491.04 |
| 8 | 8 | 88 | 24024 | 711711.0 | 14 | 704,512 | 84 | 704,904 | 0.285714 | 2,467.16 |
| 9 | 8 | 100 | 27300 | 808762.5 | 14 | 802,816 | 96 | 803,304 | 0.321429 | 2,499.17 |
| 10 | 8 | 112 | 30576 | 905814.0 | 14 | 901,120 | 107 | 901,344 | 0.357143 | 2,523.76 |
| 11 | 8 | 124 | 33852 | 1002865.5 | 14 | 999,424 | 119 | 999,576 | 0.392857 | 2,544.38 |
| 12 | 8 | 136 | 37128 | 1099917.0 | 15 | 1,114,112 | 133 | 1,115,048 | 0.428571 | 2,601.78 |
| 13 | 8 | 148 | 40404 | 1196968.5 | 15 | 1,212,416 | 144 | 1,213,032 | 0.464286 | 2,612.68 |
| 14 | 8 | 160 | 43680 | 1294020.0 | 15 | 1,277,952 | 152 | 1,277,992 | 0.500000 | 2,555.98 |

The maximum data rate supported by the UE may be confirmed through Table 18, and the actual data rate according to the allocated TBS may be confirmed through Table 16. In this case, there may be a case in which the actual data rate is greater than the maximum data rate according to scheduling information.

In the wireless communication system, particularly, in the New Radio (NR) system, the data rate that may be supported by the UE may be mutually agreed upon between the base station and the UE. This may be calculated by using the maximum frequency band supported by the UE, the maximum modulation order, the maximum number of layers, etc. However, the calculated data rate may be different from a value calculated from the transport block size (TBS) and the transmission time interval (TTI) duration used for actual data transmission.

Accordingly, the UE may be allocated a TBS greater than a value corresponding to the data rate supported by the UE. To prevent this, there may be a limitation on the TBS that may be scheduled according to the data rate supported by the UE.

Since the UE is generally spaced apart from the base station, a signal transmitted by the UE is received by the base station after a propagation delay. The propagation delay is a value obtained by dividing a path of propagation from the UE to the base station by the velocity of light, and may be a value obtained by dividing the distance from the UE to the base station by the velocity of light. In an embodiment, in case that the UE is spaced apart from the base station by 100 km, a signal transmitted by the UE is received by the base station after about 0.34 msec. Inversely, a signal transmitted by the base station is received by the UE after about 0.34 msec. As described above, a time at which the signal transmitted by the UE arrives at the base station may be different according to the distance between the UE and the base station. Accordingly, when a plurality of UEs existing in different locations transmit signals at the same time, times at which the signals arrive at the base station may be all different. In order to make the signals transmitted by the plurality of UEs arrive at the base station at the same time by solving the problem, times at which uplink signals are transmitted may be determined to be different according to locations of the UEs. In the 5G, NR, and LTE systems, this is called timing advance (TA).

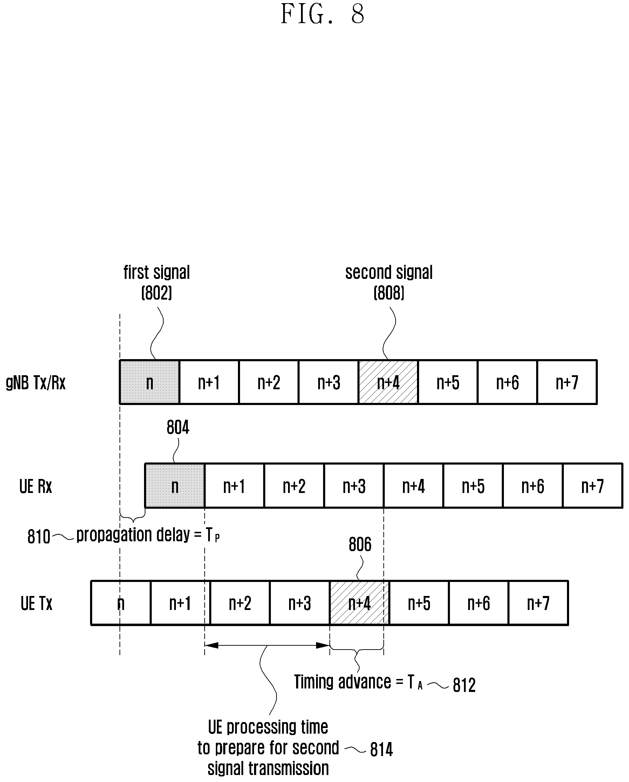

FIG. 8 is a diagram illustrating a processing time of the UE according to timing advance when the UE receives a first signal and transmits a second signal in response thereto in the 5G or NR system, according to an embodiment of the disclosure.

When a base station transmits a first signal (an uplink scheduling grant (UL grant) or a downlink control signal and data (DL grant and DL data) to a UE in slot n 802, the UE may receive the first signal in slot 804. In this case, the UE may receive a signal later than a time at which the base station transmits the signal by a propagation delay ($T_p$) 810. According to an embodiment, in case that the UE receives the first signal in slot n 804, the UE transmits the corresponding second signal (HARQ-ACK/NACK for uplink data or downlink data) in slot n+4 806. When the UE transmits a signal to the base station, the UE may transmit the second signal at timing 806 earlier than slot n+4, in which the UE receives the signal, by timing advance (TA) 812 in order to make the signal arrive at the base station at a specific time. Accordingly, in the embodiment, a time for which the UE prepares receiving the uplink scheduling grant, transmitting uplink data or receiving downlink data, and transmitting HARQ ACK or NACK may be a time obtained by subtracting TA from a time corresponding to 3 slots (814).

In order to determine the above described timing, the base station may calculate an absolute value of TA of the corresponding UE. When the UE initially accesses, the base station may calculate the absolute value of TA while adding an amount of change in the TA value transmitted subsequently through higher layer signaling to the TA value initially transmitted to the UE in a random access step or subtracting the amount of change in the TA value transmitted subsequently through higher layer signaling from the TA value the initially transmitted to the UE. In the disclosure, the absolute value of the TA may be a value obtained by subtracting a start time of an nth TTI which the UE receives from a start time of an nth TTI which the UE transmits.

Meanwhile, one of the important references of the performance of a cellular wireless communication system is packet data latency. To this end, signals are transmitted and received in units of subframes having a transmission time interval (hereinafter, TTI) of 1 ms in the LTE system. In the LTE system operating as described above, the UE (short-TTI UE) having a TTI shorter than 1 ms may be supported. Meanwhile, in the 5G or NR system, the TTI may be shorter than 1 ms. The short-TTI UE is suitable for services such as a voice over LTE (VoLTE) in which latency is important, and remote control. Further, the short-TTI UE may be a means to realize cellular-based mission-critical Internet of things (IoT).

In the 5G or NR system, when the base station transmits a PDSCH including downlink data, DCI for scheduling the PDSCH indicates a K1 value that is a value corresponding to information on timing at which the UE transmits HARQ-ACK information of the PDSCH. In case that transmission of HARQ-ACK information including timing advance earlier than the symbol L1 is not indicated, the UE may transmit the HARQ-ACK information to the base station. That is, HARQ-ACK information may be transmitted from the UE to the base station at a time point that is the same as or later than the symbol L1, including timing advance. In case that transmission of HARQ-ACK information including timing advance earlier than the symbol L1 is indicated, the HARQ-ACK information may not be HARQ-ACK information effective for HARQ-ACK transmission from the UE to the base station.

The symbol L1 may be a first symbol at which cyclic prefix (CP) starts after $T_{proc,1}$ from the last time point of the PDSCH. $T_{proc,1}$ may be calculated as shown in Equation 3 below

[Equation 3]

$$T_{proc,1} = (N_1 + d_{1,1})(2048 + 144) \cdot \kappa 2^{-\mu} \cdot T_c$$

In Equation 3 above, $N_1$, $d_{1,1}$, $d_{1,2}$, k, $\mu$, $T_C$ may be defined as follows.

- $d_{1,1}=0$ when HARQ-ACK information is transmitted through a PUCCH (uplink control channel) and, $d_{1,1}=1$ when HARQ-ACK information is transmitted through a PUSCH (uplink shared channel, data channel)
- In case that the UE receives a configuration of a plurality of activated component carriers or carriers, a maximum timing difference between carriers may be reflected in second signal transmission
- In the case of a PDSCH mapping type A, that is, in the case in which a first DMRS symbol location is a third or fourth symbol in the slot, $d_{1,2}$=7-i when a location index i of the last symbol of the PDSCH is smaller than 7.

- In the case of a PDSCH mapping type B, that is, in the case in which the first DMRS symbol location is a first symbol of the PDSCH, $d_{1,2}$=3 when the length of the PDSCH is 4 symbols, $d_{1,2}$=3+d when the length of the PDSCH is 2 symbols, and d is the number of symbols in which the PDSCH overlaps a PDCCH including a control signal for scheduling the corresponding PDSCH.
- $N_1$ is defined according to $\mu$ as shown in Table 20 below. $\mu$=0, 1, 2, 3 refer to subcarrier spacing 15 kHz, 30 kHz, 60 kHz, and 120 kHz

[Table 20]

| $\mu$ | PDSCH decoding time $N_1$ [symbols] | |
|---|---|---|
| | No additional PDSCH DMRS configured | Additional PDSCH DMRS configured |
| 0 | 8 | 13 |
| 1 | 10 | 13 |
| 2 | 17 | 20 |
| 3 | 20 | 24 |

$N_1$ value provided by Table 20 above may be different according to UE capability, and defined as below, respectively.

$$T_c = 1/\left(\Delta f_{max} \cdot N_f\right) \, , \quad \Delta f_{max} = 480 \cdot 10^3 \ \text{Hz}, \quad N_f = 4096 \, , \quad \kappa = T_s/T_c = 64 \, , \quad T_s = 1/\left(\Delta f_{ref} \cdot N_{f,ref}\right) \, ,$$

$$\Delta f_{ref} = 15 \cdot 10^3 \ \text{Hz} \, , \quad N_{f,ref} = 2048$$

Also, in the 5G or NR system, when the base station transmits control information including the uplink scheduling grant, a K2 value corresponding to information on timing at which the UE transmits uplink data or the PUSCH may be indicated.

In case that transmission of the PUSCH including timing advance earlier than the symbol L2 is not indicated, the UE may transmit the PUSCH to the base station. That is, the PUSCH may be transmitted from the UE to the base station at a time point that is the same as or later than the symbol L2, including timing advance. In case that transmission of the PUSCH including timing advance earlier than the symbol L2 is indicated, the UE may ignore uplink scheduling grant control information from the base station.

The symbol L2 may be a first symbol at which a CP of a PUSCH symbol starts, which needs to be transmitted after $T_{proc,2}$ from the last time point of the PDCCH including the scheduling grant starts. $T_{proc,2}$ may be calculated as shown in Equation 4 below

[Equation 4]

$$T_{proc,2} = \left( (N_2 + d_{2,1})(2048 + 144) \cdot \kappa 2^{-\mu} \right) \cdot T_C$$

In Equation 4 above, $N_2$, $d_{2,1}$, x, $\mu$, TC may be defined as follows.

- $d_{2,1}$=0 when a first symbol of the symbols to which the PUSCH is allocated includes only a DMRS, and otherwise, $d_{2,1}$=1.
- When the UE receives a configuration of a plurality of activated component carriers or carriers, a maximum timing difference between carriers may be reflected in second signal transmission.
- $N_2$ is defined according to $\mu$ as shown in Table 21 below. $\mu$=0, 1, 2, 3 refer to subcarrier spacing 15 kHz, 30 kHz, 60 kHz, and 120 kHz.

[Table 21]

| μ | PUSCH preparation time $N_2$ [symbols] |
|---|---|
| 0 | 10 |
| 1 | 12 |
| 2 | 23 |

- $N_2$ value provided by Table 21 above may be different according to UE capability,

$$T_{\mathrm{c}} = 1/\left(\Delta f_{\mathrm{max}} \cdot N_{\mathrm{f}}\right), \quad \Delta f_{\mathrm{max}} = 480 \cdot 10^3 \ \mathrm{Hz}, \quad N_{\mathrm{f}} = 4096, \quad \kappa = T_{\mathrm{s}}/T_{\mathrm{c}} = 64, \quad T_{\mathrm{s}} = 1/\left(\Delta f_{\mathrm{ref}} \cdot N_{\mathrm{f,ref}}\right),$$

$$\Delta f_{\mathrm{ref}} = 15 \cdot 10^3 \ \mathrm{Hz}, \quad N_{\mathrm{f,ref}} = 2048$$

and defined as above respectively.

Meanwhile, the 5G or NR system may configure a frequency bandwidth part (BWP) within one carrier and designate transmission and reception by a specific UE within the configured BWP. This is to reduce power consumption of the UE. The base station may configure a plurality of BWPs and change activated BWPs in control information. A time used by the UE to change the BWPs may be defined as shown in Table 22 below.

[Table 22]

| Frequency range | Scenario | Type 1 delay(us) | Type 1 delay(us) |
|---|---|---|---|
| 1 | 1 | 600 | 2000 |
|   | 2 | 600 | 2000 |
|   | 3 | 600 | 2000 |
|   | 4 | 400 | 950 |
| 2 | 1 | 600 | 2000 |
|   | 2 | 600 | 2000 |
|   | 3 | 600 | 2000 |
|   | 4 | 400 | 950 |

In Table 22, frequency range FR1 may refer to a frequency band equal to lower than 6 GHz, and frequency range FR2 may refer to a frequency band higher than or equal to 6 GHz, and may be classified as shown in Table 4 above. Typically, FR2 may refer to a high-frequency band close to the mmWave band, and FR1 may refer to a relatively low-frequency band compared to FR2. In the above embodiment, type 1 and type 2 may be determined according to UE capability. In the above embodiment, scenarios 1, 2, 3, and 4 are shown in Table 23 below.

[Table 23]

| | change in center frequency | unchanged in center frequency |
|---|---|---|
| change in center frequency | Scenario 3 | Scenario 2 |
| unchanged in center frequency | Scenario 1 | Scenario 4 when subcarrier spacing is changed |

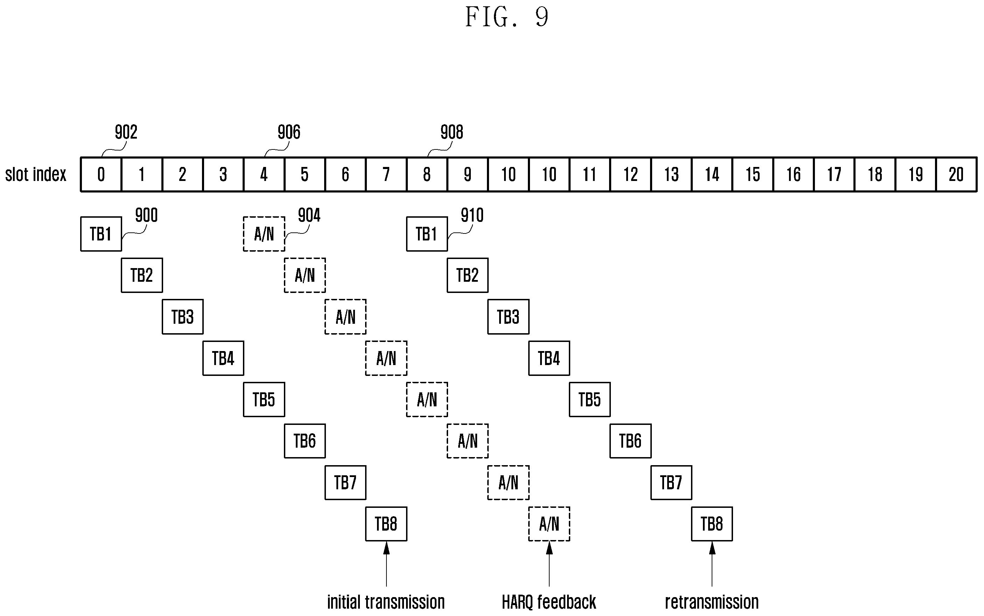

FIG. 9 is a diagram illustrating an example in which data (for example, TBs) are scheduled and transmitted according to a slot, an HARQ-ACK feedback for the corresponding data is received, and retransmission is performed according to the feedback.

In FIG. 9, TB1900 is initially transmitted in slot 0 902, and an ACK/NACK feedback 904 therefor is transmitted in slot 4 906. If initial transmission of TB1 fails and NACK is received, retransmission 910 of TB1 may be performed in slot 8 908. A time point at which the ACK/NACK feedback is transmitted and a time point at which retransmission is performed may be predetermined or may be determined according to control information or/and a value indicated by higher layer signaling.

FIG. 9 illustrates an example in TB1 to TB8 are sequentially scheduled and transmitted according to slots from slot no. 0. This may mean transmission of TB1 to TB8 to which HARQ process IDs 0 to 7 are assigned. If the number of HARQ process IDs which can be used by the base station and the UE is only 4, transmission for 8 different TBs may not be successively performed.

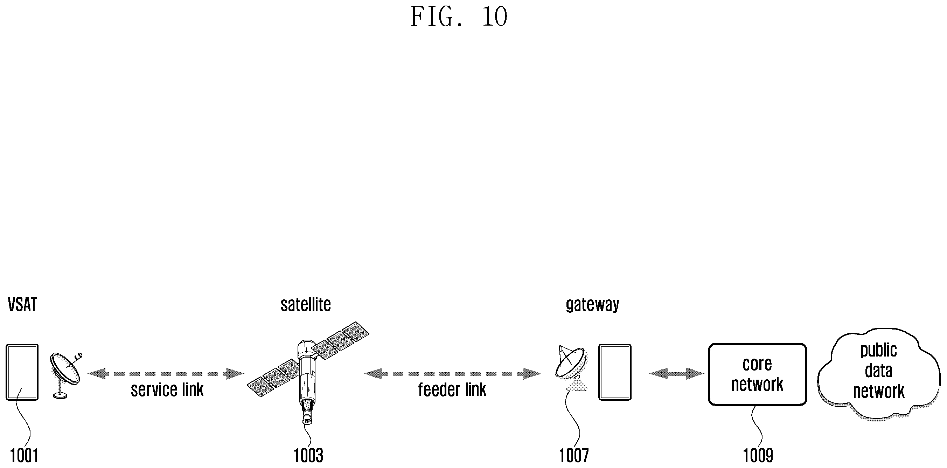

FIG. 10 is a diagram illustrating an example of a communication system using a satellite, according to an embodiment of the disclosure.

For example, when a UE (very small aperture terminal (VSAT)) 1001 transmits a signal to a satellite 1003 through a service link, the satellite (spaceborne platform) 1003 may transmit the signal to a base station 1005 through feeder link, and the base station 1005 may process the received signal and transmit the signal including a demand of the following operation therefor to the UE 1001, which may be transmitted again through the satellite 1003. The distance between the UE 1001 and the satellite 1003 is long and the distance between the satellite 1003 and the base station 1005 is also long, and thus a time spent for data transmission/reception from the UE 1001 to the base station 1005 may become longer.

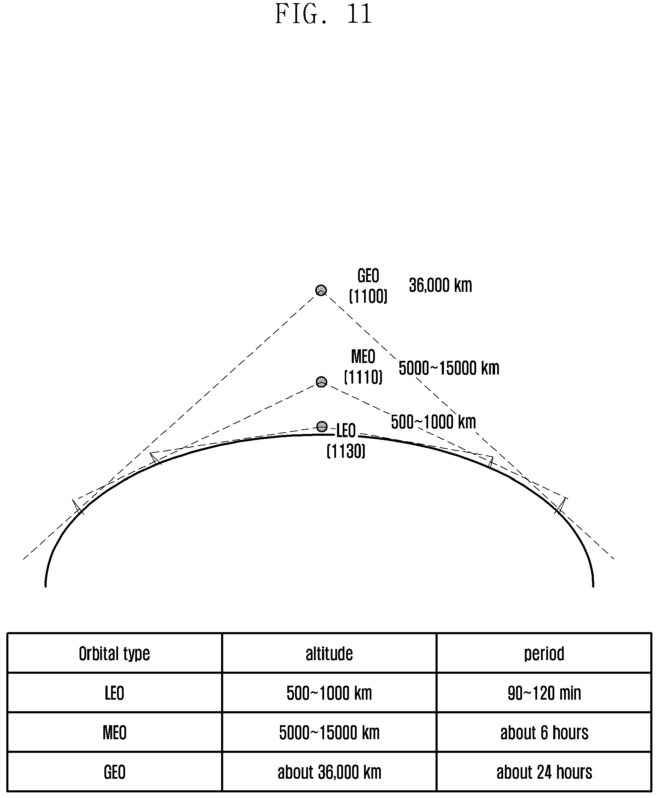

FIG. 11 is a diagram illustrating the revolution period of a communication satellite around the earth according to an altitude or height of the satellite, according to an embodiment of the disclosure.

Satellites for communication may be classified into a low earth orbit (LEO), a meddle earth orbit (MEO), a geostationary earth orbit (GEO), and the like depending on the satellite orbit. In general, the GEO 1100 may refer to a satellite having an altitude of about 36000 km, the MEO 1110 may refer to a satellite having an altitude from 5000 to 15000 km, and the LEO may refer to a satellite having an altitude from 500 to 1000 km, but they are of course not limited thereto.

According to an embodiment of the disclosure, the revolution period around the earth varies depending on the altitude, and the GEO 1100 has the revolution period around the earth of about 24 hours, the MEO 1110 has about 6 hours, and the LEO 1130 has about 90 to 120 minutes. The low orbit (~2,000 km) satellite may have an advantage in having a shorter propagation delay time (understood as a time spent until a signal output from a transmitter arrives at a receiver) and lower loss with a relatively low altitude than the geostationary orbit (36,000 km) satellite.

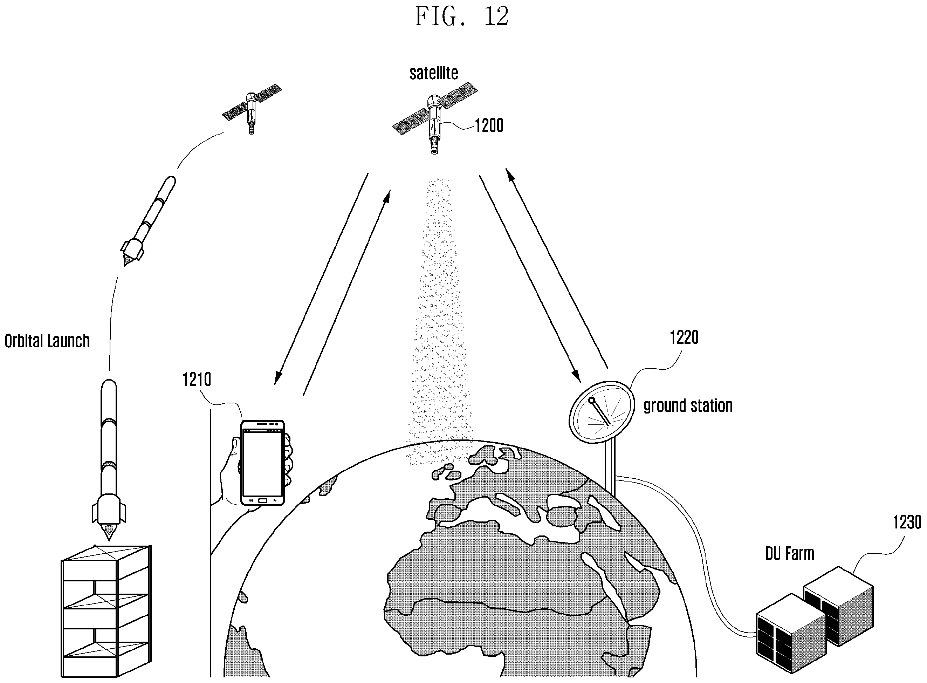

FIG. 12 is a diagram illustrating the concept of direct communication between a satellite and a UE, according to an embodiment of the disclosure.

A satellite 1200 located at a place higher than or equal to altitude 100 km by a rocket transmits and receives a signal to and from the UE 1210 on the ground and also transmits and receives a signal to and from a ground station 1220 connected to a base station on the ground (DU farms) 1230.

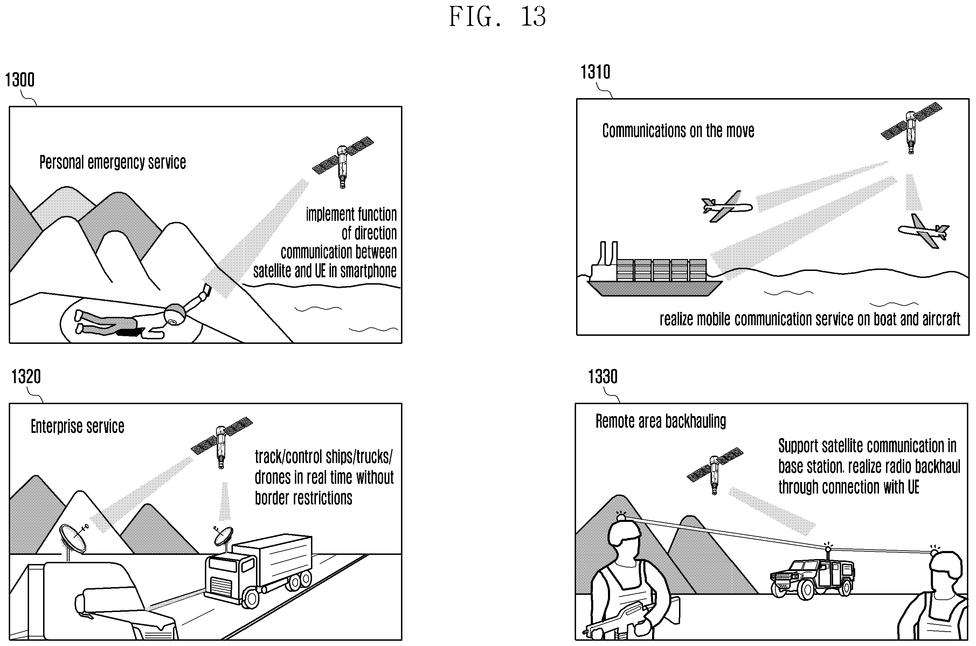

FIG. 13 is a diagram illustrating a scenario using direct communication between a satellite and a UE, according to an embodiment of the disclosure.

The direct communication between the satellite and the UE may support a communication service specialized in a manner of compensating the coverage limit of a ground network. For example, by implementing a function of the direct communication between the satellite and the UE in the UE, satellite communication may be used to make emergency relief of the user or/and transmission and reception of a disaster signal possible in a place other than the ground network communication coverage (1300), provide a mobile communication service to the user in an area in which ground network communication is impossible such as on a boat or/and aircraft (1310), track and control locations of ships, trucks, or/and drones in real time without border restrictions (1320), or perform a backhaul function in a physically remote area by supporting a satellite communication function in the base station and functioning as a backhaul of the base station (1330).

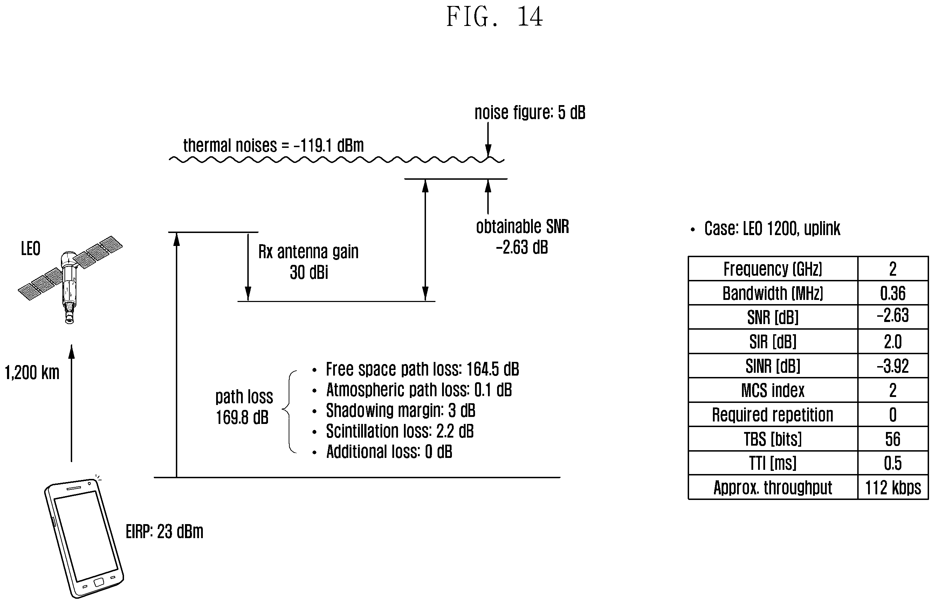

FIG. 14 is a diagram illustrating an example of calculation of expected data throughput in an uplink when the LEO satellite having an altitude of 1200 km and the UE perform direct communication, according to an embodiment of the disclosure.

In case that effective isotropic radiated power (EIRP) of the ground UE in the uplink is 23 dBm, a path loss of a radio channel to the satellite is 169.8 dB, and a satellite reception antenna gain is 30 dBi, an achievable signal-to-noise ratio (SNR) is estimated as -2.63 dB. In this case, the path loss may include a free space path loss, an atmospheric path loss, and the like. When it is assumed that a signal-to-interference ratio (SIR) is 2 dB, a signal-to-interference and noise ratio (SINR) is calculated as -3.92 dB, in which case a transmission rate of 112 kbps can be achieved in case that subcarrier spacing of 30 kHz and frequency resources of 1 PRB are used.

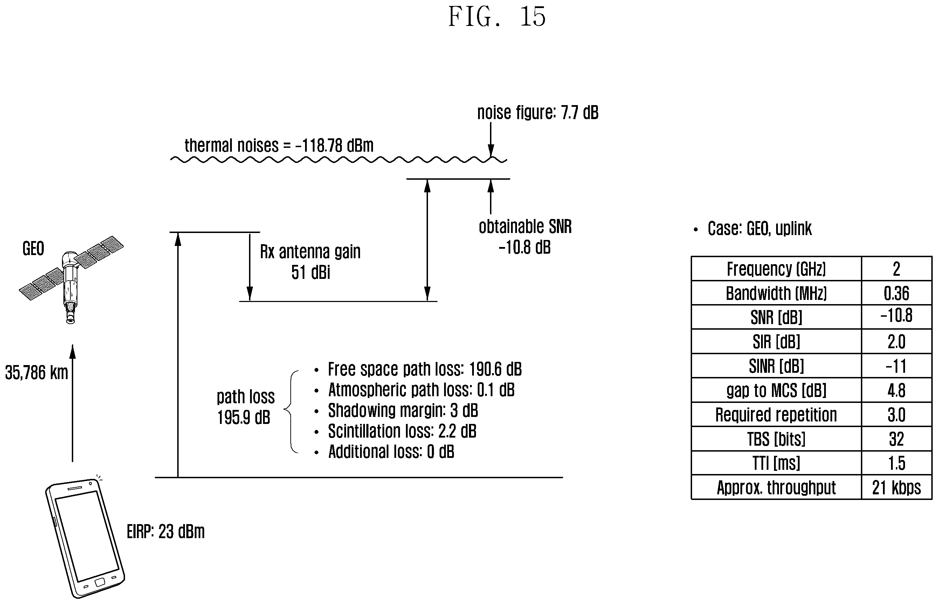

FIG. 15 is a diagram illustrating an example of calculation of expected data throughput in an uplink when the GEO satellite having an altitude of 35,786 km and the ground UE perform direct communication, according to an embodiment of the disclosure.

In case that EIRP of the ground UE in the uplink is 23 dBm, a path loss of a radio channel to the satellite is 195.9 dB, and a satellite reception antenna gain is 51 dBi, an achievable SNR is estimated as -10.8 dB. In this case, the path loss may include a path loss in the space, a path loss in the atmosphere, and the like. When it is assumed that the SIR is 2 dB, the SINR is calculated as -11 dB, in which case a transmission rate of 21 kbps can be achieved in case that subcarrier spacing of 30 kHz and frequency resources of 1 PRB are used, which is the result of 3 repetitive transmissions.

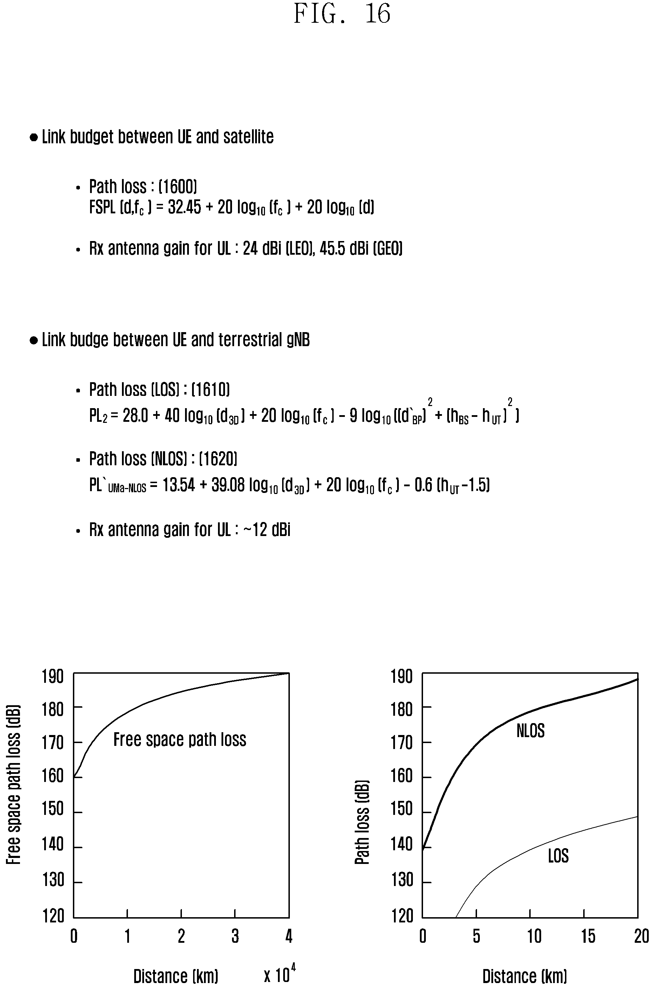

FIG. 16 is a diagram illustrating a path loss value according to a path loss model between a UE and a satellite and a path loss according to a path loss model between the UE and a ground network communication base station, according to an embodiment of the disclosure.

In FIG. 16, d is a distance and fc is a frequency of a signal. A path loss 1600 (FSPL) in a free space in which communication between the UE and the satellite is performed is inversely proportional to the square of the distance, but path losses 1610 and 1620 ($PL_2$, $PL'_{Uma-NLOS}$) on the ground on which air exists and communication between the UE and a ground network communication base station (terrestrial gNB) is performed is inversely proportional almost the power of 4 of the distance. $d_{3D}$ refers to a straight-line distance between the UE and the base station, $h_{BS}$ is a height of the base station, and $h_{UT}$ is a height of the UE. It is calculated that $d'_{BP} = 4 \times h_{BS} \times h_{UT} \times f_c / c$. $f_c$ is a central frequency in units of Hz and c is a velocity of light in units of m/s.

In a satellite communication (or a non-terrestrial network (NTN)), Doppler shift, that is, frequency movement (offset) of a transmission signal is generated due to continuous fast movement of the satellite.

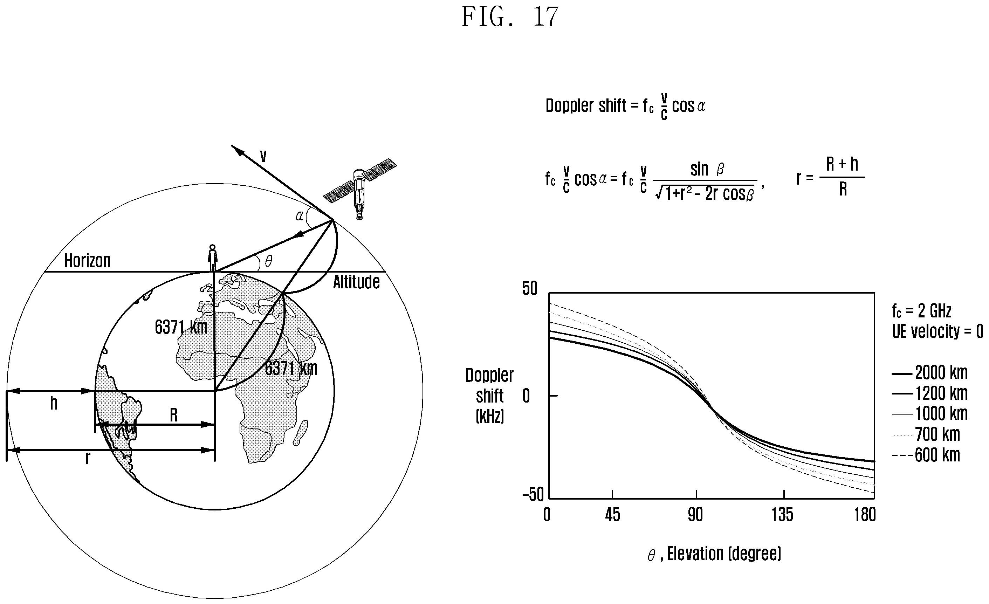

FIG. 17 is a diagram illustrating an equation of calculating an amount of the Doppler shift which a signal experiences and the result thereof when the signal transmitted from the satellite is received by a user on the ground according to altitude and a location of the satellite, and a location of the user of the UE on the ground, according to an embodiment of the disclosure.

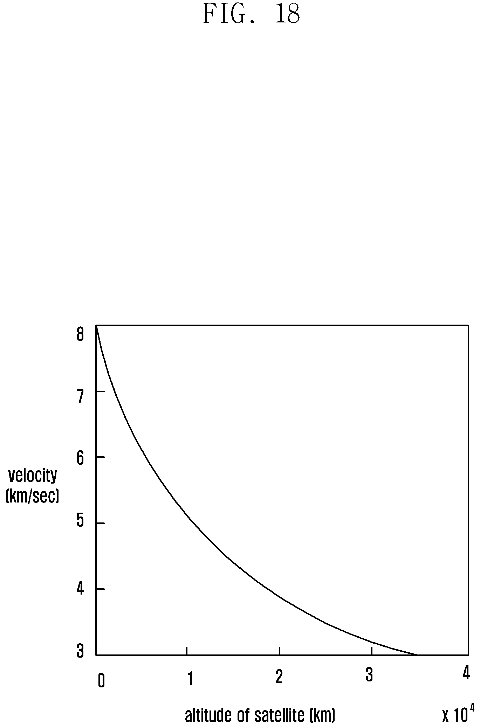

An earth radius is R, h is an altitude of the satellite, v is a velocity of revolution of the satellite around the earth, and fc is a frequency of a signal. The velocity of the satellite may be calculated by the altitude of the satellite, which corresponds to a velocity making the gravity that is the force which causes the earth to pull the satellite the same as the centripetal force generated according to the revolution of the satellite, and may be calculated as shown in FIG. 18.

FIG. 18 is a diagram illustrating a velocity of a satellite calculated at an altitude of the satellite. As identified in FIG. 17, an angle $\alpha$ is determined by an elevation angle $\theta$, and thus a value of Doppler shift is determined according to the elevation angle $\theta$.

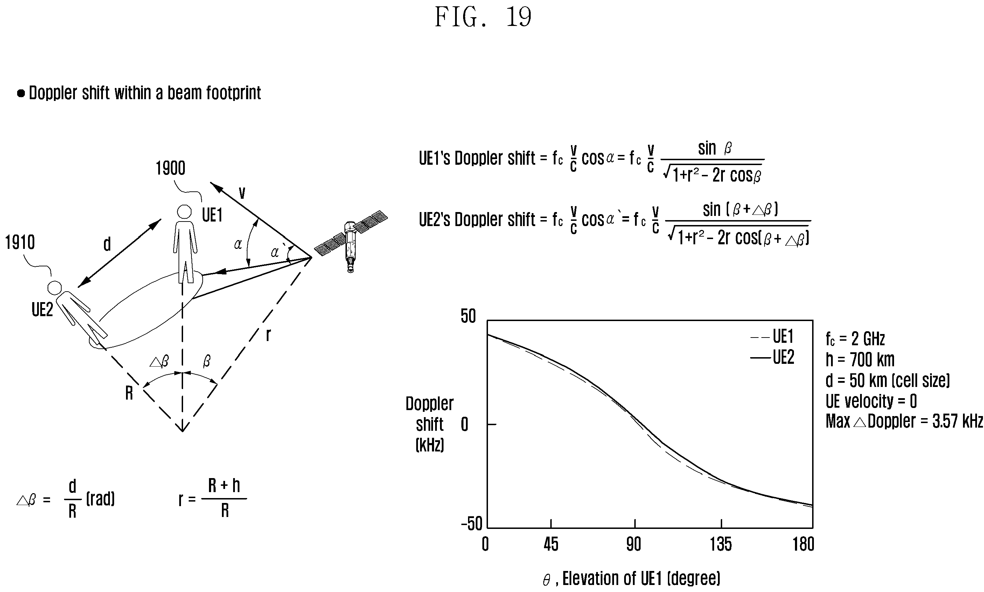

FIG. 19 is a diagram illustrating Doppler shift which different UEs in one beam which a satellite transmits to the ground experience, according to an embodiment of the disclosure.

In FIG. 19, Doppler shifts which UE 1 1900 and UE 2 1910 experience according to an elevation angle $\theta$ are calculated. It is the result of the assumption that the center frequency is 2 GHz, a satellite altitude is 700 km, a radius of one beam on the ground is 50 km, and a velocity of the UE is 0. Further, the Doppler shift calculated in the disclosure ignores an effect according to a velocity of earth rotation, which may be considered as small influence because the velocity is slow compared to a velocity of the satellite.

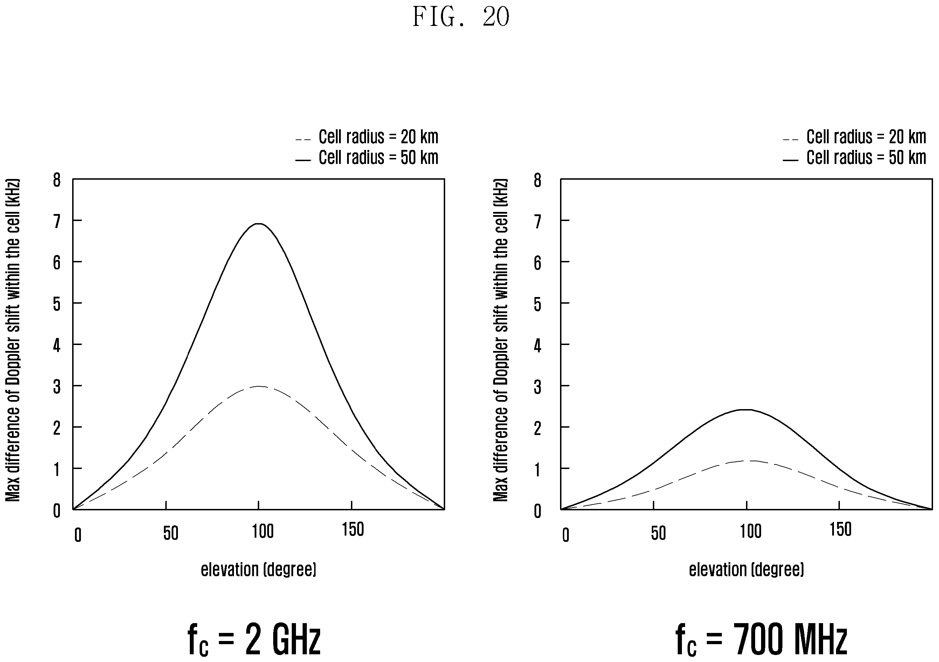

FIG. 20 is a diagram illustrating difference between Doppler shifts generated within one beam according to a location of a satellite determined by an elevation angle, according to an embodiment of the disclosure.

When the satellite is located right on the beam, that is, when an elevation angle is 90 degrees, it can be seen that the difference between Doppler shifts is the largest within the beam (or cell). This is because, when the satellite is located at the top in the middle, Doppler shift values on one end and the other end of the beam have a positive value and a negative value, respectively.

Meanwhile, since the distance between the satellite and a user on the ground is long in satellite communication, the satellite communication has a longer delay time compared to ground network communication.

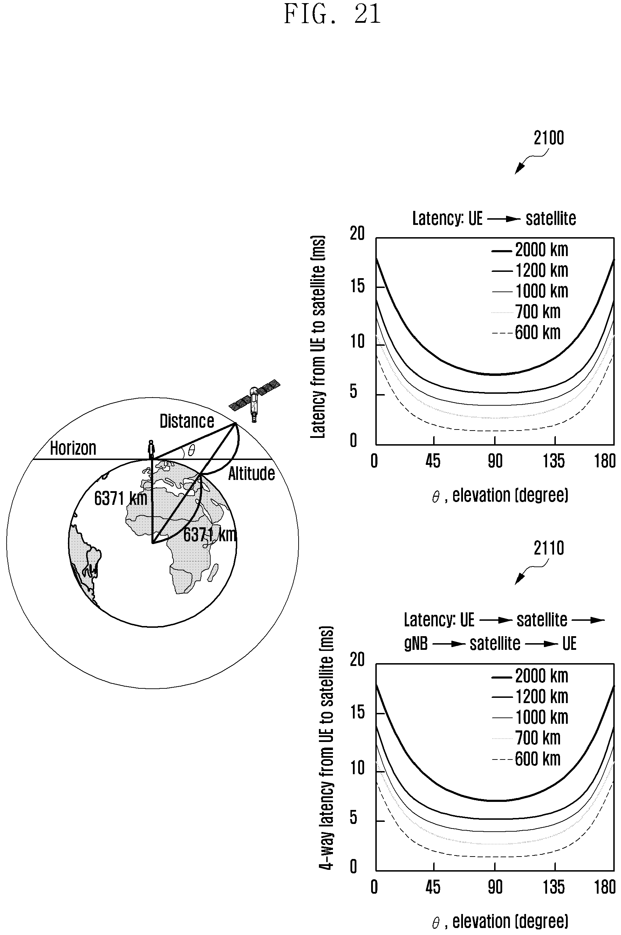

FIG. 21 is a diagram illustrating a delay time from a UE to a satellite according to a location of the satellite determined by an elevation angle and a round-trip delay time between the UE, the satellite, and a base station, according to an embodiment of the disclosure.

A first graph 2100 shows a delay time from the UE to the satellite, and a second graph 2110 shows a round-trip delay time between the UE, the satellite, and the base station. In this case, it is assumed that the delay time between the satellite and the base station and the delay time between the UE and the satellite are the same as each other.

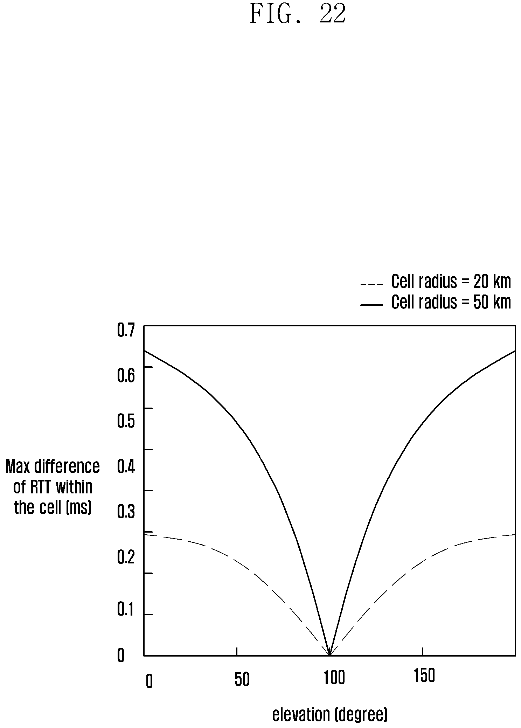

FIG. 22 is a diagram illustrating a maximum difference value of a round-trip delay time varying depending on a location of a user within one beam, according to an embodiment of the disclosure.

For example, when a beam radius (or cell radius) is 20 km, a difference in round-trip delay times to the satellite, which is experienced by UEs at difference locations within the beam, may be equal to or less than about 0.28 ms according to the location of the satellite.

Transmission and reception of a signal with the base station by the UE in satellite communication may mean transfer of the signal through the satellite. That is, the satellite may serve to receive a signal, which the base station transmits to the satellite, and then transfers the signal to the UE in the downlink, and serve to receive a signal, which the UE transmits to the satellite, and then transfers the signal to the base station in the uplink. The satellite may receive the signal and then transfers the signal after performing only frequency shift or may perform signal processing such as decoding and re-encoding based on the received signal and then transfer the signal.

In the case of LTE or NR, the UE may access the base station through the following procedure.

- Operation 1: The UE receives a synchronization signal (or synchronization signal block (SSB) including a broadcasting signal) from the base station. The synchronization signal may include a primary synchronization signal (PSS), a secondary synchronization signal (SSS), and a physical broadcast channel (PBCH). The synchronization signal may include information on a slot boundary of a signal which the base station transmits, a frame number, a downlink, an uplink configuration, and the like. Further, through the synchronization signal, the UE may obtain a subcarrier offset, scheduling information for transmitting system information, and the like.

- Operation 2: The UE receives system information (system information block (SIB)) from the base station. The SIB may include information for performing initial access and random access. Information for performing random access may include resource information for transmitting a random access preamble.
- Operation 3: A random access preamble (or message 1 (msg1)) is transmitted in random access resources configured in operation 2. The preamble may be a signal determined on the basis of the information configured in operation 2 using a predetermined progression. The base station receives the preamble transmitted by the UE. The base station may attempt reception of the preamble configured in resources which the base station configures without knowing which UE has transmitted the preamble and, when the reception is successful, may know that at least one UE has transmitted the preamble.
- Operation 4: When the preamble is received in operation 3, the base station transmits a random access response (RAR) (or message 2 (msg2)) corresponding to a response thereto. The UE that has transmitted the random access preamble in operation 3 may attempt reception of the RAR transmitted by the base station in this operation. The RAR is transmitted on a PDSCH, and a PDCCH for scheduling the PDSCH is transmitted together or in advance. A CRC scrambled by an RA-RNTI value is added to DCI for scheduling the RAR, and the DCI (and CRC) is channel-coded and then mapped to the PDCCH and transmitted. The RA-RNTI may be determined on the basis of a time at which the preamble is transmitted in operation 3 and frequency resources.

A maximum limit time until the UE that has transmitted the random access preamble in operation 3 receives the RAR may be configured in the SIB transmitted in operation 2. The maximum limit time may be restricted and configured as, for example, a maximum of 10 ms or 40 ms. That is, when the UE transmitting the preamble in operation 3 does not receive the RAR within a time determined on the basis of, for example, the configured maximum time 10 ms, the preamble may be transmitted again. The RAR may include scheduling information for allocating resources of the signal to be transmitted by the UE in operation 5 that is the following operation.

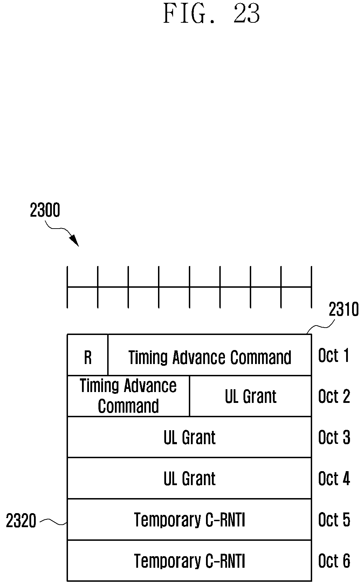

FIG. 23 is a diagram illustrating an example of an information structure (MAC payload) of an RAR, according to an embodiment of the disclosure.

This may be a MAC payload format (fallback RAR) of Msg B. An RAR 2300 may be, for example, a MAC PDU, and may include information 2310 on timing advance (TA) to be applied by the UE and a temporary C-RNTI value 2320 to be used in the following operation.

* R field: It is a reserved bit and may be configured as, for example, "0".
* Timing advance command field 2310: The timing advance command field indicates an index value $T_A$ used to control an amount of timing control which should be applied by the MAC entity. The size of the timing advance command field is, for example, 12 bits.
* UL grant field: A UL grant field indicates resources to be used in the uplink, wherein the size of the UL grant field is, for example, 27 bits.
* Temporary C-RNTI field 2320: A temporary C-RNTI field indicates a temporary identifier used by the MAC entity during random access, wherein the size of the temporary C-RNTI field is, for example, 16 bits.

- Operation 5: The UE that has received the RAR in operation 4 transmits message 3 (msg3) to the base station according to scheduling information included in the RAR. The UE may include a unique ID value of the UE into the msg3 to transmit the msg3. The base station may attempt reception of msg3 according to the scheduling information which the base station has transmitted in operation 4.
- Operation 6: After receiving msg3 and identifying ID information of the UE, the base station generates message 4 (msg4) including the ID information of the UE and transmits the same to the UE. The UE that has transmitted msg3 in operation 5 may attempt to receive msg4 to be transmitted in operation 6 thereafter. The UE that has received msg4 may compare the ID value included in msg4 with the ID value which the UE has transmitted in operation 5 and identify whether msg3 which the UE has transmitted is received by the base station. There may be a constraint on time from the time at which the UE has transmitted the msg3 in operation 5 to the time at which the UE receives the msg4 in this operation, and a maximum time may be configured by the SIB in operation 2.

In case that the initial access procedure using the above-described operations is applied to satellite communication, a propagation delay time in the satellite communication may cause a problem. For example, a period (random access window) from transmission of the random access preamble (or PRACH preamble) by the UE in operation 3 to reception of the RAR in operation 4, that is, a maximum time to the reception thereof may be configured through *ra-ResponseWindow,* and the maximum time in the conventional LTE or 5G NR system may be configured up to a maximum of 10 ms.

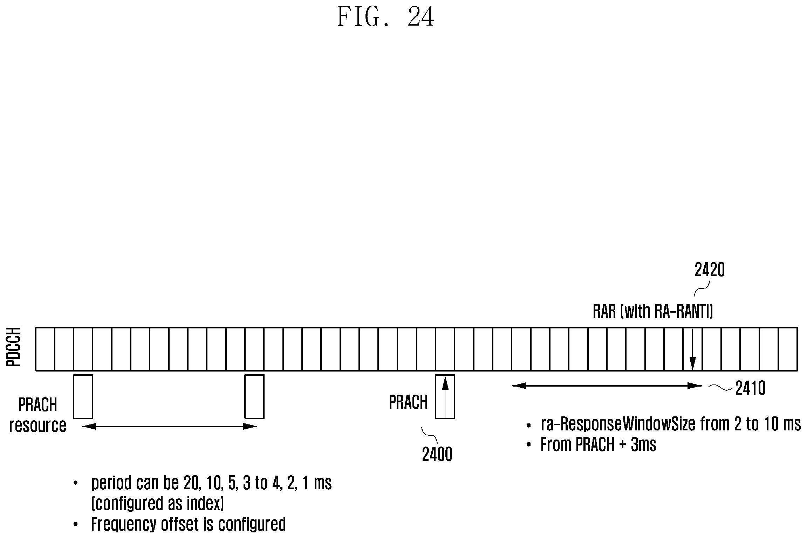

FIG. 24 is a diagram illustrating an example relationship between a PRACH preamble configuration resource and an RAR reception time point in an LTE system, according to an embodiment of the disclosure.

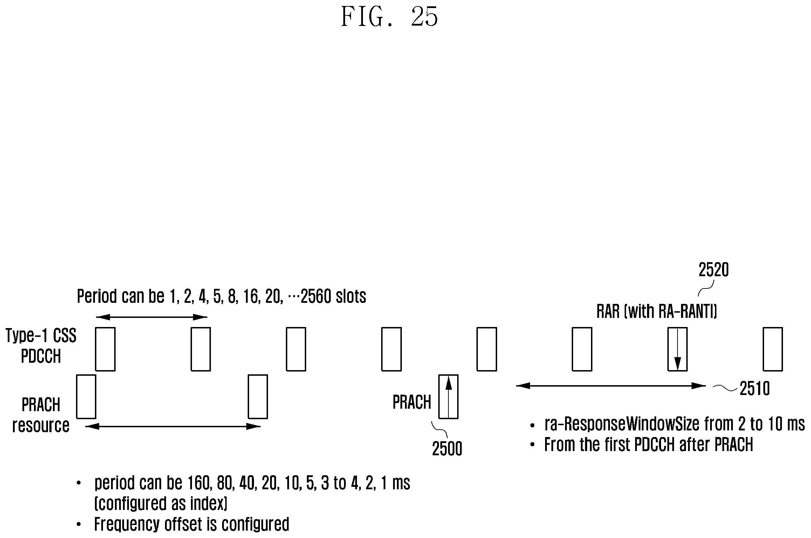

FIG. 25 is a diagram illustrating an example relationship between a PRACH preamble configuration resource and an RAR reception time point in a 5G NR system, according to an embodiment of the disclosure.

With reference to FIG. 24, in the case of LTE, a random access window 2410 starts at a time point after 3 ms from transmission 2400 of a PRACH (random access preamble), and in case that the UE receives an RAR within the random access window (2420), it may be determined that transmission of the PRACH preamble is successful.

With reference to FIG. 25, in the case of NR, a random access window 2510 starts from a control information area for RAR scheduling that first appears after transmission 2500 of the PRACH (random access preamble). In case that the UE receives the RAR within the random access window (2520), it may be determined that transmission of the PRACH preamble is successful.

By way of example, a TA for uplink transmission timing in a 5G NR system may be determined as follows. First, it is determined that $Tc=1/(\Delta f_{max} \cdot N_f)$, wherein $\Delta f_{max}=480 \cdot 10^3$ Hz and $N_f=4096$. Further, $k=T_s/T_c=64$ and it may be defined that $T_s=1/(\Delta f_{ref} \cdot N_{f,ref})$, $\Delta f_{ref}=15 \cdot 10^3$ Hz, $N_{f,ref}=2048$, respectively.

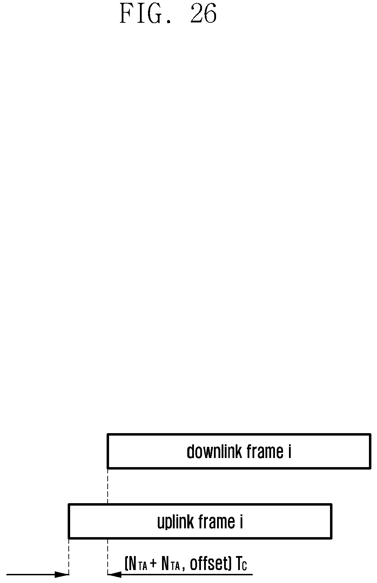

FIG. 26 is a diagram illustrating an example of downlink frame timing and uplink frame timing in a UE, according to an embodiment of the disclosure.

The UE may advance an uplink frame by $T_{TA}=(N_{TA}+N_{TA,offset})T_c$, based on the time point of a downlink frame and perform uplink transmission. In the above, a value of $N_{TA}$ may be transmitted through an RAR or may be determined based on a MAC CE, and $N_{TA,offset}$ may be a value configured in the UE or determined based on a predetermined value.

An RAR of a 5G NR system may indicate a $T_A$ value, and in this case, $T_A$ may indicate one of 0, 1, 2, ... , 3846. In this case, when subcarrier spacing (SCS) of the RAR is $2^{\mu} \cdot 15$ kHz, $N_{TA}$ may be determined as $N_{TA}=T_A \cdot 16 \cdot 64/2^{\mu}$. After the UE completes the random access process, a change value of TA may be indicated from the base station, which may be indicated through a MAC CE or the like. $T_A$ information indicated through the MAC CE may indicate one of 0, 1, 2, ... , 63, which may be used to calculate a new TA value through addition to or subtraction from the existing TA value, and the resultant TA value may be newly calculated as $N_{TA\_new}=T_{A\_old}+(T_A-31) \cdot 16 \cdot 64/2^{\mu}$. The indicated TA value may be applied to uplink transmission by the UE after a predetermined time.

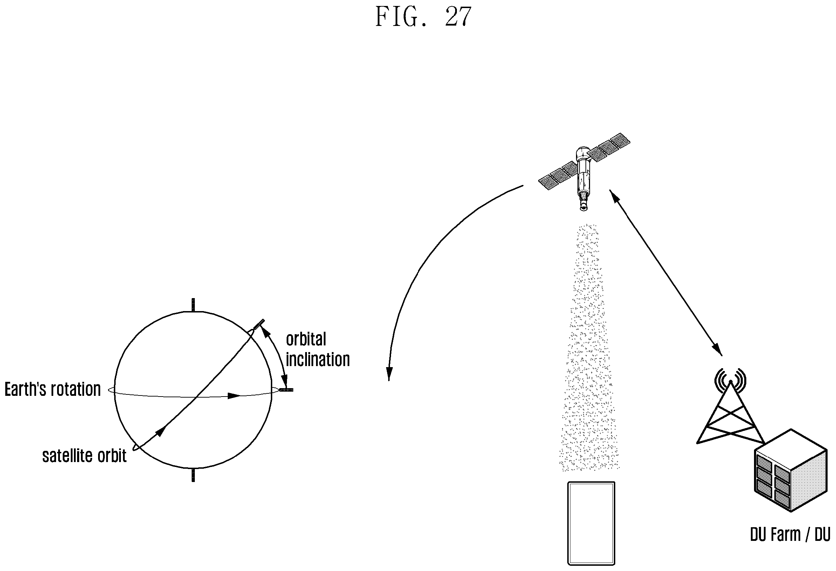

FIG. 27 is a diagram illustrating an example of continuous movement of a satellite with respect to a UE located on the ground or on the earth as the satellite revolves around the earth along a satellite orbit, according to an embodiment of the disclosure.

Since a distance between the UE and the satellite varies depending on an elevation angle at which the UE views the satellite, the propagation delay between the UE, the satellite, and the base station may be different.

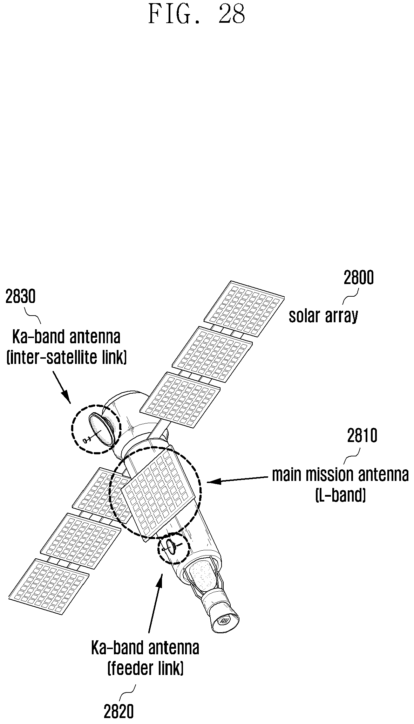

FIG. 28 is a diagram illustrating an example structure of an artificial satellite, according to an embodiment of the disclosure.

The satellite may be constituted with a solar panel or a solar array 2800 for photovoltaic or solar power generation, a transmission and reception antenna (main mission antenna) 2810 for communication with the UE, a transmission and reception antenna (feeder link antenna) 2820 for communication with the ground station, a transmission and reception antenna (inter-satellite link) 2830 for communication between satellites, a processor for controlling transmission and reception and processing a signal, and the like. The satellite is of course not limited the above examples, and an artificial satellite may include more or fewer components than those illustrated in FIG. 28. Also, according to an embodiment of the disclosure, in case that communication between satellites is not supported according to the satellite, the antenna for signal transmission and reception between satellites may not be disposed. Although FIG. 28 illustrates that an L band of 1 to 2 GHz is used for communication with the UE, a K band (18 to 26.5 GHz), a Ka band (26.5 to 40 GHz), and a Ku band (12 to 18 GHz) corresponding to high-frequency bands may be used.

Furthermore, in various embodiments of the disclosure, the term "base station (BS)" may refer to a predetermined component (or a set of components) constituted to provide wireless access, such as a transmission point (TP), a transmit-receive point (TRP), an enhanced node B (eNodeB or eNB), a 5G base station (gNB), a macrocell, a femtocell, Wi-Fi access point (AP), or other wireless-enabled devices, based on the type of the wireless communication system. The base stations may provide wireless access according to one or more radio protocols, for example, 5G 3GPP new radio interface/access (NR), long-term evolution (LTE), LTE advanced (LTE-A), high speed packet access (HSPA), Wi-Fi 802.11a/b/g/n/ac, or the like.

Furthermore, in various embodiments of the disclosure, the term "terminal" may refer to a predetermined component, such as "user equipment (UE)," "mobile station," "subscriber station," "remote terminal," "wireless terminal," "receive point," or "user device." For convenience, the term "UE" is used to refer to a device that accesses a base station in various embodiments of the disclosure, regardless of whether it needs to be considered as a mobile device (such as a mobile phone or a smartphone) or a stationary device (such as a desktop computer or vending machine).

Further, in various embodiments of the disclosure, the term "TA" may be used interchangeably with "TA information", "TA value", "TA index", or the like.

In various embodiments of the disclosure, data or control information which the base station transmits to the UE may be referred to as a first signal, and an uplink signal associated with the first signal may be referred to as a second signal. For example, the first signal may include DCI, a UL grant, a PDCCH, a PDSCH, an RAR, and the like, and the second signal associated with the first signal may include a PUCCH, a PUSCH, msg 3, and the like.

Furthermore, there may be association between the first signal and the second signal. By way of example, in case that the first signal is a PDCCH including a UL grant for uplink data scheduling, the second signal corresponding to the first signal may be a PUSCH including uplink data. Meanwhile, a difference (gap) between time points at which the first signal and the second signal are transmitted and received may be a predetermined value between the UE and the base station. Alternatively, a difference between time points at which the first signal and the second signal are transmitted and received may be determined by an indication of the base station or determined by a value transmitted through higher layer signaling.

Since the distance between the UE and the satellite and the distance between the satellite and the base station and are long and the satellite continuously moves, a time offset may be generated due to a delay time in UE-satellite direct communication when the UE or the base station receives a signal which the base station or the UE transmits. Accordingly, the disclosure provides a method and device in which, in order to correct the time offset, the base station indicates time offset information and the UE corrects the time offset according to the time offset information.

The following embodiments are described based on the assumption of communication between the UE, and the satellite and the ground station, but do not exclude a case in which the satellite base station communicates with the UE.

In the disclosure, the time offset may be interchangeably used with timing advance.

The method and device provided by various embodiments of the disclosure may be applied not only to a satellite communication system but also to a ground communication system. Also, the following embodiments may be operated in combination with each other.

[First Embodiment]

A first embodiment of the disclosure provides a method and device in which a UE directly determines (e.g., calculates) a TA value in case that the UE transmits an uplink signal to a satellite or a base station, and applies the determined TA value.

Further, the first embodiment of the disclosure describes a method and device in which the base station or the satellite indicates a TA value to be applied to the UE when the UE transmits an uplink signal to the satellite or base station and the UE applies the indicated TA value to transmit the uplink signal.

In addition, the first embodiment of the disclosure describes a method and device in which the UE adaptively determines the TA value to be applied when the UE transmits an uplink signal to the satellite or the base station. More specifically, the first example embodiment of the disclosure describes a method by which the UE determines the TA value by itself and a method and device in which the base station or satellite indicates the TA value to the UE as described in the disclosure and the UE adaptively selects one of the methods of applying the indicated TA value and determines the TA value.

First, the UE may compare an uplink transmission time point with a downlink reception time point for uplink synchronization and advance the uplink transmission time point by $T_{TA}$ from the downlink reception time point, based on the comparison result. $T_{TA}$ calculated for TA in satellite communication may be expressed as shown in Equation 5 below.

[Equation 5]

$$T_{TA} = (N_{TA} + N_{TA,UE\text{-specific}} + N_{TA,common} + N_{TA,offset}) \times T_c$$

In Equation 5, $T_c$ may be $T_c = 1/(\Delta f_{max} \cdot N_f)$, and $\Delta f_{max} = 480 \cdot 10^3$ Hz and $N_f = 4096$. In Equation 5, $N_{TA}$ may be a value determined based on a $T_A$ value or the like included in an RAR or a MAC CE received from the base station, and $N_{TA,offset}$ may be a pre-fixed or prearranged value. In Equation 5, $N_{TA,UE\text{-specific}}$ may be a TA correction value measured by the UE, based on locations of the UE and satellite (or reference location), and $N_{TA,common}$ may be a TA correction value configured or indicated using higher signaling or a physical layer signal by the base station.

Equation 5 may be an equation to which parameters $N_{TA,UE\text{-specific}}$ and $N_{TA,common}$ are added compared to Equation 6 below that is the conventional TA application method.

[Equation 6]

$$T_{TA} = (N_{TA} + N_{TA,offset}) \times T_c$$

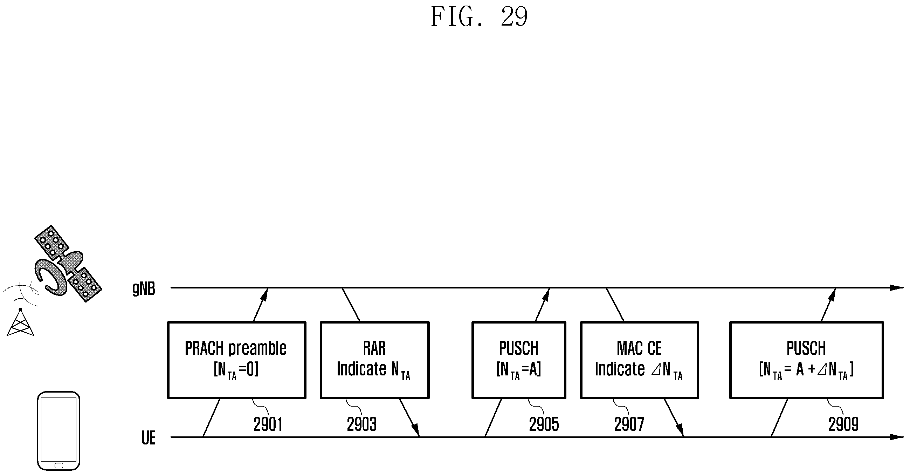

FIG. 29 is a diagram illustrating an example process in which a UE determines $N_{TA}$ from an initial access, according to an embodiment of the disclosure.

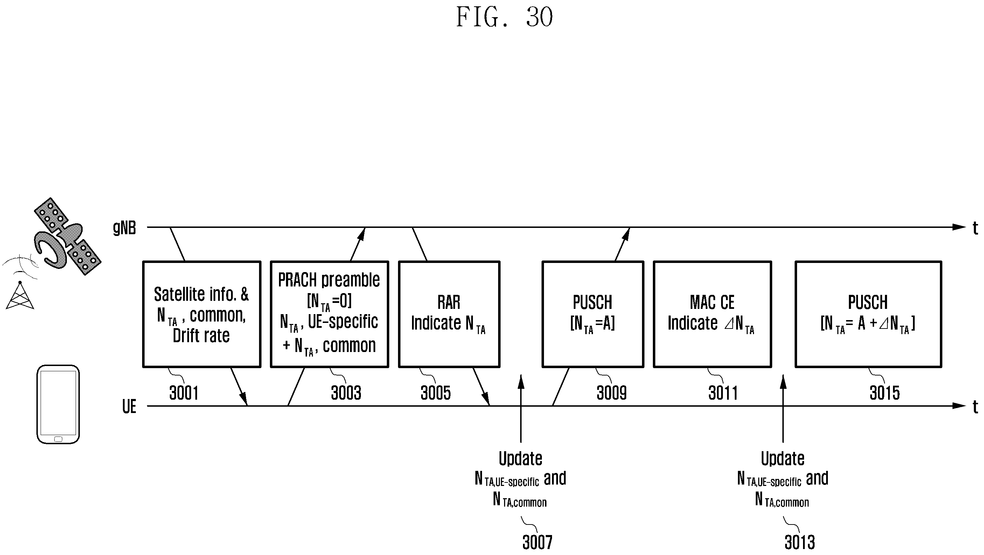

FIG. 30 is a diagram illustrating an example process in which a UE determines $N_{TA}$, $N_{TA,UE\text{-}specific}$, and $N_{TA,common}$ from an initial access, according to an embodiment of the disclosure.

With reference to FIG. 29, the UE transmits a PRACH preamble to the base station by applying $N_{TA}=0$ (2901), and the base station transmits an RAR indicating $N_{TA}$ to the UE (2903). Thereafter, the UE transmits a PUSCH by applying $N_{TA}=A$ (2905), and the base station transmits a MAC CE indicating $\triangle N_{TA}$ to the UE (2907). Thereafter, the UE may transmit PUSCH by applying $N_{TA}=A+\triangle N_{TA}$ (2909).

With reference to FIG. 30, the base station transmits satellite information and configuration information including $N_{TA,common}$ and drift rate to the UE (3001). Thereafter, the UE assumes $N_{TA}=0$ and applies the $N_{TA,UE\text{-}specific}$ measured by itself and the configured $N_{TA,common}$ to transmit a PRACH preamble to the base station (3003). Thereafter, the base station transmits an RAR indicating $N_{TA}$ to the UE (3005), and $N_{TA,UE\text{-}specific}$ and $N_{TA,common}$ may be updated (3007). Thereafter, the UE transmits a PUSCH according to the $T_{TA}$ calculated according to Equation 5 assuming $N_{TA}=A$ (3009), and the base station may transmit a MAC CE indicating $\triangle N_{TA}$ to the UE (3011). Thereafter, $N_{TA,UE\text{-}specific}$ and $N_{TA,common}$ may be updated (3013), and the UE may transmit PUSCH according to $T_{TA}$ calculated according to Equation 5 by applying $N_{TA}=A+\triangle N_{TA}$ and the updated $N_{TA,UE\text{-}specific}$ and $N_{TA,common}$ (3015).

$T_{TA}$ may be determined as $N_{TA}=T_A \cdot 16 \cdot 64/2^\mu$, based on $T_A=0, 1, 2, ..., 3846$, which is transmitted on a RAR or msg B. Also, $T_A=0, 1, 2, ... , 63$ may be transmitted through a MAC CE and may be updated to $NTA\_new=N\text{-}TA\_old+(T_A-31)\cdot 16\cdot 64/2^\mu$. Further, $\Delta f_{max} \cdot N_f \cdot T_A$ transmitted through the RAR or msg B, the $T_A$ value transmitted through the MAC CE, and the like may be changed according to a communication system. Further, in a case that the UE performs the TA update $N_{TA\_new}=T_{A\_old}+(T_A-M) \cdot 16 \cdot 64/2^\mu$, based on $T_A$ transmitted from the MAC CE, the M value may be a value larger than or equal to 31 if a maximum value of $T_A$ is larger than 63 and the M value may be a value equal to or smaller than 31 if the maximum value of $T_A$ is smaller than 63, and the UE may determine the updated $N_{TA}$ value $N_{TA\_new}$ on the basis thereof.

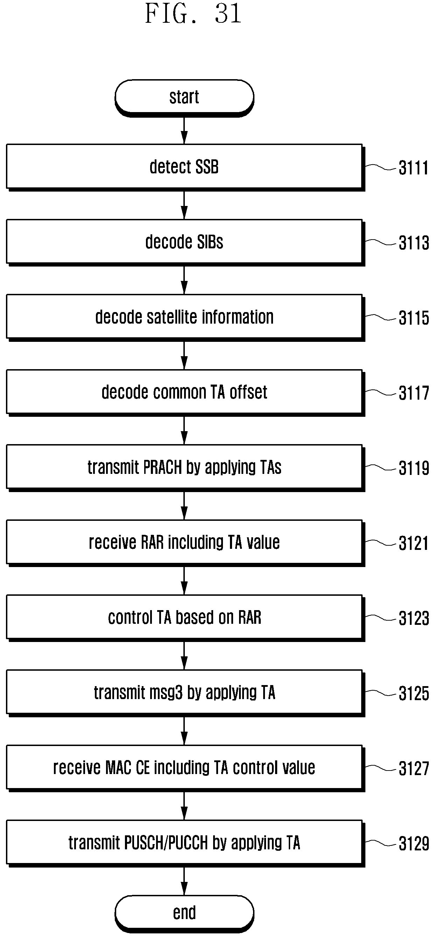

FIG. 31 is a diagram schematically illustrating another example of operation process of a UE in a communication system according to an embodiment of the disclosure.

The UE may perform an initial access procedure according to a process described with reference to FIG. 31 and determine TA after performing the initial access procedure, which is described below in detail.

First, in operation 3111, the UE may detect a synchronization signal and PBCH block (SSB) received from the base station.

In operation 3113, the UE may decode system information blocks (SIBs), based on the detected SSB. The UE may detect information on random access channel (RACH) resources by decoding the SIBs.

In operation 3115, the UE may obtain (or decode) satellite information by decoding the SIBs. According to an embodiment of the disclosure, the satellite information may include at least one of various parameters, such as location information of the satellite. In operation 3115, the UE may obtain a UE-specific TA correction value, for example, $N_{TA,UE\text{-}specific}$, based on the locations (or reference location) of the UE and satellite, based on the obtained location information.

In operation 3117, the UE may obtain (or decode) a common TA offset, for example, $N_{TA,common}$ by decoding the SIBs.

In operation 3119, the UE may calculate TAs based on $N_{TA,UE\text{-}specific}$ and $N_{TA,common}$ and transmit a PRACH to the base station by applying the calculated TAs.

In operation 3121, the UE may receive an RAR including a TA value in response to transmission of the PRACH.

In operation 3123, the UE may control TA, based on the received RAR.

In operation 3125, the UE may transmit msg3 to the base station by applying TA. msg3 is a part of the random access procedure, and may indicate a message which includes a C-RNTI MAC CE or a common control channel (CCCH) SDU and is transmitted in the uplink shared channel (UL-SCH), and may be first scheduled transmission of the random access procedure.

In operation 3127, the UE may receive a MAC CE including the TA control value from the base station.

In operation 3129, the UE may apply TA, based on the TA control value included in the MAC CE and transmit a PUSCH and/or PUCCH.

The operation process of the UE as described with reference to FIG. 31 , that is, the process of performing the initial access procedure and determining TA after performing the initial access procedure may be compared to an operation process of the UE according to another embodiment of the disclosure summarized as shown in Table 24 below.

[Table 24]

| UE operation process | UE operation process based on FIG. 31 |
|---|---|
| 1. Detect SSB | 1. Detect SSB |

(continued)

| UE operation process | UE operation process based on FIG. 31 |
|---|---|
| 2. Decode SIBs (detect RACH resource information) | 2. Decode SIBs (detect RACH resource information) |
| 3. Transmit PRACH | 3. Decode satellite information (location information or the like) and obtain NTA, UE-specific |
| 4. Receive RAR including TA value | |
| 5. Control TA on the basis of RAR | 4. Decode common TA offset and obtain NTA.common |
| 6. Transmit msg3 by applying TA | 5. Transmit PRACH by applying TAs |
| 7. Receive MAC CE including TA control value | 6. Receive RAR including TA value |
| 8. Transmit PUSCH/PUCCH by applying TA, based on TA control value | 7. Control TA, based on RAR |
| | 8. Transmit msg3 by applying TA |
| | 9. Receive MAC CE including TA control value |
| | 10. Transmit PUSCH/PUCCH by applying TA |

Further, the order of some operations in the operation process of the UE described with reference to FIG. 31 may be changed, and for example, the order of the operation of decoding satellite information and the operation of decoding the common TA offset may be changed.

Although the operation process of the UE in the communication system according to various embodiments of the disclosure has been described with reference to FIG. 31, it should be noted that various modifications may be made with respect to FIG. 31. For example, consecutive steps are illustrated in FIG. 31, but the operations described in FIG. 31 may overlap each other or may be performed in parallel, the order thereof may be changed, or one or more operations may be performed several times apparently.

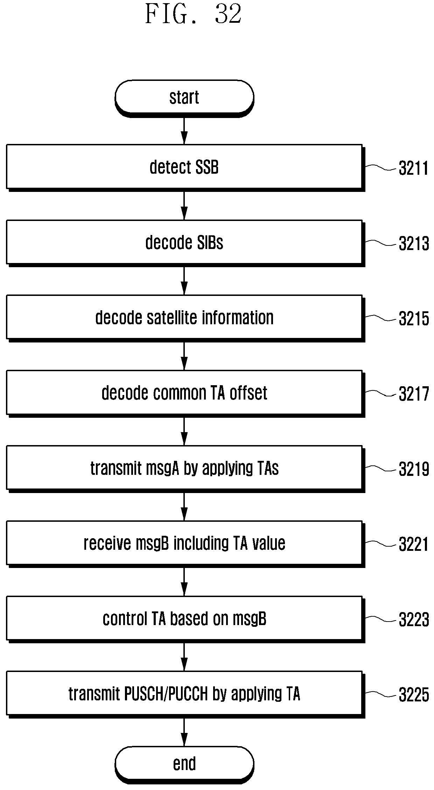

FIG. 32 is a diagram schematically illustrating another example of operation process of a UE in a communication system according to an embodiment of the disclosure.

The UE may perform an initial access procedure according to a process described with reference to FIG. 32 and determine TA after performing the initial access procedure, which is described below in detail. Particularly, the operation process of the UE illustrated in FIG. 32 may be an operation process of the UE, based on a random access procedure for a 2-step RA type while FIG. 31 illustrates the operation process of the UE, based on the random access procedure for a 4-step random access (RA) type.

First, in operation 3211, the UE detects an SSB received from the base station. In operation 3213, the UE decodes SIBs, based on the detected SSB. Here, the UE may obtain information on RACH resources by decoding the SIBs.

In operation 3215, the UE may obtain (or decode) satellite information by decoding the SIBs. According to an embodiment of the disclosure, the satellite information may include at least one of various parameters, such as location information of the satellite. In operation 3215, the UE may obtain a UE-specific TA correction value, for example, $N_{TA,UE-specific}$ based on the locations (or reference location) of the UE and satellite, based on the decoded satellite information.

In operation 3217, the UE may obtain (or decode) a common TA offset, for example, $N_{TA,common}$ by decoding the SIBs.

In operation 3219, the UE may calculate TAs, based on $N_{TA,UE-specific}$ and $N_{TA,common}$ and transmit msgA to the base station by applying the calculated TAs. According to an embodiment of the disclosure, msgA may be transmission of a preamble and payload in the random access procedure for the 2-step random access (RA) type.

In operation 3221, the UE may receive msgB including the TA value from the base station. According to an embodiment of the disclosure, msgB is a response to msgA in the random access procedure for the 2-step RA type and may include a response(s) to contention resolution, fallback indication(s), and backoff indication.

In operation 3223, the UE may control TA, based on the TA control value included in msgB.

In operation 3225, the UE may transmit a PUSCH and/or PUCCH by applying the controlled TA.

The operation process of the UE as described with reference to FIG. 32, that is, the process of performing the initial access procedure and determining TA after performing the initial access procedure may be compared to an operation process of the UE according to another embodiment of the disclosure summarized as shown in Table 25 below.

[Table 25]

| UE operation process | UE operation process based on FIG. 32 |
|---|---|
| 1. Detect SSB<br>2. Decode SIBs (detect RACH resource information)<br>3. Transmit MsgA (PRACH + Msg3)<br>4. Receive MsgB including TA value<br>5. Control TA on the basis of MsgB<br><br>6. Transmit PUCCH/PUSCH by applying TA | 1. Detect SSB<br>2. Decode SIBs (detect RACH resource information)<br>3. Decode satellite information (location information or the like) and obtain NTA, UE-specific<br>4. Decode common TA offset and obtain NTA.common<br>5. Transmit MsgA by applying TAs<br>6. Receive MsgB including TA value<br>7. Control TA, based on MsgB<br>8. Transmit PUSCH/PUCCH by applying TA |

Further, the order of some operations in the operation process of the UE described with reference to FIG. 32 may be changed, and for example, the order of the operation of decoding satellite information and the operation of decoding the common TA offset may be changed.

Meanwhile, although the operation process of the UE in the communication system according to various embodiments of the disclosure has been described with reference to FIG. 32, it should be noted that various modifications may be made with respect to FIG. 32. For example, consecutive operations are illustrated in FIG. 32, but the operations of FIG. 32 may overlap each other or may be performed in parallel, the order thereof may be changed, or one or more operations may be performed several times.

Meanwhile, $N_{TA,UE-specific}$ used in embodiments of the disclosure is a value calculated and applied by the UE. Accordingly, the base station may not know the value of $N_{TA,UE-specific}$ calculated by the UE. Further, the value of $N_{TA,UE-specific}$ calculated by the UE may change over time due to movement of the UE or the satellite.

Therefore, in embodiments of the disclosure, the base station may need to control TA of the UE in consideration of the value of $N_{TA,UE-specific}$ which may change over time, and thus the UE may need to configure a time point to update the value of $N_{TA,UE-specific}$. Accordingly, the UE may update the value of $N_{TA,UE-specific}$, based on one of the following methods, for example, method 1-1 to method 1-6 or a method of combining at least two of method 1-1 to method 1-6.

- Method 1-1: The UE always updates $N_{TA,UE-specific}$ at every time point at which the SIB including satellite information (e.g., including satellite information and the like) is received. Method 1-1 may be applied to a case in which the UE determines that the SIB is received from the base station or a case in which a paging signal indicating an SIB update is received from the base station.

- Method 1-2: The base station may separately indicate a change rate of TA, for example, $N_{TA,UE-specific}$, and configure a period and an offset for calculating the TA value again according to the change rate of the TA, for example, updating the TA value. In this case, the UE may update the TA, for example, $N_{TA,UE-specific}$ at a time point determined according to the period and the offset, and an amount of the TA updated by the UE may be determined according to the change rate of the TA. In various embodiments of the disclosure, the base station may indicate the change rate of the TA, based on an explicit method or an implicit method.

- Method 1-3: The base station may configure an update period and offset for updating $N_{TA,UE-specific}$ by the UE, based on the location of the satellite and the location of the UE. In this case, the UE may update the TA at the corresponding time point determined according to the update period and offset configured by the base station. In various embodiments of the disclosure, the base station may indicate the update period and offset, based on an explicit method or an implicit method.

- Method 1-4: The UE may always update and apply $N_{TA,UE-specific}$ at a corresponding time point, for example, at a corresponding slot time point in every case of at least some cases in which uplink transmission (e.g., PUCCH/PUSCH, PRACH, and SRS transmission) is performed (possible in both in every performance case, according to a regular period, and at an irregular performance time point).

- Method 1-5: The UE updates $N_{TA,UE-specific}$, based on a time point at which a TA command transmitted by the base station through a MAC CE expires. For example, the UE updates $N_{TA,UE-specific}$ at the time point at which TA expires. The expiration of TA command may refer to a timer value reaching a specific time point, based on a timer for the TA command. The timer for the TA command may be configured as timeAlignmentTimer and may be a parameter indicating how long the uplink time is synchronized. When receiving a new TA command, the UE may start or restart timeAlignmentTimer. When timeAlignmentTimer expires, the UE may empty an HARQ buffer and newly make an RRC configuration or the like.

- Method 1-6: A new timer timeAlignmentTimer_UEspecific related to $N_{TA,UE-specific}$ has been introduced, and the UE may update $N_{TA,UE-specific}$, based on the new timer timeAlignmentTimer_UEspecific. timeAlignmentTimer_UEspecific may start or restart in case that the UE newly calculates $N_{TA,UE-specific}$ or information on $N_{TA,UE-specific}$ is transmitted to the base station. When timeAlignmentTimer_UEspecific expires, the UE may newly calculate $N_{TA,UE-specific}$ to update the same, configure $N_{TA,UE-specific}$ as 0, or perform PRACH transmission.

[Second Embodiment]

The second embodiment provides a method and device for transferring (reporting) a timing advance (TA) value which the UE is applying or has applied, to the base station or the satellite. In the disclosure, the satellite may include an object located high above the ground and correspond to the concept including an aircraft, an airship, or the like.

The UE may perform an operation of transmitting, to the base station, the TA value which the UE is applying. This is to inform the base station of the applied TA value in case that the UE applies the TA value without any separate indication from the base station or to identify or determine how the UE applies the TA value indicated by the base station. For example, the operation may be performed to identify, in case that the satellite connected to the UE is changed, the TA value of the UE by the satellite newly connected to the UE. By way of example, the UE may apply the TA calculated based on the locations of the UE and the satellite by itself

The UE may use one or a combination of at least two of the following methods in order to report the TA value to the base station.

- Method 2-1: The base station may trigger a TA value report of the UE through DCI. The base station may trigger the TA value report through some bit field values of DCI or a combination of the bit field values. In case that a field indicating triggering of the TA value report is included in DCI and the field of the received DCI is configured as a specific value, the UE may understand that the TA value report is triggered. Alternatively, in case that values of one or more fields (e.g., for another purpose) included in DCI are configured as predetermined values, the UE may understand that the TA value report is triggered. The UE may transmit, to the base station, the TA value at a specific time point based on the time point at which DCI is received.
- Method 2-2: The base station may trigger a TA value report of the UE through a MAC CE. The base station may trigger the TA value report by using some bit values of the MAC CE or a value of a bit field, and the UE may transmit, to the base station, a TA value at a time point at which the MAC CE is received or a time point after a predetermined time from the time point at which the MAC CE is received.
- Method 2-3: The base station may indicate which TA value should be reported by the UE through an RRC configuration. For example, the base station may configure a period and an offset value for the TA report through higher signaling or/and a specific condition for reporting the TA value by the UE and determine a time point when the UE reports the TA value, in which case, a TA value application time which is a reference (that is, a time at which the TA value to be reported is applied, which may be referred to as a TA value reference time point) may be designated. The specific condition for reporting the TA value by the UE may be, for example, a case in which the TA value is larger than or equal to a predetermined value or a case in which the distance between the UE and the satellite is longer than or equal to a predetermined value, and the predetermined values may be information or fixed values configured through higher signaling or transmitted through the SIB or the like.
- Method 2-4: The UE may report the TA value without a separate trigger from the base station. For example, method 4 may correspond to transmission of information indicating the TA value according to the specific condition from the UE to the base station, and the specific condition (without signaling such as DCI, MAC CE, or RRC for triggering from the base station) is a condition for a time at which the TA value report is performed or a comparison result between the TA value applied by the UE and a specific threshold value or the like and may be predetermined.

According to an embodiment of the disclosure, in case that the TA value is transmitted, the UE may transmit the TA value through a physical channel such as a PUCCH or a PUSCH or may transfer TA value information to the base station through higher signaling. In a case that the UE transfers TA value information through the physical channel, resources to be used for reporting the TA value information may be configured through higher signaling.

According to an embodiment of the disclosure, the TA value report may refer to reporting a value of $T_{TA}$ or a value of $N_{TA,UE-specific}$ in the above equation. Alternatively, which one of $T_{TA}$ and $N_{TA,UE-specific}$ is reported may be configured in the UE by the base station through the SIB or higher signaling.

The reference time point at which TA value reported by the UE is determined and the time point at which the TA value is reported may be determined based on a time point at which the UE performs the TA value report, a time point at which the TA value report is triggered, and the like. For example, in case that the TA value report is triggered in slot n through DCI, the UE may report a TA value applied or calculated in slot n-K or may report the TA value to the base station in slot n+N. K and N may be values determined according to subcarrier spacing or a UE capability, a DL/UL configuration of the slot, and a PUCCH resource configuration, etc., respectively.

According to an embodiment of the disclosure, K may be 0. K=0 may refer to the TA value being reported by the UE based on a time point at which a TA value report triggering signal is received. Further, K may be smaller than 0 and, in this case, for example, report information may be generated and reported by pre-calculating the TA value at the time point at which the UE reports the TA value. In addition, K may be an integer larger than 0. This may refer to the UE reporting the TA value at a time point earlier than the time point at which the UE reports the TA value (for example, slot n+N), which may be considered that the TA value is reported at the earlier time point since a time is needed to encode information to be reported by the UE and prepare transmission.

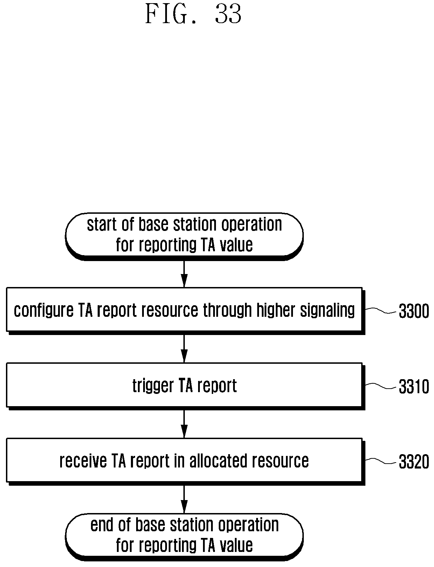

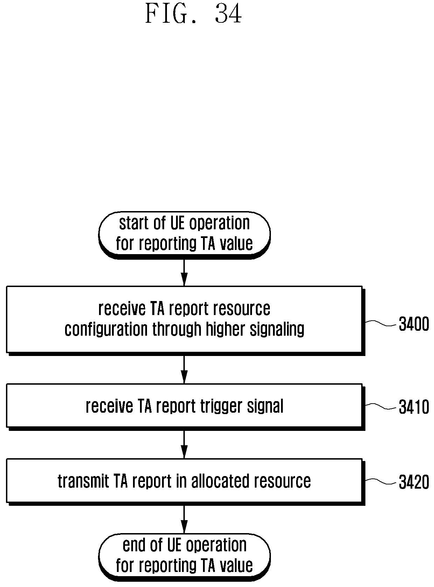

FIGS. 33 and 34 are diagrams illustrating example operations of a base station and UE for TA value report of the UE, according to an embodiment of the disclosure. In reporting the TA value according to the disclosure, the TA value applied by the UE may be indicated in units of ms, slots, or symbols, or may be provided as information including a value after a decimal point rather than an integer. The TA value report according to the disclosure may include an absolute value of the TA, and may include a TA value previously indicated by the base station, a relative TA value except for a predetermined TA value, a change in the TA value (e.g., a TA change for a predetermined time), or the like.

FIG. 33 is a diagram illustrating an operation of the base station.

The base station may transmit configuration information related to a TA report through higher signaling (operation 3300). The configuration information related to the TA report may include, for example, at least one piece of information for configuring the TA report, such as a period and offset for performing the TA report, a TA report trigger condition, TA value reference time point information, a type of TA information to be reported, resource configuration information for performing the TA report, and the like.

The base station may trigger the TA report to the UE (operation 3310). The trigger may be performed through, for example, higher signaling or DCI as the above-described specific content or may be omitted.

The base station may receive the TA report transmitted by the UE according to transmitted configuration information (operation 3320).

FIG. 34 is a diagram illustrating an operation of the UE.

The UE may receive configuration information related to the TA report transmitted by the base station through higher signaling (operation 3400). The configuration information may include, for example, at least one piece of information for configuring the TA report, such as a period and offset for performing the TA report, a TA report trigger condition, TA value reference time point information, a type of TA information to be reported, resource configuration information for performing the TA report, and the like.

The UE may receive a signal for triggering the TA report transmitted by the base station (operation 3410). The trigger may be performed through, for example, higher signaling or DCI as the above-described specific content or may be omitted.

The UE transmits the TA report according to the received configuration information (3420). For example, in case of receiving TA report resource information, the UE transmits the TA report in the configured resources.

The order of respective operations disclosed in FIG. 33 and FIG. 34 may be changed and applied, or another operation may be added or omitted.

[Third Embodiment]

The third embodiment provides a method by which the UE calculates, determines, and reports $N_{TA,UE\text{-}specific}$ described through the first embodiment and the second embodiment. A value of $N_{TA,UE\text{-}specific}$ may be calculated based on the distance between the UE and a non-terrestrial network (NTN) satellite. The UE may calculate its own location by receiving signals from navigation satellites in a satellite navigation system, and the navigation satellite may be different from the NTN satellite. The UE is of course not limited to the above method in calculating its own location, and the UE's location may also be transmitted from another entity.

According to an embodiment of the disclosure, the UE may estimate a delay time between the satellite and the UE, based on the location of the UE and the location of the satellite, and correct the estimated delay time value by itself to perform uplink transmission. For example, the satellite may transmit information on the location of the satellite through broadcast information, and the UE may receive the information on the location of the satellite transmitted by the satellite and compare the information on the location with its own location. The location of the UE may be known using one of various types of global positioning systems (GPSs) or using information from the base station independently or a combination thereof. The UE may calculate an uplink transmission time by estimating a time required for a radio wave to be transferred to the satellite through the comparison.

For example, in case that the UE receives a signal in a slot n via a downlink at a specific time point and needs to perform an uplink transmission corresponding to the signal in a slot n+k, the uplink transmission may be transmitted earlier than the time point of slot n+k by 2*Td.

According to an embodiment of the disclosure, the delay time Td may be a delay time from the UE to the satellite, calculated based on location information of the satellite and UE or may be a value corresponding thereto. The delay time Td may be a value obtained by dividing the distance between the UE and the satellite or a value corresponding thereto by the velocity of light or a value corresponding thereto. For example, the location of the satellite may be a value calculated based on slot n+k in which the UE performs uplink transmission. This is because the location of the satellite in slot n and the location of the satellite in slot n+k may be different depending on movement of the satellite.

A propagation delay time equal to or less than 1 ms may be generated in the terrestrial network in consideration of the distance to the base station within a maximum of about 100 km, but the distance to the satellite may be thousands of km and the distance between the satellite and the base station may also be thousands of km in the satellite network and thus a delay time in the satellite network may be significantly longer than that of the terrestrial network.

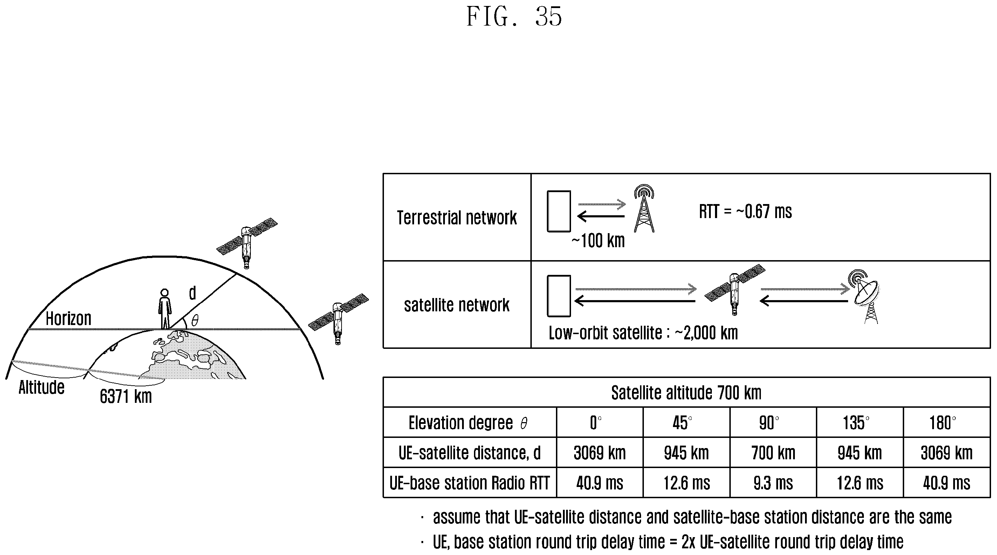

FIG. 35 is a diagram illustrating an example of a difference of propagation delay between a terrestrial network and a satellite network, according to an embodiment of the disclosure.

The delay time may vary depending on altitude and an elevation angle of the satellite in satellite network communication, and FIG. 35 illustrates the distance between the UE and the satellite and a propagation round trip time according to the elevation angle when the altitude of the satellite is 700 km. In a case of the satellite network, a low earth orbit satellite is assumed, and a radio round trip time (radio RTT) (possibly including a round trip time spent for transmission of a signal between transceivers and a processing time in a counterpart node) may be from 40.9 ms to 9.3 ms in case that an elevation angle falls within 0 to 180 degrees. According to an embodiment of the disclosure, this delay time is only an example and may vary depending on altitude and orbit of the satellite, and, for example, the delay time may further increase on average in case that altitude is high.

In the terrestrial network, since a maximum delay time is within 1 or 2 ms, it is possible to match slot timing at which the base station performs downlink transmission and slot timing at which the base station performs uplink reception through timing advance provided in the LTE and 5G NR systems (i.e., indexes of the DL slot and the UL slot may match each other). That is, when the UE advances uplink transmission by a value of timing advance indicated by the base station from the downlink time point, a time point at which an uplink signal transmitted by the UE is received by the base station may become identical to the downlink time point of the base station. On the other hand, in the satellite network, it is impossible to match slot timing at which the base station performs downlink transmission and slot timing at which the base station performs uplink reception through timing advance provided in the conventional LTE and 5G NR systems. This is because the propagation delay time generated in the satellite network is as large as tens of ms and thus is larger than a maximum value of timing advance provided in the conventional LTE and 5G NR systems

A satellite navigation system may also be called a global navigation satellite system (GNSS), and the GNSS may include, for example, a GPS in the US, a GLONASS in Russia, Galileo in EU, Beidou in China, and the like, but is of course not limited the above examples. The GNSS may include a regional navigation satellite system (RNSS), and the RNSS may include, for example, IRNSS in India, QZSS in Japan, KPS in Korea, and the like. Meanwhile, a signal transmitted in the GNSS may include at least one of supplementary navigation information, a normal operation state of a satellite, a satellite time, satellite orbital power, a satellite altitude, a reference time, and information on various compensation documents

Meanwhile, in various example embodiments of the disclosure, the NTN satellite may be a communication satellite serving to transmit a signal for the connection between the UE and the base station. Further, in various embodiments of the disclosure, the GNSS satellite may be a satellite transmitting signals of a satellite navigation system.

Meanwhile, the UE may receive a signal from each of one or more GNSS satellites, calculate the location of the UE itself, based on the signal received from each of the one or more GNSS satellites, and identify a reference time in each of the one or more GNSS satellites. In case that the UE may calculate a plurality of locations of the UE, based on the signals received from a plurality of GNSS satellites, the UE may calculate the real location of the UE, based on an average of the plurality of locations, a location corresponding to a received signal having the highest strength among the plurality of locations, an average value of the plurality of locations based on a signal strength (e.g., a method for applying a weighted value in the location corresponding to the signal having the highest signal strength), and the like. Here, a scheme in which the UE calculates the location of the UE, based on the signals received from the plurality of GNSS satellites may be implemented in various forms, and a detailed description thereof is omitted.

In various embodiments of the disclosure, a time obtained from the GNSS or a time of the base station transferred by the base station may be, for example, based on a coordinated universal time (UTC), which is based on a time since 00:00:00 on Jan. 1, 1900 of the Gregorian calendar. This may vary depending on a type of the GNSS system, and the reference time as shown in Table 26 below may be used.

[Table 26]

> - *gnss-DayNumber*
> - This field specifies the sequential number of days (with day count starting at 0) from the origin of the GNSS System Time as follows:
> - GPS, QZSS, SBAS – Days from January 6th 1980 00:00:00 UTC (USNO);
> - Galileo – Days from Galileo System Time (GST) start epoch, defined as 13 seconds before midnight between 21st August and 22nd August 1999; i.e., GST was equal to 13 seconds at August 22nd 1999 00:00:00 UTC;
> - GLONASS – Days from December 31st 1995 21:00:00 UTC (SU), which is local UTC Moscow January 1st 1996 00:00:00, defined as UTC(SU) + 3 hours in [9];
> - BDS – Days from January 1st 2006 00:00:00 UTC (NTSC).
> - NavIC – Days from NavIC System Time start epoch, defined as 13 seconds before midnight between 21st August and 22nd August 1999; i.e., NavIC System Time was equal to 00:00:00 at August 21st, 1999 23:55:47 UTC (BIPM).

In Table 26 above, NavIC may refer to NAVigation with Indian Constellation, QZS may refer to Quasi Zenith Satellite, QZSS may refer to Quasi-Zenith Satellite System, QZST may refer to Quasi-Zenith System Time, SBAS may refer to Space Based Augmentation System, and BDS may refer to BeiDou Navigation Satellite System.

Furthermore, the base station may indicate a type of the GNSS system which is a reference of the location or time information used by the base station itself through the satellite, and, for example, indications as shown in Table 27 below may be used.

[Table 27]

| Value of *gnss-TO-ID* | Indication |
|---|---|
| 1 | GPS |
| 2 | Galileo |
| 3 | QZSS |
| 4 | GLONASS |
| 5 | BDS |
| 6 | NavIC |
| 7-15 | reserved |

As described above, the UE may calculate a time spent while the signal is transferred from an NTN satellite to the UE, based on the location of the UE calculated by the UE and the location of the NTN satellite received from the NTN satellite and determine a TA value based on the time. In case that the UE determines the TA value, in case that a distance from the NTN satellite to the base station on the ground or the corresponding signal is transferred to the base station on the ground via another NTN satellite, the UE may also consider the distance from the NTN satellite to another NTN satellite

Unlike this, the UE may obtain reference time information from information transmitted by the GNSS satellite, compare time information transmitted by the NTN satellite with the reference time information obtained from the GNSS satellite, and calculate a time (propagation delay) required from the NTN satellite to the UE, based on the comparison result.

The location and time information of the NTN satellite may be transmitted by the base station to the UE through the SIB. This may be directly transmitted by the NTN satellite.

Assuming that the distance between the UE and the satellite or a value corresponding thereto is $d_{UE,sat}$ (the unit is km) and the velocity of light is $v_c$ (the unit is km/sec), $N_{TA,UE-specific}$ may be determined based on $d_{UE,sat}/v_c$ (the unit of sec).

For example, it may be determined and applied as $$N_{\mathrm{TA,UE-specific}} = \left\lceil \frac{d_{UE,sat}}{v_c} \cdot \frac{1}{T_c} \right\rceil$$ , which is a method for determining $N_{TA,UE-specific}$ by making a value of $\dfrac{d_{UE,sat}}{v_c} \cdot \dfrac{1}{T_c}$ into an integer. Alternatively/additionally, the UE may determine $N_{TA,UE-specific}$ by a method such as a combination of at least one of the following three methods and report $N_{TA,UE-specific}$ information to the base station.

- Method 3-1: The UE may determine as $N_{TA,UE-specific}=(D+a)/T_C$. D is an integer, and a is a decimal larger than or equal to 0 and smaller than 1. Here, $D = \left\lceil \dfrac{d_{UE,sat}}{v_c} \right\rceil$ and, $\alpha = \dfrac{d_{UE,sat}}{v_c} - \left\lceil \dfrac{d_{UE,sat}}{v_c} \right\rceil$. Method 3-1 may be a method for separating a propagation delay between the UE and the satellite into an integer part and a decimal part and reporting only the integer or a value corresponding thereto or separately reporting the integer or the decimal or values corresponding thereto. By using the method, it is possible to reduce the number of bits required for reporting the propagation delay. Although it has been described above that the decimal part becomes an integer multiple of $T_c$, the decimal part may be determined to be a multiple of $16 \cdot 64 \cdot T_c/2^\mu$. In the above, $\mu$ may refer to a current carrier, a BWP, or subcarrier spacing of a relevant CORESET. Alternatively, $\mu$ may be a value used for a transmission/reception signal such as a PDSCH or PUSCH for transmission/reception. Here, $\mu$=0, 1, 2, 3, 4, 5 may be values corresponding to subcarrier spacing 15 kHz, 30 kHz, 60 kHz, 120 kHz, 240 kHz, and 480 kHz, respectively. Alternatively, $\mu$ may be configured by the based station to determine $N_{TA,UE-specific}$ through higher signaling. Alternatively, a fixed value may be used for $\mu$, and for example, one of 0, 1, 2, 3, 4, 5 may be fixedly used as $\mu$=5.

- Method 3-2: The UE may determine so that $N_{TA,UE-specific}$ is a multiple of $16 \cdot 64/2^\mu$. It may be determined that $N_{TA,UE-specific} = \left\lceil \dfrac{d_{UE,sat}}{v_c} \cdot \dfrac{1}{16 \cdot 64 \cdot T_c/2^\mu} \right\rceil \cdot 16 \cdot 64/2^\mu$. In the disclosure, $\lfloor X \rfloor$ may refer to a maximum integer which is not larger than x and may round the number down at the integer unit, that is, drop the decimal value. It is of course not limited to the above examples, and in the disclosure, instead of rounding down using $\lfloor X \rfloor$, round up or round off from the decimal point may be used. That is, in the disclosure, the floor function, the ceiling function or the round function may be interchanged with each other. In the above, $\mu$ may refer to a current carrier, a BWP, an SIB, or subcarrier spacing of a relevant CORESET. Alternatively, $\mu$ may be a value used for a transmission/reception signal such as a PDSCH or PUSCH for transmission/reception. Here, $\mu$=0, 1, 2, 3, 4, 5 may be values corresponding to subcarrier spacing 15 kHz, 30 kHz, 60 kHz, 120 kHz, 240 kHz, and 480 kHz, respectively. Alternatively, $\mu$ may be configured by the base station to determine $N_{TA,UE-specific}$ through higher signaling. Alternatively, a fixed value may be used for $\mu$, and for example, $\mu$=5 may be fixedly used. Alternatively, $\mu$ to be used for calculating $N_{TA,UE-specific}$ may be separately configured by the base station through the SIB or higher signaling.

- Method 3-3: It may be determined that $N_{TA,UE-specific} = N_{A,UE-specific} \cdot 16 \cdot 64/2^\mu$, in the above, $N_{A,UE-specific}$ may be determined as an integer which makes $N_{A,UE-specific}$ is nearest to $d_{UE,sat}/(V_c \cdot T_c)$. Alternatively, it may determine to a minimum integer making that $N_{\mathrm{TA,UE-specific}} \geq \dfrac{d_{UE,sat}}{v_c \cdot T_c}$ is satisfied or a maximum integer making that $N_{\mathrm{TA,UE-specific}} \leq \dfrac{d_{UE,sat}}{v_c \cdot T_c}$ is satisfied.

Method 3-4: The UE may be determined to $N_{TA,UE-specific}$=0 according to a base station configuration. This may be because UEs within the coverage in a specific beam of the satellite have little difference in propagation delays generated in a link (possibly called a service link) between the UEs and the satellite and thus uplink time synchronization may be performed by the conventional TA mechanism and $N_{TA,common}$. The base station may configure, through the SIB, whether the UE configures the value of $N_{TA,UE\text{-}specific}$ as $N_{TA,UE\text{-}specific}=0$ or the UE uses the value of $N_{TA,UE\text{-}specific}$ calculated based on the locations of the satellite and UE and the velocity of light according to a GNSS signal. For another example, the base station may configure, through the SIB or separate RRC signaling, whether the UE continuously uses the value of $N_{TA,UE\text{-}specific}$ calculated based on a time point at which a PRACH preamble is transmitted based on the locations of the satellite and UE and the velocity of light according to the GNSS signal until there is a separate indication or configuration or uses a newly calculated value of $N_{TA,UE\text{-}specific}$ at every uplink transmission time point. That is, the value of $N_{TA,UE\text{-}specific}$ may be determined as described below through Equation 5 above.

> $N_{TA,UE\text{-}specific}$ is UE self-estimated TA to pre-compensate for the service link delay if configured, and $N_{TA,UE\text{-}specific}$ is 0 otherwise.

Method 3-1 to method 3-4 are merely example methods for determining $N_{TA,UE\text{-}specific}$, based on the distance between the UE and the satellite (or a value corresponding thereto) and the velocity of light, and there may be more various methods. For example, generally, in a case that the value of $N_{TA,UE\text{-}specific}$ is defined as an integer or an expression based on an integer is defined, $\left\lceil \frac{h_{sat}}{v_c} \cdot \frac{1}{T_c} \cdot \frac{1}{K} \right\rceil \cdot K$ , $D = \left\lceil \frac{d_{UE,sat}}{v_c} \cdot \frac{1}{K} \right\rceil \cdot K$ , or the like may be generally expressed to indicate the value of K as a multiple of a specific integer or rational number. Here, K may be a predetermined value or a value determined by signaling parameters. Method 2 refers to the case of $K=16\cdot64/2^{\mu}$, and K may be determined according to at least one of the system parameters $\mu$ and $T_c$. The scheme has an advantage of expressing more various values through the same bit signaling instead of having a characteristic of sparse granularity of values of $N_{TA,UE\text{-}specific}$.

Furthermore, in each of the methods, the values may be determined based on round up ( $\lceil X \rceil$ ) or round off Round (x) operations from the decimal place instead of using the round down operation such as $\lfloor X \rfloor$

[Fourth Embodiment]

The fourth example embodiment provides a method by which the base station transfers $N_{TA,common}$ described through the first embodiment and the second embodiment to the UE and the UE performs calculations and application.
Hereinafter, the methods are to transfer $N_{TA,common}$ information by the base station to the UE using configuration and indication, and one or more of the methods may be combined and applied.

- Method 4-1: The base station may configure one offset value in the UE through RRC signaling. The value configured through RRC signaling is $N_{A,common}$ and $N_{TA,common}$ may be determined based on same.
- Method 4-2: The base station may indicate one offset value in the UE through a MAC CE. The value configured through MAC CE is $T_{A,common}$, and $N_{TA,common}$ may be determined based on the same. The method has an advantage compared to method 4-1 in that the base station and UE may define a time point at which the base station and UE apply $N_{TA,common}$. By way of example, $N_{TA,common}$ may be applied after a predetermined time based on a time point at which the MAC CE is received or a time point at which ACK is transmitted in response of reception of the MAC CE. For example, the base station may transfer $N_{A,common}$ in unit of msec through a 8-bit MAC CE and indicate 0 ms to 255 ms. Here, $N_{TA,common}$ is determined as $N_{TA,common}=T_{A,common}/(1000\cdot T_c)$
- Method 4-3: The base station may configure one or more offset values in the UE through higher layer signaling. Alternatively, the values may be pre-configured. The configured values may become candidate values of $T_{A,common}$, and the base station may indicate one of the candidate values through a MAC CE.
- Method 4-4: The base station may configure one offset value in the UE through an SIB. The value configured through the SIB is $T_{A,common}$, and $N_{TA,common}$ may be determined based on the same. The UE calculates and applies TA by using the value of $N_{TA,common}$ when transmitting a PRACH preamble in an initial access process. Thereafter, $\Delta T_{A,common}$ may be indicated to the UE through a MAC CE, and the UE may calculate an amount of the change in $N_{TA,common}$ using the same, thereby calculating as $N_{TA,common(new)}= N_{TA,common\ (old)}+(\Delta T_{A,common}-x) \cdot y$. In the above, x and y may be determined according to the number of bits and the unit for transfer of $\Delta N_{A,common}$. For example, it may be determined that $N_{TA,common(new)}= N_{TA,common(old)}+(\Delta T_{A,common}-M) \cdot 16 \cdot 64/2^{\mu}$. Here, a value of M may be 31, or may be a value larger than or equal to 31 in case that a maximum value of $\Delta T_{A,common}$ which may be indicated through the MAC CE is larger than 63, and may be a value equal to or smaller than 31 in case that the maximum value of $\Delta T_{A,common}$ is smaller than 63.

- Method 4-5: The base station may indicate one offset value in the UE through a MAC CE. The configured value is $T_{A,common}$, and $N_{TA,common}$ may be determined based on the same. The method has an advantage compared to method 4-1 in that time points at which the base station and the UE apply $N_{TA,common}$ may be defined. By way of example, $N_{TA,common}$ may be applied after a predetermined time based on a time point at which the MAC CE is received or a time point at which ACK is transmitted in response of reception of the MAC CE. For example, the base station may transmit $T_{A,common}$ in units of $16 \cdot 64 \cdot T_c/2^\mu$ sec through a MAC CE of about 19 bits or 24 bits. In this case, $N_{TA,common}$ is determined as $N_{TA,common}=T_{A,common} \ 16 \cdot 64/2^\mu$. The number of bits of the MAC CE is merely an example and another value may be applied

- Method 4-6: The base station may indicate one offset value in the UE through a MAC CE. The configured value is $T_{A,common}$, and accordingly, $N_{TA,common}$ may be determined based on an altitude of the satellite. The method has an advantage compared to method 4-5 in that the number of bits to be transferred may be reduced. For example, the base station may transfer $T_{A,common}$ in units of $16 \cdot 64 \cdot T_c/2^\mu$ sec through a MAC CE of about 16 bits. In this case, $N_{TA,common}$

is determined as
$$N_{TA,common} \ = \ \frac{h_{sat}}{v_c} \cdot \frac{1}{T_c} +$$
$T_{A,common} \cdot 16 \cdot 64/2^\mu$. In the above, $h_{sat}$ is an altitude of the satellite. This may mean that in case that the satellite is a specific altitude, the minimum distance between the UE and the satellite is the specific altitude and thus the base station signals only the remaining additional distance through $T_{A,common}$. The number of bits of the MAC CE is merely an example and another value may be applied.

In the above equation, a value of $\frac{h_{sat}}{v_c} \cdot \frac{1}{T_c}$ may be defined to be an integer or a rational number through a method similar to the third embodiment. For example, various integer or rational number schemes may be applied based on a value of $h_{sat}$ rather than a value of $d_{UE,sat}$ in the third embodiment as well as the integer or rational number using the round down operation such as $\left\lfloor \frac{h_{sat}}{v_c} \cdot \frac{1}{T_c} \right\rfloor$ or $\left\lfloor \frac{h_{sat}}{v_c} \cdot \frac{1}{T_c} \cdot \frac{1}{K} \right\rfloor \cdot K$. Apparently, an integer scheme or a rational number scheme similar to the above description may be applied to a total value of $\frac{h_{sat}}{v_c} \cdot \frac{1}{T_c} + T_{A,common} \cdot 16 \cdot$

$64/2^\mu$. For example, it may be defined that $N_{TA,common} = \left\{ \left\lfloor \frac{h_{sat}}{v_c} \cdot \right. \right.$

$\left. \left. \frac{1}{T_c \cdot 16 \cdot 64/2^\mu} \right\rfloor + T_{A,common} \right\} \cdot 16 \cdot 64/2^\mu$ and, this case is the same scheme as the case considering

$K=16 \cdot 64/2^\mu$ in $\left\lfloor \frac{h_{sat}}{v_c} \cdot \frac{1}{T_c} \cdot \frac{1}{K} \right\rfloor \cdot K$. Further, for the operation used for the integer or rational number scheme, various other operations such as round up and round off as well as round down may be applied.

- Method 4-7: The base station may transfer the value of $N_{TA,common}$ at the time point of reception thereof through the SIB and information on a rate of the change in $N_{TA,common}$. The value of $N_{TA,common}$ and information on a rate of the change in $N_{TA,common}$ may be transferred to a specific UE through RRC signaling rather than the SIB, and the transfer method may vary depending on a state of the UE (RRC_idle, RRC_inactive, RRC_connected).

The information on the rate of the change in $N_{TA,common}$ may be transferred through one, two, or three parameters by the SIB. By way of example, assuming that the information on the rate of change is transferred through one parameter A, a time point at which $N_{TA,common}$ is transferred through the SIB is t1, and a time point at which uplink transmission is performed is t2, $N_{TA,common(t2)}$ which is $N_{TA,common}$ to be applied by the UE at t2 may be calculated as $N_{TA,common(t2)} =N_{TA,common(t1)}+(t2-t1) \cdot A$. Here, units of t1 and t2 may be msec, and the unit of A may be Tc/msec. That is, A may indicate how many Tc per 1 msec the value of $N_{TA,common}$ has changed. For another example, assuming that the information on the rate of change is transferred through two parameters A and B, a time point at which $N_{TA,common}$ is transferred through the SIB is t1, and a time point at which uplink transmission is performed is t2, $N_{TA,common(t2)}$ which is $N_{TA,common}$ to be applied by the UE at t2 may be calculated as $N_{TA,common(t2)}=N_{TA,common(t1)}+(t2-t1)^2 \cdot B+(t2-t1) \cdot A$. (in case that the information on the rate of the change is transferred through n parameters, it is possible to express in the form of an nth order polynomial with respect to difference t2-t1 between the two time points). Here, units of t1 and t2 may be msec, the unit of A may indicate Tc/msec, and the unit of B may be Tc/msec^2. That is, A may indicate how many Tc per 1 msec the value of $N_{TA,common}$ has changed and B may indicate how many Tc per 1 msec the rate of the change in $N_{TA,common}$ value has changed.

[Fifth Embodiment]

The fifth embodiment provides a method and device in which the base station transmits $K_{offset}$ which is a parameter for determining timing at which the UE transmits a second signal in response to a first signal transmitted by the base station to the UE.

The base station transmits the first signal and indicates a time point at which the UE transmits the second signal corresponding thereto through higher signaling and DCI. For example, a PDSCH is transmitted and HARQ-ACK feedback therefor may be indicated by an HARQ-ACK timing-related indicator of bit fields of the DCI scheduling the PDSCH. However, in the satellite communication, a delay time between the UE and the base station is very large, and thus the offset value indicated by the conventional DCI may not indicate correct timing. Accordingly, the base station may transmit $K_{offset}$ value which is an additional timing offset to the UE through the SIB, and the UE may determine transmission timing of the second signal (uplink transmission) by adding the offset $K_{offset}$.

The base station may update the $K_{offset}$ value to the UE through RRC signaling in an RRC_connected state after initial access of the UE. However, in case that the update is performed only through RRC signaling, the base station and UE may have different $K_{offset}$ during a time interval in which an RRC reconfiguration is performed. In this case, the transmission and reception of the second signal may not be correctly performed. In order to remove such an ambiguity time interval, the base station may configure a plurality of values of $K_{offset}$ in the UE and indicate one of the configured values of $K_{offset}$ through a MAC CE. Accordingly, the UE may apply the updated $K_{offset}$ value from a determined time point after the MAC CE is received.

For example, candidate values of $K_{offset}$ values may be configured according to indexes shown in Table 28 below through RRC signaling.

[Table 28]

| index | K_offset |
|---|---|
| 0 | 100 |
| 1 | 120 |
| 2 | 140 |
| 3 | 160 |
| 4 | 180 |
| 5 | 200 |
| 6 | 220 |
| 7 | 240 |

Table 28 shows an example in which $K_{offset}$ is configured at regular intervals through 8 indexes and various other configurations are possible. When values of the index i are 0, 1, 2, ... , $2^M$-1 and thus the number of values is $2^M$ (M corresponding to an integer such as 2, 3, 4, ...) and when a value of $K_{offset}$ in the case of index i is $K_{offset}$, it may be defined to have values at uniform intervals such as $K_{offset}(i) = K_{offset}(0)+(i-1)*A$ (A is a positive constant) for i>0. Of course, a value of M may be variable according to a system configuration, and a value of A may also be variably configured according to the value of M. Further, some of the indexes may be defined as a reserved field. When a maximum value of $K_{offset}$ except for the reserved field is $K_{offset}(i_{max})$, the relation of $A=(K_{offset}(i_{max}) - K_{offset}(0))/i_{max}$ may be possible.

This is of course merely an example configured of values having a uniform difference, and, generally, it may not be configured of values of uniform differences as a whole. For example, values having different differences may be configured according to an index range. (a value of $i_m$ may be simply configured as $2^{M-1}$ or generally configured as another integer value.)

$$1 \leq i < i_m,$$

$$K_{offset}(i) = K_{offset}(0) + (i - 1)*A1$$

$$i_m \leq i \leq i_{max},$$

$$K_{offset}(i) = K_{offset}(i_m) + (i - i_m)*A2$$

A1 and A2 are different positive constants, and A1 = $(K_{offset}(i_m) - K_{offset}(0))/i_m$, A2 = $(K_{offset}(i_{max}) - K_{offset}(i_m))/(i_{max} - im)$.

Thereafter, the base station may transfer an index to the UE in slot n through a MAC CE, and the UE may perform transmission of the second signal by applying $K_{offset}$ indicated in slot n+k. According to an embodiment of the disclosure, a value of k may be configured or may be determined according to subcarrier spacing.

[Sixth Embodiment]

A UE supporting a Non-Terrestrial Network (NTN) may also be able to operate in a Terrestrial Network (TN). In case that the wireless access schemes operating in the terrestrial network (e.g., 3GPP NR) and the wireless access schemes operating in the satellite network (e.g., 3GPP LTE NB-IoT) are different, the UE may be able to operate by turning on only one wireless access scheme because it is impossible for the UE to turn on the different wireless access schemes at the same time or because turning them on at the same time is disadvantageous in terms of power consumption. Turning on only the wireless access may mean driving at least one of the chips or hardware devices or software devices supporting the corresponding wireless access. In this situation, the UE may need a method to determine whether the network to be connected by the UE is an NTN or a TN.

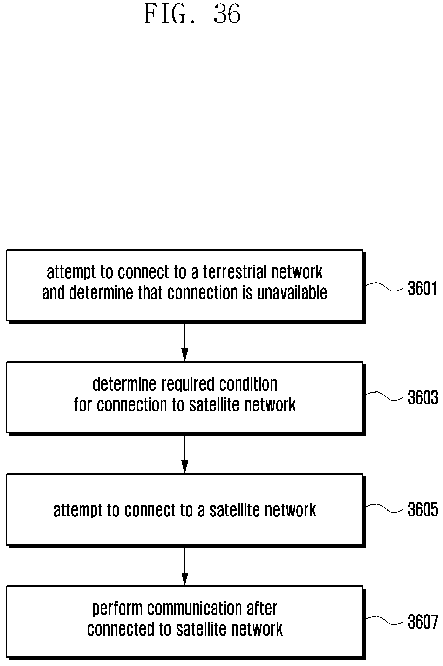

FIG. 36 is a flowchart for performing satellite network connection of a UE according to an embodiment.

In operation 3601, the UE may attempt to connect to a terrestrial network and determine that connection to the terrestrial network is not possible. The UE may be able to turn on a related wireless connection scheme with priority given to the terrestrial network. In this situation, in case that a synchronization signal or reference signal transmitted from the terrestrial network is not detected, the UE may turn off the wireless connection scheme for the terrestrial network and turn on the wireless connection scheme for the satellite network.

In operation 3603, the UE may determine a requirement for satellite network connection. This may be a determination on whether to activate the wireless connection scheme for the satellite network.

For example, in case that a synchronization signal or reference signal transmitted from the terrestrial network is not detected as in operation 3601, the UE may turn off the wireless connection scheme for the terrestrial network and turn on the wireless connection scheme for the satellite network. Here, the UE may be able to determine whether to turn on the wireless connection scheme for the satellite network through additional information determination.

For example, in a situation where the UE has hardware capable of receiving GPS signals, the wireless access scheme for the satellite network is turned on only in case that the GPS signal is caught, and the wireless access scheme for the satellite network is not turned on in case that the GPS signal is not caught. Whether the GPS signal is caught may be determined by the UE only in case that the GPS signal reception strength of the UE is greater than or equal to a certain threshold value or in case that the UE is able to determine the location information of the UE within a certain error range through the GPS signal.

In another example, the UE user may be able to independently determine whether or not to turn on the wireless access scheme for the satellite network through the UE, and conditions for activating the same may include the UE not receiving a terrestrial network signal or the UE receiving a GPS signal. If the above conditions are not satisfied, it may not be activated, making it impossible for the UE user to turn on the wireless access scheme for the satellite network.

In case that the wireless access scheme for the satellite network is turned on, in operations 3605 and 3607, the UE may perform a satellite network connection, and when the initial connection is completed and related higher information is received from the satellite network, the UE may then transmit and receive control and data information with the satellite.

The above description is a description of a case where the wireless access scheme for the terrestrial network and the wireless access scheme for the satellite network are different, but there may also be a situation where the wireless access schemes for the terrestrial network and satellite network are the same. In such a case, the above-described operation and condition determination may not be necessary.

One of the methods for the UE to distinguish between the terrestrial network and the satellite network is to determine whether satellite-related information is included through the system information (System Information Block (SIB)) received by the UE. Examples of satellite-related information may include satellite location and velocity information, the validity time of the corresponding satellite information, or the like. If the above information is not included in the system information, the UE may determine that it is a terrestrial network. In other words, if the system information received from the network to which the UE is connected includes satellite-related information, the UE may determine that the network is a satellite network, and if the system information does not include satellite-related information, the UE may determine that the network is a terrestrial network.

From the perspective of a base station or base station connected to a ground station, it may be possible to distinguish whether a UE accessing the corresponding network is a UE accessing the terrestrial network or a UE accessing the satellite network through the time (or frequency or code or preamble or sequence) resource at which the UE performs the initial connection. For example, in case that UE A performs the initial connection through resource 1 and UE B performs the initial connection through resource 2, the base station may be able to determine that UE A has performed the initial connection through the terrestrial network and UE B has performed the initial connection through the satellite network. In this case, the base station may be able to distinguish in advance between initial access resources for the terrestrial network and initial access resources for the satellite network. In addition, even if the UEs access the same satellite network, it may be possible to distinguish UEs with different capabilities through a similar method.

[Seventh Embodiment]

In the following embodiments, a method for performing DMRS bundling (or simultaneous channel estimation) at a reception end when a UE repeatedly transmits uplink in a satellite network will be described.

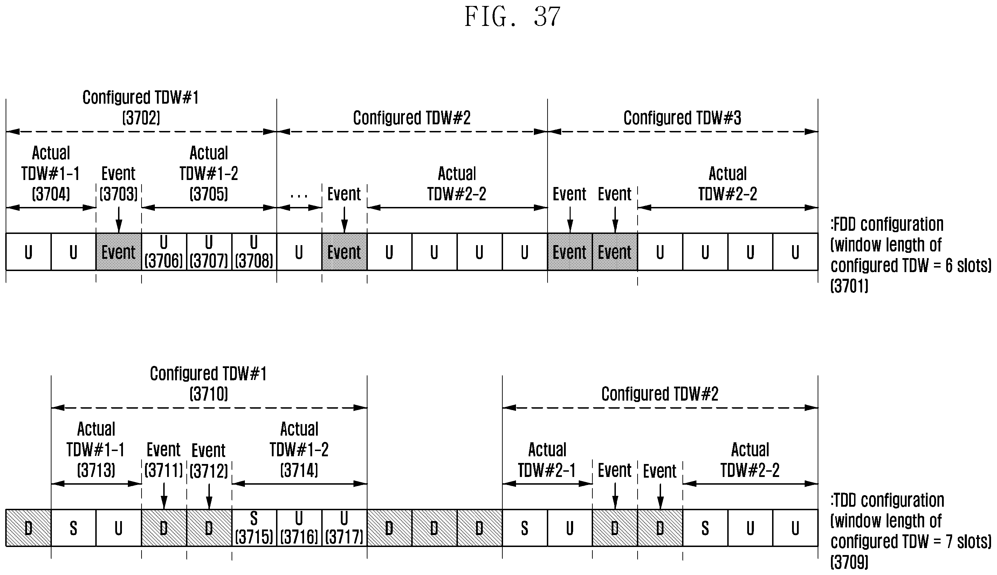

FIG. 37 is a diagram illustrating a method for configuring configured-TDW and actual-TDW for simultaneous channel estimation.

TDW is a time domain window, which means a time domain section for performing simultaneous channel estimation for multiple PUSCH and PUSCH repetitive transmissions (or multiple PUCCH and PUCCH repetitive transmissions).

The simultaneous channel estimation is described as follows. A base station may indicate whether a UE will use the same precoding through a configuration, and using this, the base station may estimate a channel by using DMRS transmissions using the same precoding together, thereby improving DMRS channel estimation performance.

In this case, in order to perform simultaneous channel estimation, power consistency and phase continuity must be maintained. In order to maintain the power consistency and phase continuity of the above transmission power, the same transmission power and phase configurations, the same RB configurations, and the same MCS configurations are required, and DL transmission and reception and monitoring must not be performed between PUSCH/PUCCH where simultaneous channel estimation is performed. When the power consistency and phase continuity are maintained through the above configurations, simultaneous channel estimation using DMRS of multiple PUSCHs is possible.

With reference to FIG. 37, if the UE is configured to the configured-TDW length 'L' = 6 slots for simultaneous channel estimation from the base station through higher layer signaling and L1 signaling, and simultaneous channel estimation is enabled in PUSCH transmission of paired spectrum (FDD configuration) (3701), the UE may determine configured-TDW#1 3702 starting from the first PUSCH transmission slot or available slot, and then sequentially determine configured-TDW#2 and configured-TDW#3. In this case, the last of configured-TDW may be the last PUSCH slot where PUSCH repetitive transmission ends.

Thereafter, the UE may determine actual-TDW based on the determined configured-TDW. If event 3703 occurs in configured-TDW#1 3702, the UE may determine actual-TDW#1-1 3704 based on the event 3703. In this case, the end of actual-TDW#1-1 3704 may be the PUSCH transmission slot immediately before the event 3703. Thereafter, based on the event 3703, the UE may determine whether to configure actual-TDW#1-2 3705 for the next PUSCH transmission.

If the capability of the UE supports the restart of a new actual-TDW after the event 3703, the UE may apply simultaneous channel estimation by configuring new actual-TDW#1-2 for three U slots 3706 to 1508. On the other hand, in case that the capability of the UE does not support simultaneous channel estimation after the event 3703, the UE may perform channel estimation and decoding for each U slot 3706 to 1508. Thereafter, the same method may be applied to configured-TDWs to determine actual-TDW.

In another case, if the UE is configured to the configured-TDW length 'L' = 7 slots for simultaneous channel estimation from the base station through higher layer signaling and L1 signaling, and simultaneous channel estimation is enabled in PUSCH transmission of unpaired spectrum (e.g., TDD configuration: DDDSUDDSUU) (3709), the UE may determine configured-TDW#1 3710 based only on the semi-static DL/UL configuration before the first PUSCH transmission, or the UE may determine configured-TDW#1 3710 by considering RRC configuration(s) that determine available slots, TDRA in DCI that schedules PUSCH, CG configuration, activation DCI, or the like. In this case, the configured-TDW#1 3710 and the next configured-TDW#2 may be determined through the above information.

Thereafter, the UE may determine the last PUSCH slot where the scheduled PUSCH repetitive transmission ends as the end of the configured-TDW. Thereafter, the UE may determine the actual-TDW based on the determined configured-TDW. When events 3711, 3712 occur in configured-TDW#1 3710, the UE may determine the PUSCH located immediately before the event 3711 as the end of actual-TDW#1-1 3713, based on the event 3711. Thereafter, based on the event 3712, the UE may determine whether to configure actual-TDW#1-2 3714 for the next PUSCH transmission after the event 3712.

If the UE capability supports the restart of a new actual-TDW after the event 3712, the UE may apply simultaneous channel estimation by configuring a new actual-TDW#1-2 3714 for each of S slot 3715, U slot 3716, and U slot 3717. On the other hand, in case that the UE capability does not support simultaneous channel estimation after the event 3712, the UE may perform channel estimation and decoding for each of S slot 3715, U slot 3716, and U slot 3717. Thereafter, the actual-TDW may be determined by applying the above method to the configured-TDWs in the same manner.

In the above method, the UE capability for determining the restart of the actual-TDW after the event may include a processing time 'T' for restarting the simultaneous channel estimation. For example, in case that the UE capability supports restart at a point in time 'T' after the occurrence of an event, a new actual-TDW may be configured based on the PUSCH configured after the point in time 'T' after the occurrence of the event. In this case, channel estimation and decoding may be performed for each PUSCH transmission within the configured 'T' period after the event. In addition, as illustrated in FIG. 37, in case that the events 3711, 3712 are consecutive, the processing time 'T' may be applied based on the beginning or end of the event.

Through the above method, the UE may configure/apply configured-TDW and actual-TDW for PUSCH repetitive transmission according to paired spectrum/unpaired spectrum.

In addition, the above event may be considered as one or a combination of DL transmission according to dynamic SFI, PUSCH drop due to cancellation indication (CI), actual-TDW exceeding maximum duration, frequency hopping, precoder cycling, overlapping with PUSCH transmission with high priority, configuration of DL reception and DL monitoring occasion, and PUSCH transmission power distribution due to CA/DC.

In addition, in the case of the last PUSCH repetitive transmission , it may be determined as a PUSCH satisfying the configured Count according to the procedure of Rel-17 PUSCH repetitive transmission.

In addition, the following situations are situations where power consistency and phase continuity for simultaneous channel estimation between two repeatedly transmitted PUCCHs or PUSCHs scheduled in DCI format are not maintained. The following situations may be applied to both satellite networks and terrestrial networks.

- A case where a Downlink slot or Downlink reception or Downlink monitoring section based on tdd-UL-DL-ConfigurationCommon and tdd-UL-DL-ConfigurationDedicated for unpaired spectrum exists between the corresponding repetitive PUCCHs or PUSCHs
- A case where a gap between any two consecutive PUSCH transmissions or a gap between any two consecutive PUCCH transmissions exceeds 13 symbols for the Normal CP or 11 symbols for the Extended CP
- A case where a gap between any two consecutive PUSCH transmissions or a gap between any two consecutive PUCCH transmissions does not exceed 13 symbols, but another uplink transmission is scheduled between the two consecutive PUSCH transmissions or the two consecutive PUCCH transmissions
- A case where a PUSCH transmission is cancelled from an actual transmission by a higher signal or an L1 signal
- A case where a PUCCH transmission is cancelled from an actual transmission by a higher signal or an L1 signal Cases
- A case where the precoding (or beam pattern) applied between repeatedly transmitted PUSCHs is different
- A case where different transmission power parameters are provided for consecutive PUCCH or PUSCH repetitive transmissions
- A case where uplink timing adjustment occurs according to the Timing Advance command
- A case where frequency hopping occurs

Unlike terrestrial networks, satellite networks have extremely long distances between a transmission end and a reception end, and thus have long delay times. In addition, in the case of low-orbit or medium-orbit satellites, Doppler shift occurs due to a difference in relative speeds of the transmission end and reception end because they revolve around the Earth. In addition, since satellite networks usually cover a large area with one satellite, the delay time difference between UEs and satellites within the coverage area of one satellite may vary from several ms to tens of ms.

Therefore, in a satellite network, a method may be required for the UE to perform TA compensation according to this delay time difference, and for this purpose, it may be possible for the satellite network to provide the UE with satellite orbit information according to time as a two-dimensional function through a higher signal. Through this, the UE may be able to identify the delay time by comparing its own location with the location of the satellite using its own internal clock and GPS information, and information on the velocity of light (or radio waves), and compensate for this with the TA. In addition, since the delay time between the satellite and the ground station also changes over time, it may be possible to provide higher signal information to the UE by constituting the delay time in the form of a two-dimensional function. Accordingly, the UE may apply a different TA value for uplink transmission at specific times.

For similar reasons, the UE calculates the Doppler shift value that will occur in the frequency in uplink transmission in advance, precompensates for it, and applies it during uplink transmission. Since the relative velocity and frequency information between the UE and the satellite must be known in order to calculate the Doppler, the base station may provide the UE with velocity information and location information on the satellite in the form of a two-dimensional function. Through this, the UE may know the relative velocity between the satellite and the UE and estimate the Doppler shift value. Therefore, the Doppler shift value applied by the UE may vary each time uplink transmission is performed.

Therefore, in case that the UE repeatedly transmits uplink control and data information through PUCCH or PUSCH for simultaneous channel estimation, the UE must apply at least the same TA value and Doppler shift value to the repeatedly transmitted PUCCH and PUSCH. Otherwise, the simultaneous channel estimation performance may deteriorate from the reception end's perspective.

In case that the repeatedly transmitted PUSCHs are configured grant PUSCHs without DCI scheduling, it may be possible for the UE to transmit a UCI including information indicating whether a separate "same TA value and Doppler shift value" has been applied to the configured grant PUSCH, and this information may be present in the first PUSCH among the repeated configured grant PUSCHs. Alternatively, in addition to the configured grant PUSCH information, it may be possible to transmit, to the base station, information including information indicating whether the UE has applied the "same TA value and Doppler shift value" before repeatedly transmitting PUCCH or PUSCH. The information may be transmitted through PUCCH or PUSCH, and may be reported by the UE only in case that the base station has allocated resources for transmitting the corresponding information in advance.

Alternatively, in a satellite network, even if the TA and Doppler shift values applied by the UE for each repeatedly transmitted PUSCH or PUCCH are not exactly the same depending on the base station reception capability, it may be possible for the base station to perform simultaneous channel estimation for repeatedly transmitted PUSCH and PUCCH within the actual-TDW.

Accordingly, the base station may be able to inform the UE whether the UE should apply the same TA or the same Doppler shift value within the actual-TDW or not when repeatedly transmitting PUSCH or PUCCH, and this may be transmitted to the UE through a higher signal or an L1 signal.

In case of being transmitted as an L1 signal, it may be included in the DCI for scheduling the PUSCH or PUCCH. For example, in case that information on whether the same TA or the same Doppler shift value should be applied within the actual-TDW or not is transmitted as an L1 signal when the UE repeatedly transmits PUSCH or PUCCH, it may be included in the DCI for scheduling the PUSCH or PUCCH. Alternatively, the corresponding information may be added to the DCI format as a field constituted with 1 bit. For example, information may be included that if the bit has a value of 1, the same TA or the same Doppler shift value should be applied, and if the bit has a value of 0, the same TA or the same Doppler shift value does not need to be applied. Alternatively, it may be possible to determine whether the same TA or the same Doppler shift value should be applied or not depending on the HARQ process value. For example, it may be possible to indicate that if the HARQ process value is 1 to 8, the same TA or the same Doppler shift value should be applied, and if the HARQ process value is 9 to 16, the same TA or the same Doppler shift value does not need to be applied. This is only an example and may be applied in other ways.

The higher signal may be possible to indicate whether or not a specific time or frequency section may be applied with the same TA or the same Doppler shift value. The time or frequency section may exist periodically. For example, it may be indicated that the same TA or the same Doppler shift value may be applied for the first 5ms in units of 10ms. In other words, it is the same as indicating that the same TA or the same Doppler shift value does not need to be applied for the last 5ms in units of 10ms.

The above repetition units of 10ms and 5ms are examples. It may be possible to change the time unit or time to a frequency value and apply the same. Alternatively, it may be possible to indicate in which section within a specific section the UE should apply the same TA or the same Doppler shift value in a bitmap manner. Alternatively, it may be indicated that the same TA or the same Doppler shift value may be applied only within a specific elevation angle section between the UE and the satellite. In other words, this is the same as indicating that the same TA or the same Doppler shift value does not need to be applied except for a specific elevation angle section between the UE and the satellite.

The above examples have explained methods for indicating whether the same TA or the same Doppler shift value should be applied between repeatedly transmitted PUSCHs or PUCCHs within the actual-TDW or not. In addition, even if the same TA or the same Doppler shift value is not applied, it may be possible for the base station to indicate to the UE within a certain range that the difference in TA or Doppler shift values between repeatedly transmitted PUSCHs or PUCCHs should be maintained.

For example, it may be possible for the base station to indicate to the UE that the TA difference between repeatedly transmitted PUSCHs or PUCCHs within the actual-TDW should be within 1 us. In this case, the unit may be indicated as a time unit such as ms, Ts, or Tc in addition to us. In addition, the TA difference between the repeatedly transmitted PUSCHs or PUCCHs within the actual-TDW may mean the difference between the maximum TA and the minimum TA applied to all the repeatedly transmitted PUSCHs or PUCCHs within the actual-TDW, or may mean the TA difference applied between two consecutively repeatedly transmitted PUSCHs or PUCCHs within the actual-TDW. Considering that a change in time (or a time delay) corresponds to a change in phase (or a phase delay), the difference in TA may also be understood as a difference in phase (or a phase difference).

As another example, it may be possible to indicate that the Doppler shift difference between the repeatedly transmitted PUSCHs or PUCCHs within the actual-TDW must be within 5 Hz. In this case, the unit may be indicated in units of ppm (part per million, one millionth) in addition to Hz. In addition, the Doppler shift difference between the repeatedly transmitted PUSCHs or PUCCHs within the actual-TDW may mean the difference between the maximum Doppler shift and the minimum Doppler shift applied to all the repeatedly transmitted PUSCHs or PUCCHs within the actual-TDW, or may mean the Doppler shift difference applied between two consecutively repeatedly transmitted PUSCHs or PUCCHs within the actual-TDW

After configuring a plurality of candidate values via a higher signal, the information indicating the range of the difference in TA or Doppler shift values between the PUSCHs or PUCCHs may be indicated by one of the candidate values via an L1 signal. Alternatively, after one candidate value is configured via the higher signal, information indicating the range of the difference in TA or Doppler shift values between the PUSCHs or PUCCHs may indicate whether the corresponding value is applied via then L1 signal. The information on the TA or Doppler shift values may be individually configured as different signals. Alternatively, the information on the TA or Doppler shift value may be configured individually, but it may be possible to indicate whether a specific range value is applied in the same L1 signal.

Table 29 is an embodiment of this, and indicates the allowable difference value of the applied Doppler shift between two continuously repeatedly transmitted PUSCHs or PUCCHs within the actual-TDW in a DCI field constituted with 2 bits. The meaning of 0 is the same as that the same Doppler shift value must be maintained. The TA-related information may also be configured in a similar manner to Table 29, and it may also be possible to indicate the allowable difference for Doppler and TA by adding a column.

[Table 29]

| Index | maximum allowable Doppler shift difference |
|-------|--------------------------------------------|
| 0 | 0 |
| 1 | 1Hz |
| 2 | 2Hz |
| 3 | 3Hz |

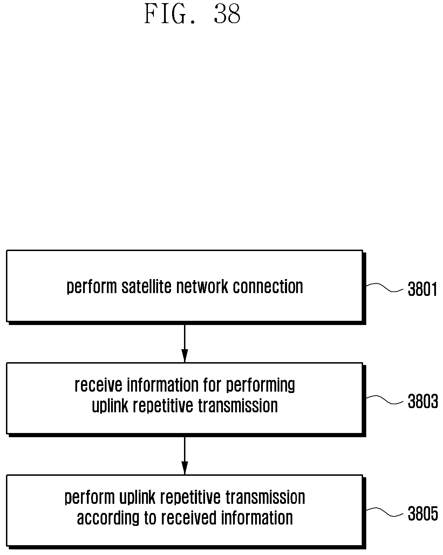

FIG. 38 is a flowchart showing the operation of a UE for simultaneous channel estimation of a base station according to an embodiment.

In operations 3801 and 3803, the UE performs initial access to a satellite network, and then receives related higher signal information from the base station for simultaneous channel estimation. In operation 3805, the UE may perform uplink repetitive transmission according to the received information.

The UE may determine configured-TDW and actual-TDW sections through an L1 signal that schedules higher signal information and PUSCH or PUCCH repetitive transmission for simultaneous channel estimation. In this case, the UE determines whether TA or Doppler shift values to be applied between PUSCHs or PUCCHs repeatedly transmitted within the actual-TDW section should be the same or not by considering the methods described in the seventh embodiment, and applies the same to the PUSCH or PUCCH repetitive transmission. Alternatively, the UE determines how much of a difference between TA or Doppler shift values applied between PUSCHs or PUCCHs repeatedly transmitted within the actual-TDW interval is allowed by considering the methods described in the seventh embodiment, and applies the difference between TA or Doppler shift values to the PUSCH or PUCCH repetitive transmission within the range that allows the difference.

[Eighth Embodiment]

In the seventh embodiment, it is mainly explained from the perspective of a service link. In the eighth embodiment, it is explained from the perspective of a feeder link about the operation of the satellite for simultaneous channel estimation by the base station.

As described with respect to FIG. 12, the satellite network is largely constituted with a service link, which is a link between the satellite and the UE, and a feeder link, which is a link between the satellite and the ground station (or gateway or base station). Unlike the terrestrial network, in the satellite network, the signal transmitted by the UE is transmitted to the base station via the satellite, so in order for the base station to perform simultaneous channel estimation, the TA and Doppler shift between the PUSCH or PUCCH repeatedly transmitted continuously from the UE within the actual-TDW from the satellite to the base station must be the same on the feeder link. In other words, in order for the base station to perform simultaneous channel estimation for PUSCHs or PUCCHs repeatedly transmitted by the UE, the TA or Doppler shift value applied to the PUSCHs or PUCCHs applied for each repetitive transmission must be the same not only in the service link but also in the feeder link. At least, in case that the TA or Doppler shift value applied in the service link or the feeder link is applied differently to the PUSCH or PUCCH, it may be difficult for the base station to perform simultaneous channel estimation.

Therefore, the satellite needs to determine whether the signal received from the UE is repeatedly transmitted and whether simultaneous channel estimation is required at the base station. For example, in case that the corresponding signal is repeatedly transmitted and simultaneous channel estimation is required at the base station, the satellite must apply the same TA or the same Doppler shift when transmitting the signal to the base station.

As another example, in case that the corresponding signal is repeatedly transmitted and simultaneous channel estimation is not required at the base station, the satellite may or may not apply the same TA or the same Doppler shift when transmitting the signal to the base station.

The satellite described above may be applicable only to the amplify-and-forward scheme, which simply transmits the signal received from the UE to the base station. In case of a decode-and-forward scheme in which the satellite demodulates/decodes the signal received from the UE and then encodes/modulates it again, the above-described method may not be applicable because direct simultaneous channel estimation may be performed on signals received from the UE on the satellite.

For convenience of explanation, the first to eighth embodiments of the disclosure are divided and described, but since each embodiment includes operations related to each other, a combination of at least two embodiments may be available. In addition, the methods of respective embodiments are not mutually exclusive, and it is also possible for one or more methods to be performed in combination.

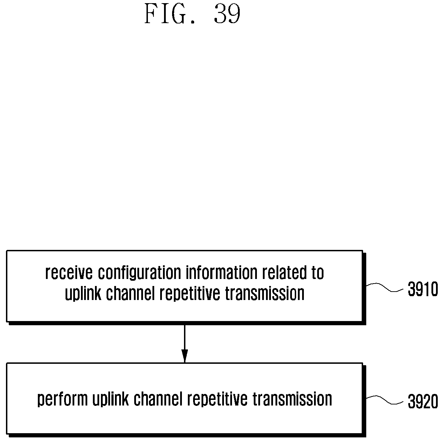

FIG. 39 is a flowchart illustrating the operation of a UE according to an embodiment. Various changes can be made to the method illustrated in the flowchart of FIG. 39. For example, while illustrated as a series of operations, various operations in each figure could overlap, occur in parallel, occur in a different order, or occur multiple times. In another example, operations may be omitted or replaced by other operations.

With reference to FIG. 39, in operation 3910 according to an embodiment, the UE may receive configuration information related to uplink channel repetition transmission through higher layer signaling.

In operation 3920 according to an embodiment, the UE may perform uplink channel repetition transmission. The UE may transmit a plurality of uplink channels corresponding to uplink channel repetition transmission in a plurality of slots based on pre-compensation.

According to an embodiment, the pre-compensation may be performed to ensure that a phase difference between a phase related to an uplink channel mapped to a first slot among the plurality of slots and a phase related to an uplink channel mapped to a second slot among the plurality of slots is within a predefined range.

According to an embodiment, the predefined range may be for demodulation reference signal (DM-RS) bundling. The DM-RS bundling may be for uplink channel repetition transmission. For example, if the corresponding predefined range is satisfied, the UE may be configured for DM-RS bundling and transmit DM-RSs to which DM-RS bundling is applied.

For more specific details of the operation of the UE illustrated in FIG. 39, the description of the above-described embodiment may be referred.

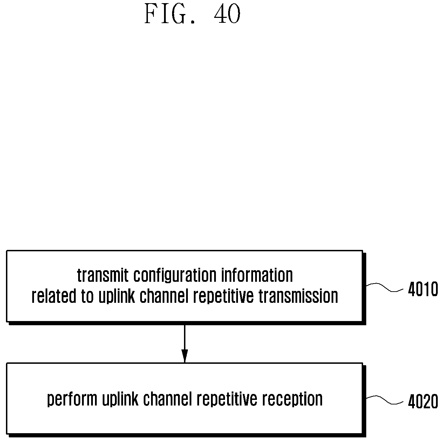

FIG. 40 is a flowchart illustrating the operation of a base station according to an embodiment. Various changes may be made to the method illustrated in the flowchart of FIG. 40. For example, while illustrated as a series of operations, various operations in each figure could overlap, occur in parallel, occur in a different order, or occur multiple times. In another example, operations may be omitted or replaced by other operations.

In operation 4010 according to an embodiment, the base station may transmit configuration information related to uplink channel repetition transmission to the UE through higher layer signaling.

In operation 4020 according to an embodiment, the base station may repeatedly receive an uplink channel from the UE. The base station may receive a plurality of uplink channels corresponding to the uplink channel repeat transmission from the UE in a plurality of slots.

According to an embodiment, a phase difference between a phase related to an uplink channel mapped to a first slot among the plurality of slots and a phase related to an uplink channel mapped to a second slot among the plurality of slots may be included in a predefined range.

According to an embodiment, the predefined range may be for demodulation reference signal (DM-RS) bundling. The DM-RS bundling may be for uplink channel repeat transmission. For example, if the corresponding predefined range is satisfied, the base station may configure DM-RS bundling and receive DM-RSs to which DM-RS bundling is applied.

For more specific details of the operation of the base station illustrated in FIG. 40, the description of the above-described embodiment may be referred.

The transmission and reception method of the base station, satellite, and UE or a transmission end or a reception end for performing the embodiments of the disclosure is described, and a receiver, processor, and transmitter of the base station, satellite, and UE should operate according to each embodiment.

More specifically, FIG. 39 is a block diagram illustrating an internal structure of a UE according to an embodiment of the disclosure.

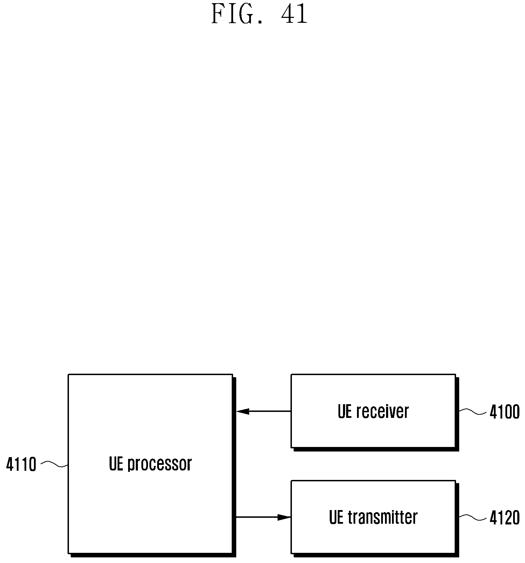

As illustrated in FIG. 41, the UE of the disclosure may include a UE receiver 4100, a UE transmitter 4120, and a UE processor 4110. It is of course not limited to the above examples, and the UE may include more or fewer components. In addition, the UE receiver 4100, the UE transmitter 4120, and the UE processor 4110 may be constituted in a single chip.

The UE receiver 4100 and the UE transmitter 4120 may be collectively referred to as a transceiver in an embodiment of the disclosure. The transceiver may transmit or receive a signal to or from a base station or a satellite. The signal transmitted or received by the UE may include control information and data. To this end, the transceiver may include an RF transmitter to up-convert and amplify the frequency of the transmitted signal, an RF receiver to amplify the received signal with low noise and down-convert the frequency, and the like. The components of the transceiver are of course not limited to the RF transmitter and RF receiver. In addition, the transceiver may receive a signal through a wireless channel, output the signal to the UE processor 4110, and transmit a signal output from the UE processor 4110 through the wireless channel.

The UE processor 4110 may control a series of processes so that the UE operates according to the above-described embodiment of the disclosure. For example, the UE receiver 4100 may receive a signal from the satellite or the ground base station and a signal from the GNSS, and the UE processor 4110 may transmit and receive a signal to the base station according to the method described in the disclosure. Thereafter, the UE transmitter 4120 may transmit a signal using a determined time point. In the disclosure, the UE processor 4110 may be defined as a circuit or an application-specific integrated circuit or at least one processor, but is of course not limited to the above examples.

According to an embodiment of the disclosure, the UE may include a memory (not illustrated). The memory may store a program and data required for an operation of the UE. Furthermore, the memory may store control information or data included in a signal obtained by the UE. The memory may include a storage medium such as ROM, RAM, hard disk, CD-ROM, and DVD, or any combination thereof.

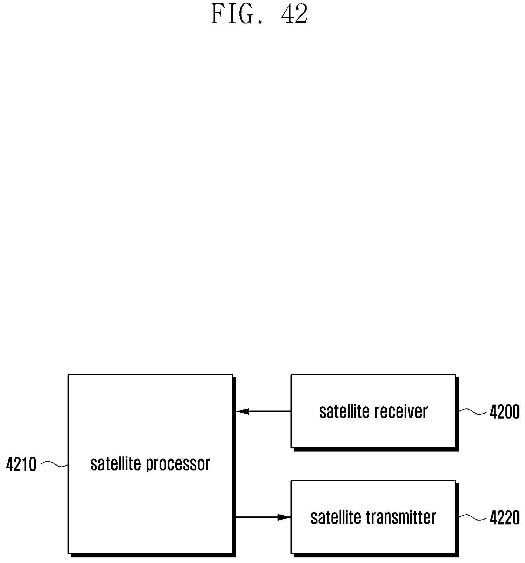

FIG. 42 is a block diagram illustrating an internal structure of a satellite according to an embodiment of the disclosure.

As illustrated in FIG. 42, the satellite of the disclosure may include a satellite receiver 4200, a satellite transmitter 4220, and a satellite processor 4210. The receiver, transmitter, and processor may be constituted in plural. That is, the satellite may be constituted with a receiver and transmitter for transmitting and receiving a signal to and from the UE and a transmitter and receiver for transmitting and receiving a signal to and from the base station (and a receiver and transmitter for transmitting and receiving a signal to and from another satellite). It is of course not limited to the above examples, and the satellite may include more or fewer components. In addition, the satellite receiver 4200, the satellite transmitter 4220, and the satellite processor 4210 may be constituted in a single chip.

The satellite receiver 4200 and the satellite transmitter 4220 may be collectively referred to as a satellite transceiver in an embodiment of the disclosure. The transceiver may transmit or receive a signal to or from the UE and the base station. Here, the signal may include control information and data. To this end, the transceiver may be constituted with an RF transmitter to up-convert and amplify the frequency of the transmitted signal, an RF receiver to amplify the received signal with low noise and down-convert the frequency, and the like. The components of the transceiver are of course not limited to the RF transmitter and the RF receiver. In addition, the transceiver may receive a signal through a wireless channel, output the signal to the satellite processor 4210, and transmit a signal output from the satellite processor 4210 through the wireless channel. The satellite processor 4210 may include a compensator (pre-compensator) for compensating for a frequency offset or Doppler shift and a device capable of tracking locations through a GPS or the like. Further, the satellite processor 4210 may include a frequency shift function for moving a center frequency of the reception signal. The satellite processor 4210 may control a series of processes so that the satellite, the base station, and the UE operate according to the above-described embodiments of the disclosure. For example, the satellite receiver 4200 may receive a PRACH preamble from the UE and transmit an RAR according thereto to the UE again, thereby determining transmission of TA information to the base station. Thereafter, the satellite transmitter 4220 may transmit corresponding signals at a determined time point. In the disclosure, the satellite processor 4210 may be defined as a circuit or an application specific integrated circuit or at least one processor, but is of course not limited to the above examples.

According to an embodiment of the disclosure, the satellite may include a memory (not illustrated). The memory may store a program and data required for an operation of the satellite. Furthermore, the memory may store control information or data included in a signal obtained by the satellite. The memory may include a storage medium such as ROM, RAM, hard disk, CD-ROM, and DVD, or any combination thereof.

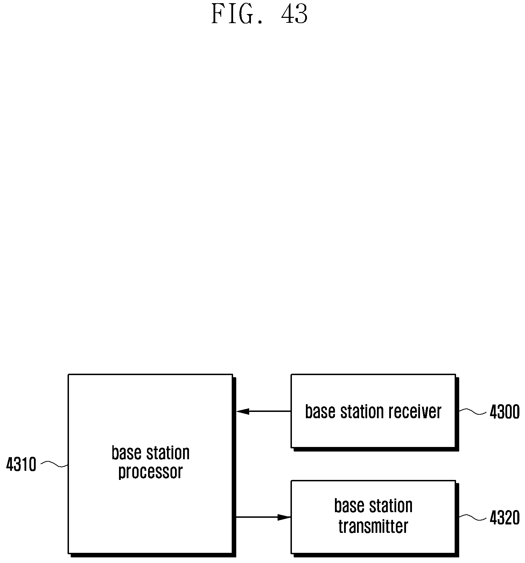

FIG. 43 is a block diagram illustrating an internal structure of a base station according to an embodiment of the disclosure.

As illustrated in FIG. 43 , the base station of the disclosure may include a base station receiver 4300, a base station transmitter 4320, and a base station processor 4310. The base station may be the ground base station or a part of the satellite. The base station receiver 4300 and the base station transmitter 4320 may be collectively referred to as a transceiver in an embodiment of the disclosure. The transceiver may transmit or receive a signal to or from a UE. The signals transmitted and received with the UE, other base stations, or satellites may include control information and data. To this end, the transceiver may be constituted with an RF transmitter to up-convert and amplify the frequency of the transmitted signal, an RF receiver to amplify the received signal with low noise and down-convert the frequency, and the like. The components of the transceiver are of course not limited to the RF transmitter and the RF receiver. In addition, the transceiver may receive a signal through a wireless channel, output the signal to the base station processor 4310, and transmit a signal output from the based station processor 4310 through the wireless channel. The base station processor 4310 may control a series of processes so that the base station operates according to the above-described embodiment of the disclosure. For example, the base station processor 4310 may transmit an RAR including TA information. In the disclosure, the base station processor 4310 may be defined as a circuit or an application specific integrated circuit or at least one processor, but is of course not limited to the above examples.

According to an embodiment of the disclosure, the base station may include a memory (not illustrated). The memory may store a program and data required for an operation of the base station. Furthermore, the memory may store control information or data included in a signal obtained by the base station. The memory may include a storage medium such as ROM, RAM, hard disk, CD-ROM, and DVD, or any combination thereof.

Meanwhile, the embodiments of the disclosure described in this specification and drawings are only specific examples presented to easily explain the technical contents of the disclosure and help in understanding the disclosure, and are not intended to limit the scope of the disclosure. That is, it is obvious to a person having ordinary skill in the art to which the disclosure pertains that other modified examples based on the technical idea of the disclosure are possible. In addition, each of the above embodiments can be combined and operated as needed. In addition, the above embodiments can be implemented as other modified examples based on the technical ideas of the above embodiments in LTE systems, 5G systems, etc.

**Claims**

1.   A method performed by a terminal in a communication system, comprising:

   receiving configuration information related to physical uplink shared channel (PUSCH) repetitive transmission through higher layer signaling; and
   transmitting a plurality of PUSCHs corresponding to the PUSCH repetitive transmission in a plurality of slots on the basis of pre-compensation,
   wherein the pre-compensation is performed to satisfy that a phase difference between a phase related to a PUSCH mapped to a first slot among the plurality of slots and a phase related to a PUSCH mapped to a second slot among the plurality of slots is within a predefined range for demodulation reference signal (DM-RS) bundling,
   wherein the DM-RS bundling is for the PUSCH repetitive transmission .

2.   The method of claim 1, wherein the first slot and the second slot are any two consecutive slots included in the plurality of slots, or
   the first slot is a slot to which a PUSCH related to a minimum phase among the plurality of PUSCHs is mapped, and the second slot is a slot to which a PUSCH related to a maximum phase among the plurality of PUSCHs is mapped.

3.   The method of claim 1, wherein the pre-compensation is for the PUSCH repetitive transmission in a non-terrestrial network (NTN).

4.   The method of claim 1, further comprising transmitting a plurality of DM-RSs to which the DM-RS bundling is applied, wherein configuration information for the DM-RS bundling is received through the higher layer signaling.

5.   The method of claim 1, further comprising transmitting, by the terminal, capability information related to supporting the pre-compensation.

6.   A terminal in a communication system, comprising:

   a transceiver; and
   a processor connected to the transceiver,

wherein the processor is configured to:

receive configuration information related to physical uplink shared channel (PUSCH) repetitive transmission through higher layer signaling; and

transmit a plurality of PUSCHs corresponding to the PUSCH repetitive transmission in a plurality of slots on the basis of pre-compensation,

wherein the pre-compensation is performed to satisfy that a phase difference between a phase related to a PUSCH mapped to a first slot among the plurality of slots and a phase related to a PUSCH mapped to a second slot among the plurality of slots is within a predefined range for demodulation reference signal (DM-RS) bundling,

wherein the DM-RS bundling is for the PUSCH repetitive transmission .

7. The terminal of claim 6, wherein the first slot and the second slot are any two consecutive slots included in the plurality of slots, or

the first slot is a slot to which a PUSCH related to a minimum phase among the plurality of PUSCHs is mapped, and the second slot is a slot to which a PUSCH related to a maximum phase among the plurality of PUSCHs is mapped.

8. The terminal of claim 6, wherein the pre-compensation is for the PUSCH repetitive transmission in a non-terrestrial network (NTN).

9. The terminal of claim 6, wherein the processor is configured to transmit a plurality of DM-RSs to which the DM-RS bundling is applied,

wherein configuration information for the DM-RS bundling is received through the higher layer signaling.

10. The terminal of claim 6, wherein the processor is configured to allow the terminal to transmit capability information related to supporting the pre-compensation.

11. A method performed by a base station in a communication system, comprising:

transmitting, to a terminal, configuration information related to physical uplink shared channel (PUSCH) repetitive transmission through higher layer signaling; and

receiving, from the terminal, a plurality of PUSCHs corresponding to the PUSCH repetitive transmission in a plurality of slots,

wherein a phase difference between a phase related to a PUSCH mapped to a first slot among the plurality of slots and a phase related to a PUSCH mapped to a second slot among the plurality of slots is included in a predefined range for demodulation reference signal (DM-RS) bundling,

wherein the DM-RS bundling is for the PUSCH repetitive transmission .

12. The method of claim 11, wherein the first slot and the second slot are any two consecutive slots included in the plurality of slots, or

the first slot is a slot to which a PUSCH related to a minimum phase among the plurality of PUSCHs is mapped, and the second slot is a slot to which a PUSCH related to a maximum phase among the plurality of PUSCHs is mapped.

13. The method of claim 11, further comprising receiving, by the terminal, capability information related to supporting the pre-compensation

wherein the pre-compensation is related to the phase difference being included in the predefined range.

14. A base station in a communication system, comprising:

a transceiver; and
a processor connected to the transceiver,
wherein the processor is configured to:

transmit, to a terminal, configuration information related to physical uplink shared channel (PUSCH) repetitive transmission through higher layer signaling; and

receive, from the terminal, a plurality of PUSCHs corresponding to the PUSCH repetitive transmission in a plurality of slots,

wherein a phase difference between a phase related to a PUSCH mapped to a first slot among the plurality of slots and a phase related to a PUSCH mapped to a second slot among the plurality of slots is included in a predefined range for demodulation reference signal (DM-RS) bundling,
wherein the DM-RS bundling is for the PUSCH repetitive transmission .

15. The base station of claim 14, wherein the processor is configured to allow the terminal to receive capability information related to supporting the pre-compensation,
wherein the pre-compensation is related to the phase difference being included in the predefined range.

# FIG. 1

radio frame [114]

······

slot
[106]

$N_{BW}$
subcarrier
[104]

$N_{RB}$
subcarrier
[110]

resource element
[112]

resource block
[108]

$N_{symb}$ OFDM symbol
[102]

# FIG. 2

| SCS | bandwidth |
|---|---|
| 15 kHz | 3.6 MHz |
| 30 kHz | 7.2 MHz |
| 120 kHz | 28.8 MHz |
| 240 kHz | 57.6 MHz |

# FIG. 3

**1ms**

| 15kHz | 0 | 1 | 2 | 3 | 4 | 5 | 6 | 7 | 8 | 9 | 10 | 11 | 12 | 13 |

| 30kHz(1) | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

| 30kHz(2) | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

**0.25ms**

| 60kHz | 0 | 1 | 2 | 3 | 4 | 5 | 6 | 7 | 8 | 9 | 10 | 11 | 12 | 13 |

| 120kHz(1) | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

| 240kHz(2) | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

EP 4 560 934 A1

# FIG. 4

Duration
(404)

frequency
resource
(403)

UE
bandwidth
part
(410)

slot (420)

frequency

time

CORESET#1 (401)

CORESET#4 (402)

## FIG. 5

502    504

| R/LCID subheader | fixed-sized MAC CE |
|---|---|

512    514

| R/F/LCID/L subheader | variable-sized MAC CE |
|---|---|

522    524

| R/F/LCID/L subheader | MAC SDU |
|---|---|

500

| MAC subPDU including MAC CE1 | MAC subPDU including MAC CE2 | MAC subPDU including MAC SDU |
|---|---|---|

510

520

| MAC subPDU including MAC SDU | MAC subPDU including (opt) |
|---|---|

. . .

EP 4 560 934 A1

FIG. 6

602  604

| R/F/LCID/L subheader | MAC SDU |

612  614  622  624

| R/LCID subheader | fixed-sized MAC CE | R/F/LCID/L subheader | variable-sized MAC CE |

600

| MAC subPDU including MAC SDU | MAC subPDU including MAC SDU |

. . .

610  620

| MAC subPDU including MAC CE1 | MAC subPDU including MAC CE2 | MAC subPDU including padding (opt) |

EP 4 560 934 A1

FIG. 7

# FIG. 8

# FIG. 9

slot index: 0, 1, 2, 3, 4, 5, 6, 7, 8, 9, 10, 10, 11, 12, 13, 14, 15, 16, 17, 18, 19, 20

| 902 | 906 | 908 |

| 900 | 904 | 910 |

TB1, TB2, TB3, TB4, TB5, TB6, TB7, TB8

A/N, A/N, A/N, A/N, A/N, A/N, A/N, A/N

TB1, TB2, TB3, TB4, TB5, TB6, TB7, TB8

initial transmission    HARQ feedback    retransmission

EP 4 560 934 A1

FIG. 10

VSAT satellite gateway

service link     feeder link

core network

public data network

1001     1003     1007     1009

EP 4 560 934 A1

FIG. 11

| Orbital type | altitude | period |
|---|---|---|
| LEO | 500~1000 km | 90~120 min |
| MEO | 5000~15000 km | about 6 hours |
| GEO | about 36,000 km | about 24 hours |

FIG. 12

EP 4 560 934 A1

FIG. 13

1300

Personal emergency service

implement function of direction of communication between satellite and UE in smartphone

1310

Communications on the move

realize mobile communication service on boat and aircraft

1320

Enterprise service

track/control ships/trucks/drones in real time without border restrictions

1330

Remote area backhauling

Support satellite communication in base station. realize radio backhaul through connection with UE

# FIG. 14

noise figure: 5 dB

thermal noises = -119.1 dBm

obtainable SNR -2.63 dB

LEO

Rx antenna gain 30 dBi

1,200 km

path loss 169.8 dB
- Free space path loss: 164.5 dB
- Atmospheric path loss: 0.1 dB
- Shadowing margin: 3 dB
- Scintillation loss: 2.2 dB
- Additional loss: 0 dB

EIRP: 23 dBm

- Case: LEO 1200, uplink

| Frequency (GHz) | 2 |
|---|---|
| Bandwidth (MHz) | 0.36 |
| SNR [dB] | -2.63 |
| SIR [dB] | 2.0 |
| SINR [dB] | -3.92 |
| MCS index | 2 |
| Required repetition | 0 |
| TBS [bits] | 56 |
| TTI [ms] | 0.5 |
| Approx. throughput | 112 kbps |

EP 4 560 934 A1

## FIG. 15

noise figure: 7.7 dB

thermal noises = -118.78 dBm

obtainable SNR -10.8 dB

GEO

Rx antenna gain 51 dBi

35,786 km

path loss 195.9 dB

- Free space path loss: 190.6 dB
- Atmospheric path loss: 0.1 dB
- Shadowing margin: 3 dB
- Scintillation loss: 2.2 dB
- Additional loss: 0 dB

EIRP: 23 dBm

• Case: GEO, uplink

| Frequency [GHz] | 2 |
|---|---|
| Bandwidth [MHz] | 0.36 |
| SNR [dB] | -10.8 |
| SIR [dB] | 2.0 |
| SINR [dB] | -11 |
| gap to MCS [dB] | 4.8 |
| Required repetition | 3.0 |
| TBS [bits] | 32 |
| TTI [ms] | 1.5 |
| Approx. throughput | 21 kbps |

EP 4 560 934 A1

# FIG. 16

- Link budget between UE and satellite

  - Path loss : (1600)
    $FSPL(d, f_c) = 32.45 + 20 \log_{10}(f_c) + 20 \log_{10}(d)$

  - Rx antenna gain for UL : 24 dBi (LEO), 45.5 dBi (GEO)


- Link budge between UE and terrestrial gNB

  - Path loss (LOS) : (1610)
    $PL_2 = 28.0 + 40 \log_{10}(d_{3D}) + 20 \log_{10}(f_c) - 9 \log_{10}((d'_{BP})^2 + (h_{BS} - h_{UT})^2)$

  - Path loss (NLOS) : (1620)
    $PL'_{UMa-NLOS} = 13.54 + 39.08 \log_{10}(d_{3D}) + 20 \log_{10}(f_c) - 0.6(h_{UT} - 1.5)$

  - Rx antenna gain for UL : ~12 dBi

FIG. 17

Doppler shift $= f_c \dfrac{v}{c} \cos\alpha$

$$f_c \frac{v}{c}\cos\alpha = f_c \frac{v}{c}\frac{\sin\beta}{\sqrt{1+r^2-2r\cos\beta}} \,, \qquad r = \frac{R+h}{R}$$

$f_c = 2$ GHz
UE velocity $= 0$

— 2000 km
— 1200 km
— 1000 km
······ 700 km
- - - 600 km

$\theta$, Elevation (degree)

FIG. 18

## FIG. 19

• Doppler shift within a beam footprint

UE1's Doppler shift $= f_c \dfrac{v}{c} \cos \alpha = f_c \dfrac{v}{c} \dfrac{\sin \beta}{\sqrt{1+r^2 - 2r \cos\beta}}$

UE2's Doppler shift $= f_c \dfrac{v}{c} \cos \alpha{'} = f_c \dfrac{v}{c} \dfrac{\sin (\beta + \triangle\beta)}{\sqrt{1+r^2 - 2r \cos(\beta + \triangle\beta)}}$

$\triangle\beta = \dfrac{d}{R}$ (rad)    $r = \dfrac{R + h}{R}$

$f_c$ = 2 GHz
h = 700 km
d = 50 km (cell size)
UE velocity = 0
Max $\triangle$Doppler = 3.57 kHz

Doppler shift (kHz)

--- UE1
— UE2

$\theta$, Elevation of UE1 (degree)

EP 4 560 934 A1

FIG. 20

# FIG. 21

# FIG. 22

# FIG. 23

2300

2310

| R | Timing Advance Command | Oct 1 |
|---|---|---|
| Timing Advance Command | UL Grant | Oct 2 |
| UL Grant | | Oct 3 |
| UL Grant | | Oct 4 |
| Temporary C-RNTI | | Oct 5 |
| Temporary C-RNTI | | Oct 6 |

2320

EP 4 560 934 A1

# FIG. 24

2420

RAR (with RA-RANTI)

PDCCH

PRACH resource

PRACH

2400

2410

- ra-ResponseWindowSize from 2 to 10 ms
- From PRACH + 3ms

- period can be 20, 10, 5, 3 to 4, 2, 1 ms (configured as index)
- Frequency offset is configured

EP 4 560 934 A1

# FIG. 25

Period can be 1, 2, 4, 5, 8, 16, 20, ⋯2560 slots

Type-1 CSS
PDCCH

PRACH
resource

PRACH

2500

2520

RAR (with RA-RANTI)

2510

- ra-ResponseWindowSize from 2 to 10 ms
- From the first PDCCH after PRACH

- period can be 160, 80, 40, 20, 10, 5, 3 to 4, 2, 1 ms
  (configured as index)
- Frequency offset is configured

FIG. 26

downlink frame i

uplink frame i

$(N_{TA} + N_{TA, offset}) T_C$

FIG. 27

orbital
inclination

Earth's rotation

satellite orbit

DU Farm / DU

EP 4 560 934 A1

# FIG. 28

2830

Ka-band antenna
(inter-satellite link)

2800
solar array

2810
main mission antenna
(L-band)

Ka-band antenna
(feeder link)

2820

FIG. 29

PRACH preamble
[$N_{TA}$ =0]
2901

RAR
Indicate $N_{TA}$
2903

PUSCH
[$N_{TA}$ =A]
2905

MAC CE
Indicate $\triangle N_{TA}$
2907

PUSCH
[$N_{TA}$ = A + $\triangle N_{TA}$]
2909

gNB

UE

# FIG. 30

| Satellite info. & $N_{TA}$, common, Drift rate | PRACH preamble $[N_{TA}=0]$ $N_{TA}$, UE-specific + $N_{TA}$, common | RAR Indicate $N_{TA}$ | PUSCH $[N_{TA}=A]$ | MAC CE Indicate $\triangle N_{TA}$ | PUSCH $[N_{TA}= A + \triangle N_{TA}]$ |

3001   3003   3005   3009   3011   3015

Update $N_{TA,UE\text{-}specific}$ and $N_{TA,common}$

3007

Update $N_{TA,UE\text{-}specific}$ and $N_{TA,common}$

3013

EP 4 560 934 A1

# FIG. 31

```
            ( start )
               │
               ▼
┌─────────────────────────────────┐
│          detect SSB             │──── 3111
└─────────────────────────────────┘
               │
               ▼
┌─────────────────────────────────┐
│          decode SIBs            │──── 3113
└─────────────────────────────────┘
               │
               ▼
┌─────────────────────────────────┐
│    decode satellite information │──── 3115
└─────────────────────────────────┘
               │
               ▼
┌─────────────────────────────────┐
│      decode common TA offset    │──── 3117
└─────────────────────────────────┘
               │
               ▼
┌─────────────────────────────────┐
│    transmit PRACH by applying TAs│──── 3119
└─────────────────────────────────┘
               │
               ▼
┌─────────────────────────────────┐
│   receive RAR including TA value │──── 3121
└─────────────────────────────────┘
               │
               ▼
┌─────────────────────────────────┐
│      control TA based on RAR    │──── 3123
└─────────────────────────────────┘
               │
               ▼
┌─────────────────────────────────┐
│     transmit msg3 by applying TA │──── 3125
└─────────────────────────────────┘
               │
               ▼
┌─────────────────────────────────┐
│ receive MAC CE including TA control value │──── 3127
└─────────────────────────────────┘
               │
               ▼
┌─────────────────────────────────┐
│ transmit PUSCH/PUCCH by applying TA │──── 3129
└─────────────────────────────────┘
               │
               ▼
            ( end )
```

# FIG. 32

start

detect SSB ~3211

decode SIBs ~3213

decode satellite information ~3215

decode common TA offset ~3217

transmit msgA by applying TAs ~3219

receive msgB including TA value ~3221

control TA based on msgB ~3223

transmit PUSCH/PUCCH by applying TA ~3225

end

# FIG. 33

```
            ╭─────────────────────────────╮
            │  start of base station operation  │
            │     for reporting TA value        │
            ╰─────────────────────────────╯
                           │
                           ▼
   ┌─────────────────────────────────────────────┐
   │ configure TA report resource through higher signaling │──── 3300
   └─────────────────────────────────────────────┘
                           │
                           ▼
   ┌─────────────────────────────────────────────┐
   │                trigger TA report                │──── 3310
   └─────────────────────────────────────────────┘
                           │
                           ▼
   ┌─────────────────────────────────────────────┐
   │         receive TA report in allocated resource      │──── 3320
   └─────────────────────────────────────────────┘
                           │
                           ▼
            ╭─────────────────────────────╮
            │   end of base station operation   │
            │     for reporting TA value        │
            ╰─────────────────────────────╯
```

# FIG. 34

```
    ┌─────────────────────────────┐
    │      start of UE operation  │
    │      for reporting TA value │
    └─────────────────────────────┘
                   │
                   ▼
    ┌─────────────────────────────┐
    │    receive TA report resource│──── 3400
    │ configuration through higher signaling│
    └─────────────────────────────┘
                   │
                   ▼
    ┌─────────────────────────────┐
    │   receive TA report trigger signal │──── 3410
    └─────────────────────────────┘
                   │
                   ▼
    ┌─────────────────────────────┐
    │  transmit TA report in allocated resource │──── 3420
    └─────────────────────────────┘
                   │
                   ▼
    ┌─────────────────────────────┐
    │      end of UE operation    │
    │      for reporting TA value │
    └─────────────────────────────┘
```

# FIG. 35

Horizon

d θ

Altitude 6371 km

| Terrestrial network | 〔UE〕 ← → 🗼 ~100 km | RTT = ~0.67 ms |
|---|---|---|
| satellite network | 〔UE〕 → ← 🛰 → ← 📡 Low-orbit satellite : ~2,000 km | |

| Satellite altitude 700 km | | | | | |
|---|---|---|---|---|---|
| Elevation degree $\theta$ | 0° | 45° | 90° | 135° | 180° |
| UE-satellite distance, d | 3069 km | 945 km | 700 km | 945 km | 3069 km |
| UE-base station Radio RTT | 40.9 ms | 12.6 ms | 9.3 ms | 12.6 ms | 40.9 ms |

· assume that UE-satellite distance and satellite-base station distance are the same
· UE, base station round trip delay time = 2x UE-satellite round trip delay time

EP 4 560 934 A1

FIG. 36

attempt to connect to a terrestrial network
and determine that connection is unavailable — 3601

determine required condition
for connection to satellite network — 3603

attempt to connect to a satellite network — 3605

perform communication after
connected to satellite network — 3607

# FIG. 37

:FDD configuration
(window length of configured TDW = 6 slots)
(3701)

:TDD configuration
(window length of configured TDW = 7 slots)
(3709)

EP 4 560 934 A1

FIG. 38

perform satellite network connection — 3801

receive information for performing
uplink repetitive transmission — 3803

perform uplink repetitive transmission
according to received information — 3805

FIG. 39

| receive configuration information related to uplink channel repetitive transmission | ⌇ 3910 |
| --- | --- |

↓

| perform uplink channel repetitive transmission | ⌇ 3920 |
| --- | --- |

# FIG. 40

```
┌──────────────────────────────────────────────┐
│         transmit configuration information     │ ⌐~ 4010
│  related to uplink channel repetitive transmission │
└──────────────────────────────────────────────┘
                      │
                      ▼
┌──────────────────────────────────────────────┐
│     perform uplink channel repetitive reception │ ⌐~ 4020
└──────────────────────────────────────────────┘
```

# FIG. 41

UE processor — 4110

UE receiver — 4100

UE transmitter — 4120

# FIG. 42

satellite processor — 4210

satellite receiver — 4200

satellite transmitter — 4220

FIG. 43

base station receiver ～4300

4310 ～ base station processor

base station transmitter ～4320

## INTERNATIONAL SEARCH REPORT

| International application No. |
|---|
| **PCT/KR2023/015067** |

**A. CLASSIFICATION OF SUBJECT MATTER**

**H04B 7/185**(2006.01)i; **H04W 48/08**(2009.01)i; **H04W 56/00**(2009.01)i; **H04W 84/06**(2009.01)i

According to International Patent Classification (IPC) or to both national classification and IPC

**B. FIELDS SEARCHED**

Minimum documentation searched (classification system followed by classification symbols)

H04B 7/185(2006.01); H04L 25/02(2006.01); H04L 5/00(2006.01); H04W 52/14(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), 반복(repetition), 선-보상(pre-comp ensation), DM-RS 번들링(demodulation reference signal bundling), 위상 차(phase difference)

**C. DOCUMENTS CONSIDERED TO BE RELEVANT**

| Category* | Citation of document, with indication, where appropriate, of the relevant passages | Relevant to claim No. |
|---|---|---|
| X | WO 2022-152195 A1 (QUALCOMM INCORPORATED et al.) 21 July 2022 (2022-07-21)<br>See paragraphs [0088]-[0090] and [0093]; and figure 8. | 11-12,14 |
| Y | | 1-10,13,15 |
| Y | QUALCOMM INCORPORATED. Coverage enhancements for NR NTN. R1-2207255, 3GPP TSG RAN WG1 #110. Toulouse, FR. 13 August 2022.<br>See sections 3-3.1.1; and figure 1. | 1-10,13,15 |
| A | US 2022-0279455 A1 (SAMSUNG ELECTRONICS CO., LTD.) 01 September 2022 (2022-09-01)<br>See paragraphs [0070]-[0147]; and figures 6-18. | 1-15 |
| A | US 2022-0231886 A1 (QUALCOMM INCORPORATED) 21 July 2022 (2022-07-21)<br>See paragraphs [0064]-[0094]; and figures 4-7. | 1-15 |
| A | LENOVO. Discussion on coverage enhancement for NR NTN. R1-2207294, 3GPP TSG RAN WG1 #110. Toulouse, France. 12 August 2022.<br>See sections 2.1-2.1.4. | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 January 2024** | **08 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | International application No. | |
|---|---|---|---|
| Information on patent family members | | **PCT/KR2023/015067** | |

| Patent document cited in search report | Publication date (day/month/year) | Patent family member(s) | Publication date (day/month/year) |
|---|---|---|---|
| WO 2022-152195 A1 | 21 July 2022 | CN 116803172 A | 22 September 2023 |
| US 2022-0279455 A1 | 01 September 2022 | KR 10-2023-0152696 A | 03 November 2023 |
| | | WO 2022-186582 A1 | 09 September 2022 |
| US 2022-0231886 A1 | 21 July 2022 | CN 116724540 A | 08 September 2023 |
| | | WO 2022-155006 A1 | 21 July 2022 |

Form PCT/ISA/210 (patent family annex) (July 2022)